(19) Europäisches Patentamt / European Patent Office / Office européen des brevets

(11) EP 4 488 228 A1

(12) **EUROPEAN PATENT APPLICATION**
published in accordance with Art. 153(4) EPC

(43) Date of publication:
08.01.2025 Bulletin 2025/02

(21) Application number: 23759938.6

(22) Date of filing: 20.02.2023

(51) International Patent Classification (IPC):
C01B 32/174 (2017.01)    B01J 23/74 (2006.01)
C01B 32/16 (2017.01)    C01B 32/164 (2017.01)
C01B 32/168 (2017.01)    H01M 4/62 (2006.01)

(52) Cooperative Patent Classification (CPC):
B01J 23/74; C01B 32/16; C01B 32/164;
C01B 32/168; C01B 32/174; H01M 4/62

(86) International application number:
PCT/JP2023/006082

(87) International publication number:
WO 2023/162937 (31.08.2023 Gazette 2023/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.02.2022  JP 2022030491
28.02.2022  JP 2022030498
30.03.2022  JP 2022057302

(71) Applicant: Zeon Corporation
Tokyo 100-8246 (JP)

(72) Inventor: YAMAGISHI, Tomoko
Tokyo 100-8246 (JP)

(74) Representative: Maiwald GmbH
Elisenhof
Elisenstraße 3
80335 München (DE)

(54) **CARBON NANOTUBE LIQUID DISPERSION, LAMINATE, PRODUCTION METHOD FOR CARBON NANOTUBE LIQUID DISPERSION, AND PRODUCTION METHOD FOR CARBON FILM**

(57)    Provided is a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics, or that enables the achievement of good film formation properties during carbon film formation. The carbon nanotube dispersion liquid contains carbon nanotubes and a solvent and has a fractal dimension 3 to 4 in a wavenumber range of 0.001 (1/angstrom) to 0.3 (1/angstrom) when a scattering curve obtained through measurement by ultra-small-angle X-ray scattering is analyzed by the Beaucage model.

*FIG. 5*

SEM image

EP 4 488 228 A1

**Description**

TECHNICAL FIELD

The present disclosure relates to a carbon nanotube dispersion liquid, a laminate, a method of producing a carbon nanotube dispersion liquid, and a method of producing a carbon film.

BACKGROUND

Secondary batteries such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher secondary battery performance.

An electrode for a secondary battery, such as a lithium ion secondary battery, generally includes a current collector and an electrode mixed material layer formed on the current collector. The electrode mixed material layer is formed by binding components such as an electrode active material to one another and/or binding components such as an electrode active material to a current collector through a binder. Moreover, electrode mixed material layers in which carbon nanotubes are dispersed as a conductive material have been used in order to improve the performance of secondary batteries such as lithium ion secondary batteries. An electrode mixed material layer is formed from a slurry composition that contains components of the electrode mixed material layer. For example, the electrode mixed material layer may be formed by applying the slurry composition onto a current collector and drying the slurry composition. The slurry composition can be produced by mixing an electrode active material, a carbon nanotube dispersion liquid, a binder, and additives such as a dispersant that are added as necessary as described in Patent Literature (PTL) 1, for example.

On the other hand, carbon nanotubes (hereinafter, also referred to as "CNTs") have been attracting interest in recent years as materials having excellent electrical conductivity, thermal conductivity, electromagnetic wave shielding performance, and mechanical characteristics. Moreover, focusing on these characteristics of CNTs, it has been proposed that a carbon nanotube film (hereinafter, also referred to as a "CNT film" or "carbon film") in which a plurality of CNTs are assembled into the form of a film is produced and is used as an electrically conductive sheet, a heat conductive sheet, an electromagnetic wave absorbing sheet, or the like. Note that such a CNT film is also referred to as "buckypaper".

However, CNTs are fine structures having diameters on the order of nanometers, and thus have poor handleability and processability by themselves. Therefore, it has been proposed that a carbon film is produced by, for example, preparing a solution having CNTs dispersed therein (CNT dispersion liquid), applying this solution onto a substrate or the like, and removing components other than the CNTs so as to cause an assembly of CNTs contained in the CNT dispersion liquid to form a film. Examples of such CNT dispersion liquids that have previously been proposed include a carbon nanotube dispersion liquid that contains a solvent having a viscosity and a density in specific ranges and a carbon nanotube assembly dispersed in the solvent with a content in a specific range and that has physical properties such as scale width and density that are in specific ranges (PTL 1); a CNT dispersion liquid that contains a solvent, CNTs displaying a specific physical property, and ionic particles (PTL 2); and a CNT dispersion liquid that contains CNTs, a surfactant having a molecular weight that is not more than a specific value, and a solvent (PTL 3).

CITATION LIST

Patent Literature

PTL 1: JP2020-057474A
PTL 2: JP6789529B2
PTL 3: JP2017-119586A
PTL 4: WO2019/188978A1

SUMMARY

(Technical Problem)

An electrode for a secondary battery such as a lithium ion secondary battery has the form of a laminate that includes an electrode mixed material layer and a current collector that is formed of a metal or the like. It is desirable for such an electrode to have strong peel strength between the electrode mixed material layer and the current collector in order to increase mechanical strength.

Moreover, an electrode for a secondary battery such as a lithium ion secondary battery can alternatively be produced by transferring a pre-produced electrode mixed material layer onto a current collector. A releasable substrate-attached electrode mixed material layer (electrode mixed material layer for transfer) having the form of a laminate that includes an electrode mixed material layer and a substrate (releasable substrate) formed of a resin or the like can be employed as a member that is used in such electrode mixed material layer transfer. It is desirable for such a releasable substrate-attached electrode mixed material layer to have weak peel strength between the electrode mixed material layer and the releasable substrate in order to increase easy releasability of the releasable substrate.

Furthermore, it is desirable for a secondary battery such as a lithium ion secondary battery to have excellent rate characteristics as battery performance.

On the other hand, when a CNT dispersion liquid is used to form a carbon film, it is desirable that a carbon film it obtained well without disintegration of the carbon film during film formation (i.e., good film formation properties are desirable). It is expected that were one able to determine in advance a condition for a CNT dispersion liquid that is suitable for achieving good film formation properties during carbon film formation, it would be possible to achieve good film formation properties during carbon film formation with high reproducibility by using a CNT dispersion liquid satisfying that condition.

Accordingly, one object of the present disclosure is to provide a carbon nanotube dispersion liquid that, when used in production of an electrode mixed material layer, can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Another object of the present disclosure is to provide a laminate that can be used as an electrode for a secondary battery having strong peel strength between an electrode mixed material layer and a current collector formed of a metal or the like.

Another object of the present disclosure is to provide a laminate that can be used as a releasable substrate-attached electrode mixed material layer having weak peel strength between an electrode mixed material layer and a releasable substrate formed of a resin or the like.

On the other hand, another object of the present disclosure is to provide a CNT dispersion liquid that enables the achievement of good film formation properties during carbon film formation using the CNT dispersion liquid and a method of producing this CNT dispersion liquid.

Another object of the present disclosure is to provide a method of producing a carbon film with good film formation properties using a CNT dispersion liquid.

(Solution to Problem)

The inventor conducted diligent studies with the aim of achieving the objects set forth above. The inventor discovered that a fractal dimension when a scattering curve obtained through measurement by ultra-small-angle X-ray scattering is analyzed by the Beaucage model and an area fraction occupied by carbon nanotubes in an image acquired through imaging of a carbon nanotube dispersion liquid can be used as indicators of a dispersion liquid that is suitable for producing a slurry composition and also discovered that suitable values for the fractal dimension and the area fraction of a CNT dispersion liquid differ depending on physical properties of CNTs. Specifically, the inventor discovered that it is possible to produce an electrode for a secondary battery having strong peel strength between an electrode mixed material layer and a current collector formed of a metal or the like, a releasable substrate-attached electrode mixed material layer having weak peel strength between an electrode mixed material layer and a releasable substrate formed of a resin or the like, and a secondary battery having excellent rate characteristics by producing a slurry composition for a secondary battery electrode using: a carbon nanotube dispersion liquid (form A) that is a carbon nanotube dispersion liquid having carbon nanotubes dispersed in a solvent, wherein the carbon nanotube dispersion liquid has a fractal dimension of not less than 3 and not more than 4 in a specific wavenumber range when a scattering curve obtained through measurement by ultra-small-angle X-ray scattering is analyzed by the Beaucage model; a carbon nanotube dispersion liquid (form B1) that is a carbon nanotube dispersion liquid containing single-walled carbon nanotubes having a G/D ratio of 5 or less and a solvent, wherein an area fraction occupied by carbon nanotubes in an image acquired through imaging of the carbon nanotube dispersion liquid at a concentration of 0.1 wt% is 55% or less; or a carbon nanotube dispersion liquid (form B2) that is a carbon nanotube dispersion liquid containing single-walled carbon nanotubes having a G/D ratio of 10 or more and a solvent, wherein an area fraction occupied by carbon nanotubes in an image acquired through imaging of the carbon nanotube dispersion liquid at a concentration of 0.1 wt% is 75% or more. In this manner, the inventor completed the present disclosure.

On the other hand, the inventor discovered that the area fraction occupied by CNTs in an image acquired through imaging of a CNT dispersion liquid can be used as an indicator of how good film formation properties are during carbon film formation using the CNT dispersion liquid. Specifically, the inventor discovered that good film formation properties can be achieved by forming a carbon film using a carbon nanotube dispersion liquid (form C) that is a carbon nanotube dispersion liquid containing carbon nanotubes and a solvent, wherein an area fraction occupied by carbon nanotubes in an image acquired through imaging of the carbon nanotube dispersion liquid at a concentration of 0.1 wt% is 70% or less. In this manner, the inventor completed the present disclosure.

Specifically, the present disclosure aims to advantageously solve the problems set forth above, and, in form A, a presently disclosed carbon nanotube dispersion liquid is a carbon nanotube dispersion liquid comprising carbon nanotubes and a solvent, wherein the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model. As a result of the fractal dimension measured as described above being not less than 3 and not more than 4, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics. Note that the fractal dimension referred to in the present disclosure can be determined by a method described further below.

In form B1, the presently disclosed carbon nanotube dispersion liquid is a carbon nanotube dispersion liquid comprising single-walled carbon nanotubes having a G/D ratio of 5 or less and a solvent, wherein an area fraction occupied by carbon nanotubes in an image acquired through imaging of the carbon nanotube dispersion liquid at a concentration of 0.1 wt% is 55% or less. As a result of the area fraction of carbon nanotubes measured as described above being 55% or less in a case in which single-walled carbon nanotubes having a G/D ratio of 5 or less are used as carbon nanotubes, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics. Note that the G/D ratio and the area fraction referred to in the present disclosure can be determined by methods described in the EXAMPLES section.

Moreover in a case in which single-walled carbon nanotubes having a G/D ratio of 5 or less are used as carbon nanotubes, it is also preferable that not fewer than 5 and not more than 100 carbon nanotubes having an aspect ratio of 10 or more are included per area equivalent to 26,000 $\mu m^2$ in the image. As a result of the number of carbon nanotubes having an aspect ratio of 10 or more being in the range set forth above, it is possible to cause an electrode for a secondary battery to display strong peel strength between an electrode mixed material layer and a current collector formed of a metal or the like to an even greater degree, to cause a releasable substrate-attached electrode mixed material layer to display weak peel strength between an electrode mixed material layer and a releasable substrate formed of a resin or the like to an even greater degree, and to cause a secondary battery to display excellent rate characteristics to an even greater degree. Note that the number of carbon nanotubes having an aspect ratio (length/diameter) in a specific range referred to in the present disclosure can be determined by a method described in the EXAMPLES section.

In form B2, the presently disclosed carbon nanotube dispersion liquid is a carbon nanotube dispersion liquid comprising single-walled carbon nanotubes having a G/D ratio of 10 or more and a solvent, wherein an area fraction occupied by carbon nanotubes in an image acquired through imaging of the carbon nanotube dispersion liquid at a concentration of 0.1 wt% is 75% or more. As a result of the area fraction of carbon nanotubes measured as described above being 75% or more in a case in which single-walled carbon nanotubes having a G/D ratio of 10 or more are used as carbon nanotubes, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics. Note that the G/D ratio and the area fraction referred to in the present disclosure can be determined by methods described in the EXAMPLES section.

In form C, the presently disclosed carbon nanotube dispersion liquid is a carbon nanotube dispersion liquid comprising carbon nanotubes and a solvent, wherein an area fraction occupied by carbon nanotubes in an image acquired through imaging of the carbon nanotube dispersion liquid at a concentration of 0.1 wt% is 70% or less. By using a CNT dispersion liquid for which the area fraction of carbon nanotubes measured as described above is 70% or less, it is possible to achieve good film formation properties during carbon film formation. Moreover, the fact that good film formation properties can be achieved using this carbon nanotube dispersion liquid can be judged at an earlier stage than when film formation is actually performed. Note that the area fraction of a CNT dispersion liquid referred to in the present disclosure can be determined by a method described in the EXAMPLES section and that film formation properties of a carbon film referred to in the present disclosure can be evaluated by a method described in the EXAMPLES section.

In the carbon nanotube dispersion liquid set forth above, the area fraction occupied by carbon nanotubes in the image acquired through imaging of the carbon nanotube dispersion liquid is preferably not less than 20% and not more than 70%, and more preferably not less than 55% and not more than 70%. By using a CNT dispersion liquid for which the area fraction measured as described above is in a range of not less than 20% and not more than 70%, and preferably in a range of not less than 55% and not more than 70%, it is possible to obtain a carbon film having a high porosity of not less than 60% and not more than 99%, for example, which is useful in battery applications. Note that the porosity of a carbon film referred to in the present disclosure can be determined by a method described in the EXAMPLES section.

In forms B1, B2, and C, the presently disclosed carbon nanotube dispersion liquid also has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model. As a result of the fractal dimension measured as described above being not less than 3 and not more than 4, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics, or it is possible to achieve good film formation properties during carbon film formation.

In forms A, B 1, B2, and C, the presently disclosed carbon nanotube dispersion liquid preferably has a CNT persistence length of 100 nm or more in a wavenumber range of not less than 0.05 (1/angstrom) and not more than 0.01 (1/angstrom) when a scattering curve obtained through measurement by ultra-small-angle X-ray scattering is analyzed by the Beaucage model. As a result of the CNT persistence length measured as described above being 100 nm or more, it is possible to cause an electrode for a secondary battery to display strong peel strength between an electrode mixed material layer and a current collector formed of a metal or the like to an even greater degree, to cause a releasable substrate-attached electrode mixed material layer to display weak peel strength between an electrode mixed material layer and a releasable substrate formed of a resin or the like to an even greater degree, and to cause a secondary battery to display excellent rate characteristics to an even greater degree, or it is possible to achieve good film formation properties during carbon film formation. Note that the CNT persistence length referred to in the present disclosure can be determined by a method described further below.

In the carbon nanotube dispersion liquids of forms A, B 1, B2, and C, the solvent is preferably water, an alcohol, or a mixture of water and an alcohol. In a case in which water is used as the solvent, this results in good affinity between electrolyte solution and a carbon film obtained with the carbon nanotube dispersion liquid in which water is used and enables improvement of battery performance when this carbon film is used in a battery. Moreover, in a case in which an alcohol is used as the solvent, this makes it easy to produce a carbon film using the carbon nanotube dispersion liquid.

In the carbon nanotube dispersion liquids of forms A, B1, B2, and C, it is preferable that the carbon nanotubes satisfy at least one of conditions (1) to (3) set forth below:

(1) in a spectrum obtained by Fourier-transform infrared spectroscopy with respect to carbon nanotube dispersions obtained by dispersing a carbon nanotube assembly such as to have a bundle length of 10 $\mu$m or more, at least one peak based on plasmon resonance of the carbon nanotube dispersions is present in a wavenumber range of more than 300 cm$^{-1}$ and not more than 2,000 cm$^{-1}$;

(2) on a pore distribution curve for a carbon nanotube assembly indicating a relationship between pore diameter and Log differential pore volume that is obtained based on the Barrett-Joyner-Halenda method from an adsorption isotherm of liquid nitrogen at 77 K, a largest peak is in a pore diameter range of more than 100 nm and less than 400 nm;

(3) in a two-dimensional spatial frequency spectrum of an electron microscope image of a carbon nanotube assembly, at least one peak is present in a range of not less than 1 $\mu$m$^{-1}$ and not more than 100 $\mu$m$^{-1}$. A carbon nanotube dispersion liquid in which carbon nanotubes such as set forth above are used is suitable for obtaining a carbon film having high porosity due to the presence of mesopores in the carbon nanotubes. The conditions (1) to (3) can be confirmed by methods described further below.

In one embodiment, a presently disclosed laminate is a laminate comprising a metal film having a surface tension of not less than 400 [mN/m] and not more than 2,000 [mN/m] and a carbon nanotube-containing film formed using any one of the carbon nanotube dispersion liquids set forth above. Note that the laminate preferably has the metal film and the carbon nanotube-containing film directly stacked together. In a laminate such as set forth above, the large surface tension of the metal film results in strong peel strength being imparted between the carbon nanotube-containing film and the metal film, improved close adherence between the carbon nanotube-containing film and the metal film, and the acquisition of a closely adhered laminate that is useful as an electrode or the like. Note that the surface tension of a metal film referred to in the present disclosure can be determined by a method described in the EXAMPLES section.

In another embodiment, the presently disclosed laminate is a laminate comprising a substrate having a surface tension of not less than 20 [mN/m] and not more than 50 [mN/m] and a carbon nanotube-containing film formed using any one of the carbon nanotube dispersion liquids set forth above. Note that the laminate preferably has the metal film and the carbon nanotube-containing film directly stacked together. In a laminate such as set forth above, the small surface tension of the substrate results in weak peel strength between the carbon nanotube-containing film and the substrate, and the formation of a peelable laminate in which easy releasability is imparted between the carbon nanotube-containing film and the substrate. A peelable laminate such as set forth above can be used as a laminate (releasable substrate-attached electrode mixed material layer) that enables simple transfer of a carbon nanotube-containing film (electrode mixed material layer). Note that the surface tension of a substrate referred to in the present disclosure can be determined by a method described in the EXAMPLES section.

In form A, a presently disclosed method of producing a carbon nanotube dispersion liquid comprises:

performing dispersing treatment of a mixture of carbon nanotubes and a solvent to obtain a carbon nanotube dispersion liquid;

measuring the obtained carbon nanotube dispersion liquid by ultra-small-angle X-ray scattering; and

evaluating the carbon nanotube dispersion liquid as suitable in a case in which the carbon nanotube dispersion liquid satisfies a condition 1 that the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 1.

According to this production method, the condition that the fractal dimension measured as described above is not less than 3 and not more than 4 makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Moreover, the presently disclosed method of producing a carbon nanotube dispersion liquid preferably comprises:

performing dispersing treatment of a mixture of carbon nanotubes and a solvent to obtain a carbon nanotube dispersion liquid;

measuring the obtained carbon nanotube dispersion liquid by ultra-small-angle X-ray scattering; and

evaluating the carbon nanotube dispersion liquid as suitable in a case in which the carbon nanotube dispersion liquid satisfies a condition 2 that the carbon nanotube dispersion liquid has a fractal dimension of not less than 3 and not more than 4 in a wavenumber range of not less than 0.001 (1/angstrom) and not more than 0.3 (1/angstrom) and has a CNT persistence length of 100 nm or more in a wavenumber range of not less than 0.05 (1/angstrom) and not more than 0.01 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 2.

According to this production method, the further addition of a condition that the CNT persistence length measured as described above is 100 nm or more makes it possible to obtain a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree.

In form B1, the presently disclosed method of producing a carbon nanotube dispersion liquid comprises:

performing dispersing treatment of a mixture of single-walled carbon nanotubes having a G/D ratio of 5 or less and a solvent to obtain a carbon nanotube dispersion liquid;

acquiring an image of the obtained carbon nanotube dispersion liquid through imaging of the carbon nanotube dispersion liquid at a concentration of 0.1 wt%; and

evaluating the carbon nanotube dispersion liquid as suitable in a case in which the carbon nanotube dispersion liquid satisfies a condition 3 that an area fraction occupied by carbon nanotubes in the acquired image is 55% or less, and evaluating the carbon nanotube dispersion liquid as unsuitable in a case in which the carbon nanotube dispersion liquid does not satisfy the condition 3.

According to this production method, the condition that the area fraction of carbon nanotubes measured as described above is 55% or less in a case in which a carbon nanotube dispersion liquid is produced using single-walled carbon nanotubes having a G/D ratio of 5 or less as carbon nanotubes makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Moreover, the presently disclosed method of producing a carbon nanotube dispersion liquid preferably comprises:

performing dispersing treatment of a mixture of single-walled carbon nanotubes having a G/D ratio of 5 or less and a solvent to obtain a carbon nanotube dispersion liquid;

acquiring an image of the obtained carbon nanotube dispersion liquid through imaging of the carbon nanotube dispersion liquid at a concentration of 0.1 wt%; and

evaluating the carbon nanotube dispersion liquid as suitable in a case in which the carbon nanotube dispersion liquid satisfies a condition 4 that an area fraction occupied by carbon nanotubes in the acquired image is 55% or less and that not fewer than 5 and not more than 100 carbon nanotubes having an aspect ratio of 10 or more are included per area equivalent to 26,000 $\mu m^2$ in the image, and evaluating the carbon nanotube dispersion liquid as unsuitable in a case in which the carbon nanotube dispersion liquid does not satisfy the condition 4.

According to this production method, the further addition of a condition that not fewer than 5 and not more than 100 carbon nanotubes having an aspect ratio of 10 or more are included per area equivalent to 26,000 $\mu m^2$ in the image makes it possible to obtain a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree.

In form B2, the presently disclosed method of producing a carbon nanotube dispersion liquid comprises:

performing dispersing treatment of a mixture of single-walled carbon nanotubes having a G/D ratio of 10 or more and a solvent to obtain a carbon nanotube dispersion liquid;

acquiring an image of the obtained carbon nanotube dispersion liquid through imaging of the carbon nanotube dispersion liquid at a concentration of 0.1 wt%; and

evaluating the carbon nanotube dispersion liquid as suitable in a case in which the carbon nanotube dispersion liquid satisfies a condition 5 that an area fraction occupied by carbon nanotubes in the acquired image is 75% or more, and evaluating the carbon nanotube dispersion liquid as unsuitable in a case in which the carbon nanotube dispersion liquid does not satisfy the condition 5.

According to this production method, the condition that the area fraction of carbon nanotubes measured as described above is 75% or more in a case in which a carbon nanotube dispersion liquid is produced using single-walled carbon nanotubes having a G/D ratio of 10 or more as carbon nanotubes makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

In form C, the presently disclosed method of producing a carbon nanotube dispersion liquid comprises:

performing dispersing treatment of a mixture of carbon nanotubes and a solvent to obtain a carbon nanotube dispersion liquid;

acquiring an image through imaging of the obtained carbon nanotube dispersion liquid; and

evaluating the carbon nanotube dispersion liquid as suitable in a case in which an area fraction occupied by carbon nanotubes in the acquired image satisfies a condition A, and evaluating the carbon nanotube dispersion liquid as unsuitable in a case in which the area fraction occupied by carbon nanotubes in the acquired image does not satisfy the condition A, wherein

the condition A includes an area fraction occupied by carbon nanotubes in an image acquired through imaging of the carbon nanotube dispersion liquid at a concentration of 0.1 wt% being 70% or less.

As a result of the condition that the area fraction of carbon nanotubes measured as described above is 70% or less, it is possible to achieve good film formation properties during carbon film formation by using a CNT dispersion liquid that is obtained by this production method. Moreover, the fact that good film formation properties can be achieved using a carbon nanotube dispersion liquid produced by this production method can be judged at an earlier stage than when film formation is actually performed.

Moreover, in the method of producing a carbon nanotube dispersion liquid set forth above, the condition A preferably further includes the area fraction being 20% or more, and more preferably further includes the area fraction being 55% or more. As a result of the condition that the area fraction of carbon nanotubes measured as described above is not less than 20% and not more than 70%, and is preferably not less than 55% and not more than 70%, it is possible to obtain a carbon film having a high porosity of not less than 60% and not more than 99%, for example, which is useful in battery applications, by using a CNT dispersion liquid that is obtained by this production method. Moreover, the fact that a high porosity of not less than 60% and not more than 99%, for example, which is useful in battery applications, can be achieved by using a carbon nanotube dispersion liquid produced by this production method can be judged at an earlier stage than when film formation is actually performed.

The methods of producing a carbon nanotube dispersion liquid of forms B1, B2, and C further comprise:

measuring the obtained carbon nanotube dispersion liquid by ultra-small-angle X-ray scattering; and
evaluating the carbon nanotube dispersion liquid as suitable in a case in which the carbon nanotube dispersion liquid satisfies a condition 1 that the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 1.

According to this production method, the condition that the fractal dimension measured as described above is not less than 3 and not more than 4 makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics, or that enables the achievement of good film formation properties during carbon film formation.

The methods of producing a carbon nanotube dispersion liquid of forms B1, B2, and C preferably further comprise:

measuring the obtained carbon nanotube dispersion liquid by ultra-small-angle X-ray scattering; and
evaluating the carbon nanotube dispersion liquid as suitable in a case in which the carbon nanotube dispersion liquid satisfies a condition 2 that the carbon nanotube dispersion liquid has a fractal dimension of not less than 3 and not more than 4 in a wavenumber range of not less than 0.001 (1/angstrom) and not more than 0.3 (1/angstrom) and has a CNT persistence length of 100 nm or more in a wavenumber range of not less than 0.05 (1/angstrom) and not more than 0.01 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 2.

According to this production method, the further addition of a condition that the CNT persistence length measured as described above is 100 nm or more makes it possible to obtain a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree, or that enables the achievement of good film formation properties during carbon film formation.

A presently disclosed method of producing a carbon film comprises removing solvent from a CNT dispersion liquid for which the above-described area fraction of CNTs is 70% or less to form a carbon film. According to this production method, it is possible to obtain a carbon film with good film formation properties by using a CNT dispersion liquid for which the area fraction of CNTs is 70% or less.

Moreover, a presently disclosed method of producing a carbon film comprises removing solvent from a CNT dispersion liquid obtained by the method of producing a CNT dispersion liquid set forth above that has been selected using a condition that an area fraction of CNTs is 70% or less to form a carbon film. According to this production method, it is possible to obtain a carbon film with good film formation properties by using a CNT dispersion liquid that has been selected using a condition that an area fraction of CNTs is 70% or less.

(Advantageous Effect)

According to the present disclosure, it is possible to provide a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Moreover, according to the present disclosure, it is possible to provide a laminate that can be used as an electrode for a secondary battery having strong peel strength between an electrode mixed material layer and a current collector formed of a metal or the like.

Furthermore, according to the present disclosure, it is possible to provide a laminate that can be used as a releasable substrate-attached electrode mixed material layer having weak peel strength between an electrode mixed material layer and a releasable substrate formed of a resin or the like.

Also, according to the present disclosure, it is possible to provide a CNT dispersion liquid that enables that achievement of good film formation properties during carbon film formation using the CNT dispersion liquid and a method of producing this CNT dispersion liquid.

Moreover, according to the present disclosure, it is possible to provide a method of producing a carbon film with good film formation properties using a CNT dispersion liquid.

BRIEF DESCRIPTION OF THE DRAWINGS

In the accompanying drawings:

FIG. 1 presents an optical microscope image of a CNT dispersion liquid of Example 1;
FIG. 2 presents an optical microscope image of a CNT dispersion liquid of Example 2;
FIG. 3 presents an optical microscope image of a CNT dispersion liquid of Example 3;
FIG. 4 presents an optical microscope image of a CNT dispersion liquid of Comparative Example 1;
FIG. 5 presents an SEM image of a CNT assembly according to one example of CNTs used in a presently disclosed CNT dispersion liquid;
FIG. 6 presents a graph obtained when ultra-small-angle X-ray scattering profiles of CNT dispersion liquids of Example 1 and Comparative Example 1 were fitted to the Beaucage equation;
FIG. 7 illustrates schematic configuration of a CNT production apparatus used in Examples 1 and 3 to 7 and Comparative Examples 1, 3, and 4;
FIG. 8 presents an optical microscope image of a CNT dispersion liquid according to one example;
FIG. 9 presents an image after binarization processing of the optical microscope image in FIG. 8;
FIG. 10 presents an image after binarization processing for the CNT dispersion liquid of Example 1;
FIG. 11 presents an image after binarization processing for the CNT dispersion liquid of Example 2;
FIG. 12 presents an image after binarization processing for the CNT dispersion liquid of Example 3, where solid lines indicate carbon nanotubes having an aspect ratio of 10 or more;
FIG. 13 presents an image after binarization processing for the CNT dispersion liquid of Comparative Example 1;
FIG. 14 presents an image after binarization processing for a CNT dispersion liquid of Comparative Example 2;

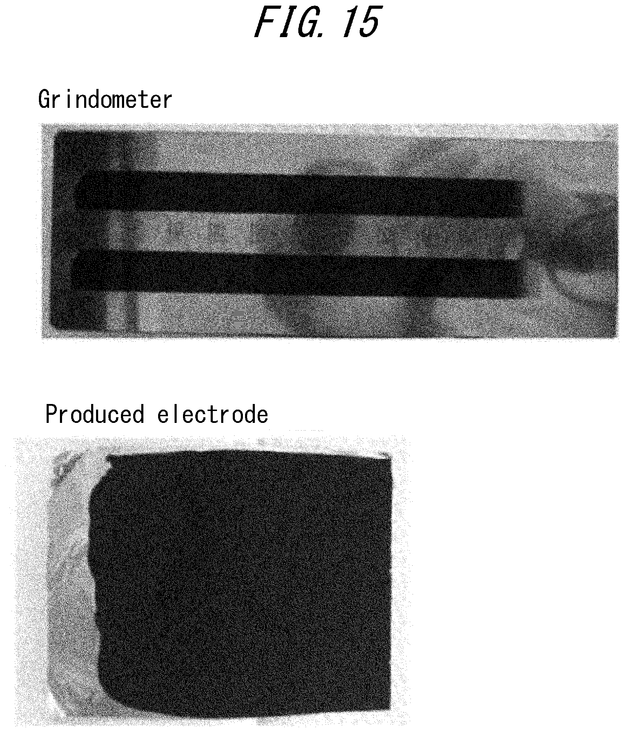

FIG. 15 presents a photograph (top) of grindometer analysis of a slurry composition for a lithium ion secondary battery positive electrode produced using the CNT dispersion liquid of Example 1 and a photograph (bottom) of a positive electrode of a lithium ion secondary battery produced using the same CNT dispersion liquid;
FIG. 16 presents a photograph (top) of grindometer analysis of a slurry composition for a lithium ion secondary battery positive electrode produced using the CNT dispersion liquid of Example 2 and a photograph (bottom) of a positive electrode of a lithium ion secondary battery produced using the same CNT dispersion liquid;
FIG. 17 presents a photograph (top) of grindometer analysis of a slurry composition for a lithium ion secondary battery positive electrode produced using the CNT dispersion liquid of Example 3 and a photograph (bottom) of a positive electrode of a lithium ion secondary battery produced using the same CNT dispersion liquid; and
FIG. 18 presents a photograph (top) of grindometer analysis of a slurry composition for a lithium ion secondary battery positive electrode produced using the CNT dispersion liquid of Comparative Example 1 and a photograph (bottom) of a positive electrode of a lithium ion secondary battery produced using the same CNT dispersion liquid.

DETAILED DESCRIPTION

The following provides a detailed description of embodiments of the present disclosure.

(Carbon nanotube dispersion liquid)

In form A, the presently disclosed carbon nanotube dispersion liquid is a carbon nanotube dispersion liquid containing carbon nanotubes and a solvent, wherein the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model. As a result of the fractal dimension measured as described above being not less than 3 and not more than 4, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics when this carbon nanotube dispersion liquid is used to form an electrode mixed material layer.

In form B1, the presently disclosed carbon nanotube dispersion liquid is a carbon nanotube dispersion liquid containing single-walled carbon nanotubes having a G/D ratio of 5 or less and a solvent, wherein an area fraction occupied by carbon nanotubes in an image acquired through imaging of the carbon nanotube dispersion liquid at a concentration of 0.1 wt% is 55% or less. As a result of the area fraction of carbon nanotubes measured as described above being 55% or less in a case in which single-walled carbon nanotubes having a G/D ratio of 5 or less are used as carbon nanotubes, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics when this carbon nanotube dispersion liquid is used to form an electrode mixed material layer.

Moreover, in a case in which single-walled carbon nanotubes having a G/D ratio of 5 or less are used as carbon nanotubes, it is also preferable that not fewer than 5 and not more than 100 carbon nanotubes having an aspect ratio (length/diameter) of 10 or more are included per area equivalent to 26,000 $\mu m^2$ in the image. As a result of the number of carbon nanotubes having an aspect ratio of 10 or more being in the range set forth above, it is possible to cause an electrode for a secondary battery to display strong peel strength between an electrode mixed material layer and a current collector formed of a metal or the like to an even greater degree, to cause a releasable substrate-attached electrode mixed material layer to display weak peel strength between an electrode mixed material layer and a releasable substrate formed of a resin or the like to an even greater degree, and to cause a secondary battery to display excellent rate characteristics to an even greater degree when this carbon nanotube dispersion liquid is used to form an electrode mixed material layer.

In form B2, the presently disclosed carbon nanotube dispersion liquid is a carbon nanotube dispersion liquid containing single-walled carbon nanotubes having a G/D ratio of 10 or more and a solvent, wherein an area fraction occupied by carbon nanotubes in an image acquired through imaging of the carbon nanotube dispersion liquid at a concentration of 0.1 wt% is 75% or more. As a result of the area fraction of carbon nanotubes measured as described above being 75% or more in a case in which single-walled carbon nanotubes having a G/D ratio of 10 or more are used as carbon nanotubes, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics when this carbon nanotube dispersion liquid is used to form an electrode mixed material layer.

In form C, the presently disclosed carbon nanotube dispersion liquid is a carbon nanotube dispersion liquid containing carbon nanotubes and a solvent, wherein an area fraction occupied by carbon nanotubes in an image acquired through imaging of the carbon nanotube dispersion liquid is 70% or less. As a result of the area fraction of carbon nanotubes measured as described above being 70% or less, it is possible to achieve good film formation properties during carbon film formation using the CNT dispersion liquid. Note that the area fraction of a CNT dispersion liquid referred to in the present disclosure can be determined by a method described in the EXAMPLES section and that film formation properties of a carbon film referred to in the present disclosure can be evaluated by a method described in the EXAMPLES section.

Moreover, in the carbon nanotube dispersion liquid set forth above, by setting the area fraction occupied by carbon nanotubes in an image acquired through imaging of the carbon nanotube dispersion liquid in a specific range, it is possible to obtain a carbon film having a porosity in a desired range when the CNT dispersion liquid is used in carbon film formation. For example, by using a CNT dispersion liquid for which the area fraction measured as described above is in a range of not less than 20% and not more than 70%, and preferably in a range of not less than 55% and not more than 70%, it is possible to obtain a carbon film having a high porosity of not less than 60% and not more than 99%, for example, which is useful in battery applications. Although the correlation between the area fraction of a CNT dispersion liquid and the porosity of an obtained carbon film is, strictly speaking, dependent on the type of CNTs, roughly speaking, the value of the porosity tends to increase as the value of the area fraction increases, and the value of the porosity tends to decrease as the value of the area fraction decreases. As a rough guide of the correlation between area fraction and porosity, it can be estimated that a carbon film having a porosity of not less than 80% and not more than 99% can be obtained when the area fraction measured as described above is in a range of not less than 55% and not more than 70% in a case in which the used CNT dispersion liquid is produced using a CNT assembly that satisfies at least one of the following conditions (1) to (3) as CNTs, for example.

(1) In a spectrum obtained by Fourier-transform infrared spectroscopy with respect to carbon nanotube dispersions obtained by dispersing the carbon nanotube assembly such as to have a bundle length of 10 $\mu$m or more, at least one peak based on plasmon resonance of the carbon nanotube dispersions is present in a wavenumber range of more than 300 cm$^{-1}$ and not more than 2,000 cm$^{-1}$.
(2) On a pore distribution curve for the carbon nanotube assembly indicating a relationship between pore diameter and Log differential pore volume that is obtained based on the Barrett-Joyner-Halenda method from an adsorption isotherm of liquid nitrogen at 77 K, a largest peak is in a pore diameter range of more than 100 nm and less than 400 nm.
(3) In a two-dimensional spatial frequency spectrum of an electron microscope image of the carbon nanotube assembly, at least one peak is present in a range of not less than 1 $\mu$m$^{-1}$ and not more than 100 $\mu$m$^{-1}$.

In a situation in which a stricter correlation between area fraction and porosity is required, the preparation of a calibration curve indicating the correlation between area fraction and porosity for each type of CNTs makes it possible to determine a rough guide of the area fraction for achieving a desired porosity from this calibration curve. Note that the porosity of a carbon film referred to in the present disclosure can be determined by a method described in the EXAMPLES section.

In forms B 1, B2, and C, the presently disclosed carbon nanotube dispersion liquid also has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model. As a result of the fractal dimension measured as described above being not less than 3 and not more than 4, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics, or it is possible to achieve good film formation properties during carbon film formation.

In forms A, B 1, B2, and C, the presently disclosed carbon nanotube dispersion liquid preferably has a CNT persistence length of 100 nm or more in a wavenumber range of not less than 0.05 (1/angstrom) and not more than 0.01 (1/angstrom) when a scattering curve obtained through measurement by ultra-small-angle X-ray scattering is analyzed by the Beaucage model. As a result of the CNT persistence length measured as described above being 100 nm or more, it is possible to cause an electrode for a secondary battery to display strong peel strength between an electrode mixed material layer and a current collector formed of a metal or the like to an even greater degree, to cause a releasable substrate-attached electrode mixed material layer to display weak peel strength between an electrode mixed material layer and a releasable substrate formed of a resin or the like to an even greater degree, and to cause a secondary battery to display excellent rate characteristics to an even greater degree when this carbon nanotube dispersion liquid is used to form an electrode mixed material layer, or it is possible to achieve good film formation properties during carbon film formation.

<Carbon nanotubes>

Although no specific limitations are placed on the carbon nanotubes (CNTs) that are used in the presently disclosed carbon nanotube dispersion liquid, it is preferable to use single-walled carbon nanotubes (single-walled CNTs), for example, and single-walled carbon nanotubes (single-walled CNTs) are used in the case of forms B1 and B2. The use of single-walled CNTs makes it possible to produce a CNT dispersion liquid having high electrical conductivity. The CNTs may, for example, be CNTs that satisfy conditions described below or that are obtained by a production method described below. Note that the proportion constituted by CNTs that satisfy conditions described below or that are obtained by a production method described below among the total mass of CNTs is preferably more than 50 mass%, more preferably 90 mass% or more, and even more preferably 95 mass% or more, and may be 100 mass%.

Single-walled carbon nanotubes and/or multi-walled carbon nanotubes can be used as the carbon nanotubes (CNTs) that are used in the presently disclosed carbon nanotube dispersion liquid without any specific limitations, but it is preferable that single-walled carbon nanotubes (single-walled CNTs) are included as a main component. Examples of components other than single-walled CNTs that can be included among the CNTs include multi-walled carbon nanotubes (multi-walled CNTs). The proportion constituted by single-walled CNTs among the total mass of CNTs may be more than 50 mass%, for example, is preferably 90 mass% or more, and more preferably 95 mass% or more, and may be 100 mass%. Note that in a case in which the CNTs include multi-walled CNTs, it is preferable that the multi-walled CNTs have 5 or fewer walls. In comparison to when multi-walled CNTs are used, the use of single-walled CNTs makes it possible to produce a CNT dispersion liquid having high electrical conductivity or to produce a CNT dispersion liquid that is capable of producing a self-supporting carbon film having high electrical conductivity and porosity.

In one form, single-walled carbon nanotubes having a G/D ratio of 5 or less are used as the CNTs. In this case, the G/D ratio of the CNTs is preferably 1 or more, and more preferably 1.1 or more. Moreover, the G/D ratio of the CNTs is 5 or less, and preferably 4.9 or less. When the G/D ratio is not more than any of the upper limits set forth above, it is easy to construct a CNT network. Conversely, when a CNT assembly has a G/D ratio that is less than any of the lower limits set forth above, it may be the case that the crystallinity of single-walled CNTs is low, that a large amount of dirt such as amorphous carbon is present, and also that multi-walled CNTs are present in a high proportion.

In another form, single-walled carbon nanotubes having a G/D ratio of 10 or more are used as the CNTs. In this case, the G/D ratio of the CNTs is preferably 10 or more, and more preferably 11 or more. Moreover, the G/D ratio of the CNTs is preferably 100 or less, and more preferably 60 or less. When the G/D ratio is not less than any of the lower limits set forth above, crystallinity is high, and impartation of electrical conductivity can be expected. Conversely, in the case of a CNT assembly having a G/D ratio that is more than any of the upper limits set forth above, the CNT assembly has high linearity, the CNTs tend to form bundles with few gaps, and the specific surface area may decrease.

The G/D ratio is an index that is generally used to evaluate the quality of CNTs. In a Raman spectrum of CNTs that is measured by a Raman spectrometer, vibration modes referred to as a G band (near 1600 $cm^{-1}$) and a D band (near 1350 $cm^{-1}$) are observed. The G band is a vibration mode based on the hexagonal lattice structure of graphite forming cylindrical surfaces of the CNTs and the D band is a vibration mode based on amorphous locations. Accordingly, CNTs having a high intensity ratio of peaks of the G band and the D band (G/D ratio) can be evaluated as CNTs having high crystallinity (linearity). The G/D ratio can, for example, be determined by a method described in the EXAMPLES section. Moreover, in a case in which the CNTs are a mixture of a plurality of types of CNTs, the G/D ratio of the CNT mixture should be in any of the ranges set forth above.

The CNTs can be produced by a known CNT synthesis method such as arc discharge, laser ablation, or chemical vapor deposition (CVD) without any specific limitations. Specifically, the CNTs can be efficiently produced, for example, by a method in which, during synthesis of CNTs through chemical vapor deposition (CVD) by supplying a source compound and a carrier gas onto a substrate having a catalyst layer for carbon nanotube production at the surface thereof, a trace amount of an oxidizing agent (catalyst activating material) is provided in the system to dramatically improve catalytic activity of the catalyst layer (super growth method; refer to WO2006/011655A1). Hereinafter, carbon nanotubes that are obtained by the super growth method are also referred to as "SGCNTs".

A t-plot for the CNTs that is obtained from an adsorption isotherm preferably exhibits a convex upward shape.

In a substance having pores at its surface, the growth of an adsorbed layer of nitrogen gas is categorized into the following processes (1) to (3). The slope of the t-plot changes in accordance with processes (1) to (3).

(1) A process in which a single molecule adsorption layer of nitrogen molecules is formed over the entire surface
(2) A process in which a multi-molecule adsorption layer is formed and is accompanied by capillary condensation filling of pores
(3) A process in which a multi-molecule adsorption layer is formed at a surface that appears to be non-porous due to the pores being filled by nitrogen

In a t-plot having a convex upward shape, the plot is on a straight line passing through the origin in a region in which the average adsorbed nitrogen gas layer thickness t is small, but, as t increases, the plot deviates downward from the straight line. When CNTs have the t-plot shape described above, this indicates that the CNTs have a large ratio of internal specific surface area relative to total specific surface area and that numerous openings are formed in the CNTs. As a result, these CNTs have a lower tendency to aggregate in a dispersion liquid when the CNTs are used to produce a dispersion liquid, and thus when this dispersion liquid is used to form an electrode mixed material layer, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics, or it is possible to achieve good film formation properties during carbon film formation.

A bending point of the t-plot for the CNTs is preferably in a range satisfying $0.2 \leq t \, (nm) \leq 1.5$, more preferably in a range satisfying $0.45 \leq t \, (nm) \leq 1.5$, and even more preferably in a range satisfying $0.55 \leq t \, (nm) \leq 1.0$. In the case of CNTs for which the bending point of the t-plot is in any of these ranges, these CNTs have an even lower tendency to aggregate in a dispersion liquid when the CNTs are used to produce a dispersion liquid. As a result, it is possible to cause an electrode for a secondary battery to display strong peel strength between an electrode mixed material layer and a current collector formed of a metal or the like, to cause a releasable substrate-attached electrode mixed material layer to display weak peel strength between an electrode mixed material layer and a releasable substrate formed of a resin or the like, and to cause a secondary battery to display excellent rate characteristics when this dispersion liquid is used to form an electrode mixed material layer, or it is possible to achieve good film formation properties during carbon film formation.

The "position of the bending point" is an intersection point of a linear approximation A for the above-described process (1) and a linear approximation B for the above-described process (3).

A ratio (S2/S1) of internal specific surface area S2 relative to total specific surface area S1 obtained from the t-plot for the CNTs is preferably not less than 0.05 and not more than 0.30. In the case of CNTs for which the value of S2/S1 is in this range, these CNTs have an even lower tendency to aggregate in a dispersion liquid when the CNTs are used to produce a carbon nanotube dispersion liquid. As a result, it is possible to obtain a carbon nanotube dispersion liquid having excellent stabilization of a CNT network in the dispersion liquid.

The total specific surface area S1 and the internal specific surface area S2 of the CNTs can be determined from the t-plot for the CNTs. Specifically, the total specific surface area S1 and external specific surface area S3 can first be determined from the slope of the linear approximation of process (1) and the slope of the linear approximation of process (3), respectively. The internal specific surface area S2 can then be calculated by subtracting the external specific surface area S3 from the total specific surface area S1.

Moreover, measurement of an adsorption isotherm for the CNTs, preparation of a t-plot, and calculation of the total specific surface area S1 and the internal specific surface area S2 based on analysis of the t-plot can be performed using a BELSORP®-mini (BELSORP is a registered trademark in Japan, other countries, or both), for example, which is a commercially available measurement instrument produced by Bel Japan Inc.

The BET specific surface area of the CNTs is preferably $600 \text{ m}^2/\text{g}$ or more, and more preferably $800 \text{ m}^2/\text{g}$ or more, and is preferably $2,000 \text{ m}^2/\text{g}$ or less, more preferably $1,800 \text{ m}^2/\text{g}$ or less, and even more preferably $1,600 \text{ m}^2/\text{g}$ or less. When the BET specific surface area is in any of the ranges set forth above, a CNT dispersion liquid having excellent dispersibility can be produced. Note that the "BET specific surface area" referred to in the present disclosure is the nitrogen adsorption specific surface area measured by the BET (Brunauer-Emmett-Teller) method.

The average diameter of the CNTs is preferably 1 nm or more, and is preferably 60 nm or less, more preferably 30 nm or less, and even more preferably 10 nm or less.

The average length of the CNTs is preferably 10 $\mu$m or more, more preferably 50 $\mu$m or more, and even more preferably 80 $\mu$m or more, and is preferably 600 $\mu$m or less, more preferably 500 $\mu$m or less, and even more preferably 400 $\mu$m or less.

When CNTs having an average diameter and/or average length that are in any of the ranges set forth above are used to produce a carbon nanotube dispersion liquid, these CNTs have a low tendency to aggregate in the carbon nanotube dispersion liquid, and it is possible to produce a stabilized CNT dispersion liquid.

Carbon nanotubes that are in the form of a CNT assembly may be used. The CNTs that are in the form of a CNT assembly may, for example, be a CNT assembly that satisfies at least any one of conditions (1) to (3) described below.

«CNT assembly»

The CNT assembly that can be used in production of the carbon nanotube dispersion liquid is preferably a novel CNT assembly that satisfies at least one of the following conditions (1) to (3). A CNT dispersion liquid that is produced using a CNT assembly that satisfies at least one of the following conditions (1) to (3) has excellent performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed. Alternatively, this CNT dispersion liquid is suitable for obtaining a carbon film having high porosity due to the presence of mesopores in the carbon nanotubes.

(1) In a spectrum obtained by Fourier-transform infrared spectroscopy with respect to carbon nanotube dispersions obtained by dispersing the carbon nanotube assembly such as to have a bundle length of 10 $\mu$m or more, at least one peak based on plasmon resonance of the carbon nanotube dispersions is present in a wavenumber range of more than 300 cm$^{-1}$ and not more than 2,000 cm$^{-1}$.

(2) On a pore distribution curve for the carbon nanotube assembly indicating a relationship between pore diameter and Log differential pore volume that is obtained based on the Barrett-Joyner-Halenda method from an adsorption isotherm of liquid nitrogen at 77 K, a largest peak is in a pore diameter range of more than 100 nm and less than 400 nm.

(3) In a two-dimensional spatial frequency spectrum of an electron microscope image of the carbon nanotube assembly, at least one peak is present in a range of not less than 1 $\mu$m$^{-1}$ and not more than 100 $\mu$m$^{-1}$.

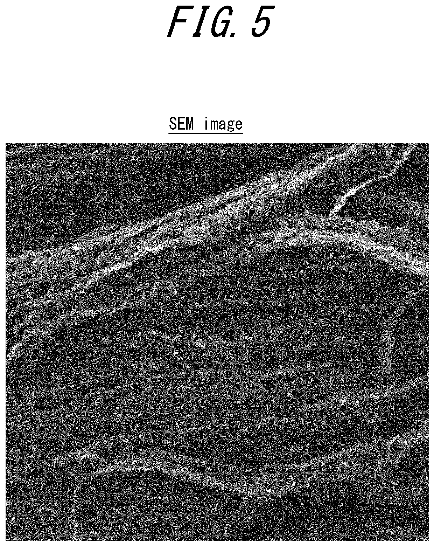

Although it is not clear why a CNT dispersion liquid formed from a CNT assembly satisfying at least one of the conditions (1) to (3) has excellent performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed and why this CNT dispersion liquid has mesopores in the carbon nanotubes and is suitable for obtaining a carbon film having high porosity, the reasons for this are presumed to be as follows. FIG. 5 presents a scanning electron microscope (SEM) image of one example of a CNT assembly satisfying at least one of (1) to (3). As illustrated in FIG. 5, constituent CNTs of the CNT assembly satisfying at least one of the conditions (1) to (3) have a wave-like structure. This "wave-like structure" causes the CNTs to form a network structure. As a result, this is presumed to be reflected in the excellent performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed, or in the presence of mesopores in carbon nanotubes and suitability for obtaining a carbon film having high porosity. The following provides a more detailed description of each of the conditions (1) to (3) that can be satisfied by the CNT assembly used to produce the presently disclosed CNT dispersion liquid.

<<Condition (1)>>

Condition (1) stipulates that "in a spectrum obtained by Fourier-transform infrared spectroscopy with respect to carbon nanotube dispersions obtained by dispersing the carbon nanotube assembly such as to have a bundle length of 10 $\mu$m or more, at least one peak based on plasmon resonance of the carbon nanotube dispersions is present in a wavenumber range of more than 300 cm$^{-1}$ and not more than 2,000 cm$^{-1}$". Strong absorption characteristics in a far infrared region are widely known as optical characteristics of CNTs. Such strong absorption characteristics in a far infrared region are thought to be due to the diameter and length of CNTs. Note that absorption characteristics in the far infrared region, and, more specifically, the relationship between a peak based on plasmon resonance of CNTs and length of CNTs is discussed in detail in non-patent literature (T. Morimoto et al., "Length-Dependent Plasmon Resonance in Single-Walled Carbon Nanotubes", pp 9897-9904, Vol. 8, No. 10, ACS NANO, 2014).

In condition (1), when a peak based on plasmon resonance of CNTs is present in a wavenumber range of more than 300 cm$^{-1}$ and not more than 2,000 cm$^{-1}$, preferably in a wavenumber range of not less than 500 cm$^{-1}$ and not more than 2,000 cm$^{-1}$, and more preferably in a wavenumber range of not less than 700 cm$^{-1}$ and not more than 2,000 cm$^{-1}$, this means that when using a CNT dispersion liquid in which such CNTs are used, excellent performance can be displayed in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed. Moreover, mesopores are present in these CNTs, and thus a CNT dispersion liquid in which such CNTs are used is suitable for obtaining a carbon film having high porosity.

In a spectrum obtained for the CNT assembly through Fourier-transform infrared spectroscopy, in addition to a comparatively gentle peak that is based on plasmon resonance of the CNT dispersions, sharp peaks are also confirmed near a wavenumber of 840 cm$^{-1}$, near a wavenumber of 1300 cm$^{-1}$, and near a wavenumber of 1700 cm$^{-1}$. These sharp peaks do not correspond to a "peak based on plasmon resonance of the carbon nanotube dispersions", but rather correspond to infrared absorption attributed to functional groups. More specifically, a sharp peak near a wavenumber of 840 cm$^{-1}$ is due to C-H out-of-plane bending vibration, a sharp peak near a wavenumber of 1300 cm$^{-1}$ is due to three-membered epoxy ring stretching vibration, and a sharp peak near a wavenumber of 1700 cm$^{-1}$ is due to C=O stretching vibration. Note that since a peak similar to an S1 peak that differs from plasmon resonance may be detected in a region at a wavenumber of more than 2,000 cm$^{-1}$ as alluded to in the aforementioned non-patent literature of T. Morimoto et al., the upper limit for judgement of the presence of a peak based on plasmon resonance of the CNT dispersions in condition (1) is set as 2,000 cm$^{-1}$ or less in the present disclosure.

In acquisition of a spectrum by Fourier-transform infrared spectroscopy in condition (1), it is necessary for the CNT assembly to be dispersed such that the bundle length is 10 $\mu$m or more to obtain CNT dispersions. For example, by blending the CNT assembly, water, and a surfactant (for example, sodium dodecylbenzenesulfonate) in a suitable ratio and performing stirring treatment by ultrasonication or the like for a specific time, it is possible to obtain a dispersion liquid having CNT dispersions dispersed with a bundle length of 10 $\mu$m or more in water.

The bundle length of CNT dispersions can be determined through analysis using a wet image analysis-type particle size measurement instrument. This measurement instrument can calculate the area of each dispersion from an image acquired through imaging of the CNT dispersions and can determine the diameter of a circle having the calculated area (hereinafter, also referred to as the "ISO area diameter"). In the present specification, the bundle length of each dispersion is defined as the value of the ISO area diameter that is obtained in this manner.

<<Condition (2)»

Condition (2) stipulates that "on a pore distribution curve, a largest peak is in a pore diameter range of more than 100 nm and less than 400 nm". A pore distribution of the carbon nanotube assembly can be determined based on the BJH method from an adsorption isotherm of liquid nitrogen at 77 K. When a peak on a pore distribution curve obtained through measurement of the carbon nanotube assembly is in a range of more than 100 nm, this means that gaps of a certain size are present between the CNTs in the carbon nanotube assembly and that the CNTs are not in an excessively densely aggregated state. Note that the upper limit of 400 nm is the measurement limit in a situation in which a BELSORP-mini II, for example, is used as a measurement instrument.

From a viewpoint of further improving performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed, or from a viewpoint of mesopores being present in the CNTs and making the CNT dispersion liquid suitable for obtaining a carbon film having high porosity, it is preferable that at the largest peak on the pore distribution curve for the CNT assembly, a value of Log differential pore volume is 2.0 $cm^3$/g or more.

<<Condition (3)»

The condition (3) stipulates that "in a two-dimensional spatial frequency spectrum of an electron microscope image of the carbon nanotube assembly, at least one peak is present in a range of not less than 1 $\mu m^{-1}$ and not more than 100 $\mu m^{-1}$". Satisfaction of this condition can be judged as outlined below. First, a CNT assembly that is to be judged is observed under magnification (for example, $\times$ 10,000) using an electron microscope (for example, a field emission scanning electron microscope), and a plurality (for example, 10) electron microscope images are acquired in a 1 cm-square viewing field. The acquired electron microscope images are subjected to fast Fourier-transform (FFT) processing to obtain a two-dimensional spatial frequency spectrum. The two-dimensional spatial frequency spectra obtained for the electron microscope images are then subjected to binarization processing, and an average value of a peak appearing furthest to the high frequency side is determined. In a case in which the obtained average value of the peak position is in a range of not less than 1 $\mu m^{-1}$ and not more than 100 $\mu m^{-1}$, condition (3) is judged to be satisfied. Note that "peaks" used in the above judgement are taken be distinct peaks obtained through isolated point extraction processing (i.e., the reverse operation of isolated point removal). Accordingly, in a case in which a distinct peak is not obtained in a range of not less than 1 $\mu m^{-1}$ and not more than 100 $\mu m^{-1}$ when isolated point extraction processing is performed, condition (3) is judged to not be satisfied.

Note that from a viewpoint of further improving performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed, or from a viewpoint of mesopores being present in CNTs and making the CNT dispersion liquid suitable for obtaining a carbon film having high porosity, it is preferable that a peak of the two-dimensional spatial frequency spectrum is present in a range of not less than 2.6 $\mu m^{-1}$ and not more than 100 $\mu m^{-1}$.

Moreover, from a viewpoint of further improving performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed, or from a viewpoint of mesopores being present in CNTs and making the CNT dispersion liquid suitable for obtaining a carbon film having high porosity, it is preferable that the CNT assembly satisfies at least two of the conditions (1) to (3), and more preferable that the CNT assembly satisfies all of the conditions (1) to (3).

<<Other properties»

The CNT assembly that can be used to form the presently disclosed CNT dispersion liquid preferably has the following properties in addition to those set forth above in the conditions (1) to (3).

For example, the total specific surface area of the CNT assembly according to the BET method is preferably 600 $m^2$/g or more, and more preferably 800 $m^2$/g or more, and is preferably 2,600 $m^2$/g or less, and more preferably 1,400 $m^2$/g or less. Moreover, in the case of a CNT assembly that has been subjected to opening treatment, the total specific surface area is preferably 1,300 $m^2$/g or more. The use of a CNT assembly having a high specific surface area increases cohesive strength of the CNTs with a metal film, and, as a result, can further improve performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed. Alternatively, this makes it possible to achieve good film formation properties during carbon film formation using the CNT dispersion liquid. In cases other than forms B1 and B2, the CNT assembly may be mainly single-walled CNTs and may include double-walled CNTs and multi-walled CNTs to the extent that functionality is not lost. The total specific surface area of the CNTs according to the BET method can be measured using a BET specific surface area analyzer conforming with JIS Z8830, for example.

The tapped bulk density of the CNT assembly is preferably not less than 0.001 $g/cm^3$ and not more than 0.2 $g/cm^3$. A CNT assembly having a density in such a range does not have excessively strong linkage between CNTs and thus has excellent dispersibility and can be shaped into various shapes. When the tapped bulk density of the CNT assembly is 0.2 $g/cm^3$ or less, linkages between CNTs are weakened, which makes it easy to homogeneously disperse the CNT assembly in a solvent or the like by stirring. Moreover, when the tapped bulk density of the CNT assembly is 0.001 $g/cm^3$ or more, integrity of the CNT assembly improves, and handling is facilitated. The tapped bulk density is the apparent bulk density in a densely packed state obtained by loading the CNT assembly in a powdered form into a vessel and then performing tapping, vibration, or the like so as to reduce gaps between powder particles.

In cases other than forms B 1 and B2, the G/D ratio of the CNT assembly is preferably not less than 1 and not more than 50. With a CNT assembly having a G/D ratio of less than 1, it may be the case that the crystallinity of single-walled CNTs is low, that a large amount of dirt such as amorphous carbon is present, and also that the content of multi-walled CNTs is high. Conversely, with a CNT assembly having a G/D ratio of more than 50, linearity is high, the CNTs tend to form bundles with few gaps, and the specific surface area may decrease. The G/D ratio is an index that is generally used to evaluate the quality of CNTs. In a Raman spectrum of CNTs that is measured by a Raman spectrometer, vibration modes referred to as a G band (near 1600 $cm^{-1}$) and a D band (near 1350 $cm^{-1}$) are observed. The G band is a vibration mode based on the hexagonal lattice structure of graphite forming cylindrical surfaces of the CNTs and the D band is a vibration mode based on amorphous locations. Accordingly, CNTs having a high intensity ratio of peaks of the G band and the D band (G/D ratio) can be evaluated as CNTs having high crystallinity (linearity).

It is desirable for the purity of the CNT assembly to be as high as possible in order to obtain a high specific surface area. The term "purity" as used here refers to the carbon purity, which is a value indicating the percentage of mass of the CNT assembly that is constituted by carbon. Although there is no upper limit on the purity in order to obtain a high specific surface area, it is difficult in terms of production to obtain a CNT assembly having a purity of 99.9999 mass% or higher. When the purity is lower than 95 mass%, it becomes difficult to obtain a specific surface area of more than 1,000 $m^2/g$ without opening treatment. Moreover, when the CNT assembly contains metal impurities and has a carbon purity of less than 95 mass%, the metal impurities react with oxygen in opening treatment to hinder opening of the CNTs, and, as a result, it becomes difficult to increase the specific surface area. Based on these points, it is preferable that the purity of single-walled CNTs is 95 mass% or higher.

The purity of the specific CNT assembly satisfying at least any one of the conditions (1) to (3) described above is normally 98 mass% or more, and can preferably be set as 99.9 mass% or more even without performing purification treatment. Such a CNT assembly is almost free of contamination with impurities and can sufficiently exhibit the various characteristics inherent in CNTs. The carbon purity of the CNT assembly can be determined by elemental analysis using X-ray fluorescence, thermogravimetric analysis (TGA), or the like.

<<Production method of CNT assembly»

The method by which the CNT assembly is produced is not specifically limited, and the production conditions can be adjusted according to the desired properties. For example, in order to produce a CNT assembly that satisfies at least any one of the conditions (1) to (3) described above, it is necessary for conditions during growth of the CNT assembly to satisfy all of the following (a) to (c).

    (a) The growth rate of the CNT assembly is 5 $\mu$m/min or more.
    (b) The catalyst activating material concentration in the growth atmosphere of the CNT assembly is 4 volume% or more.
    (c) An obstacle is present in the growth direction of constituent CNTs of the CNT assembly during growth of the CNT assembly.

A production method that satisfies all of (a) to (c) described above enables the efficient production of a CNT assembly satisfying at least any one of the conditions (1) to (3) described above. Moreover, such a production method can employ a CNT synthesis step according to a known technique such as a fluidized bed technique, a moving bed technique, or a fixed bed technique without any specific limitations so long as the conditions (a) to (c) are satisfied during growth of the CNT assembly. The fluidized bed technique refers to a synthesis method in which CNTs are synthesized while fluidizing a particulate support (hereinafter, also referred to as a particulate catalyst-bearing support) that supports a catalyst for synthesis of CNTs. The moving bed technique and the fixed bed technique refer to synthesis methods in which CNTs are synthesized without fluidization of a support (particulate support or plate-like support) that supports a catalyst.

In one example, the production method satisfying all of (a) to (c) described above includes a catalyst-bearing support formation step of forming a catalyst-bearing support, a CNT synthesis step of synthesizing CNTs using the catalyst-bearing support obtained in the catalyst-bearing support formation step, and a recovery step of recovering the CNTs synthesized in the CNT synthesis step. The catalyst-bearing support formation step can be implemented according to a known wet or dry catalyst mounting method. Moreover, the recovery step can be implemented using a known separation and recovery device such as a classifier.

[CNT synthesis step]

The CNT synthesis step is carried out such as to satisfy all of the conditions (a) to (c) described above during CNT growth. Specifically, the condition (a) that "the growth rate of the carbon nanotube assembly is 5 $\mu$m/min or more" can be satisfied through appropriate adjustment of the concentration, temperature, etc. of a source gas serving as a carbon source in the CNT growth atmosphere. The source gas serving as a carbon source is not specifically limited, and it is possible to use a hydrocarbon gas such as methane, ethane, ethylene, propane, butane, pentane, hexane, heptane, propylene, or acetylene; a lower alcohol gas such as methanol or ethanol; or a mixture of any thereof. Moreover, the source gas may be diluted with an inert gas. Furthermore, from a viewpoint of even further increasing dispersibility of the obtained CNT assembly while also further improving performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed, or enabling the achievement of good film formation properties during carbon film formation using the CNT dispersion liquid, it is preferable that the growth rate of the CNT assembly is 10 $\mu$m/min or more. Note that the temperature can be adjusted in a range of not lower than 400°C and not higher than 1100°C, for example.

In the CNT growth atmosphere, the source gas serving as a carbon source preferably includes ethylene. When ethylene is heated in a specific temperature range (not lower than 700°C and not higher than 900°C), this promotes a decomposition reaction of ethylene and enables high-speed growth of CNTs when the decomposed gas comes into contact with the catalyst. However, when the thermal decomposition time is too long, the decomposition reaction of ethylene proceeds to an excessive degree, which may lead to deactivation of the catalyst and attachment of carbon impurities to the CNT assembly. In production of the CNT assembly that is used in the presently disclosed CNT dispersion liquid, the thermal decomposition time is preferably set in a range of not less than 0.5 seconds and not more than 10 seconds with respect to an ethylene concentration in a range of not less than 0.1 volume% and not more than 40 volume%. A thermal decomposition time of less than 0.5 seconds results in insufficient thermal decomposition of ethylene and makes it difficult to achieve fast growth of a CNT assembly having a high specific surface area. A thermal decomposition time of more than 10 seconds results in excessive progression of decomposition of ethylene and the formation of a large amount of carbon impurities, and may lead to deactivation of the catalyst and reduction of quality of the CNT assembly. The thermal decomposition time is calculated from the following equation.

$$\text{(Thermal decomposition time)} = \text{(Heating channel volume)}/\{\text{(Source gas flow rate)} \times (273.15 + T)/273.15\}$$

The heating channel volume referred to here is the volume of a channel that is heated to a specific temperature T °C and through which the source gas passes before coming into contact with the catalyst. Moreover, the source gas flow rate is the flow rate at 0°C and 1 atm.

Moreover, the condition (b) that "the catalyst activating material concentration in the growth atmosphere of the carbon nanotube assembly is 4 volume% or more" can be satisfied through appropriate adjustment of the supply rate of a catalyst activating material that is supplied during CNT growth. From a viewpoint of further improving performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed, or from a viewpoint of enabling the achievement of good film formation properties during carbon film formation using the CNT dispersion liquid, it is preferable that the catalyst activating material concentration in the growth atmosphere of the CNT assembly is 5 volume% or more. Examples of the catalyst activating material include, but are not specifically limited to, low-carbon number oxygen-containing compounds such as water, oxygen, ozone, acidic gas, nitrogen oxide, carbon monoxide, and carbon dioxide; alcohols such as ethanol and methanol; ethers such as tetrahydrofuran; ketones such as acetone; aldehydes; esters; and mixtures of any thereof. Of these examples, carbon dioxide is suitable. Note that a substance such as carbon monoxide or an alcohol that includes both carbon and oxygen may function as both a source gas and a catalyst activating material. For example, carbon monoxide acts as a catalyst activating material when combined with a source gas having higher reactivity such as ethylene and acts as a source gas when combined with a catalyst activating material that displays a large catalyst activating effect even in a trace amount such as water.

Furthermore, the condition (c) that "an obstacle is present in the growth direction of constituent CNTs of the CNT assembly during growth of the CNT assembly" can be satisfied by selecting the fluidized bed technique in the CNT synthesis step or by adjusting the arrangement interval of the catalyst-bearing support in the moving bed technique or the fixed bed technique.

In synthesis of CNTs by the fluidized bed technique, the CNT synthesis step may be implemented by supplying the source gas while supplying a gas from below so as to fluidize the particulate catalyst-bearing support or may be implemented by supplying the source gas while continuously conveying the particulate catalyst-bearing support through screw rotation, for example.

The catalyst-bearing support includes a support and a catalyst that is supported on the surface of the support. The support is a portion constituting a matrix structure for supporting the catalyst on the support surface by attachment, fixing, film formation, shaping, or the like. With regard to structure of the support, the support may be composed of just the support or may be a foundation layer-equipped support that is provided with any foundation layer in order that the catalyst is supported well on the surface of the support. The support preferably has a particulate form, and the particle diameter thereof, in terms of volume-average particle diameter, is preferably 1 mm or less, more preferably 0.7 mm or less, and even more preferably 0.4 mm or less, and is preferably 0.05 mm or more. When the particle diameter is not more than any of the upper limits set forth above, the growing CNT bundles become thinner, which is advantageous for forming wave-like structures. The particle density, in terms of apparent density, is preferably 3.8 g/cm$^3$ or more, and more preferably 5.8 g/cm$^3$ or more, and is preferably 8 g/cm$^3$ or less. When the particle density is not less than any of the lower limits set forth above, the force acting on CNT bundles during growth increases, which is advantageous for forming wave-like structures. The material of the support is preferably a metal oxide including at least one element among Al and Zr. In particular, zirconia beads containing Zr having a large element content are particularly preferable.

In a case in which a particulate support is used, for example, the method by which the catalyst is mounted on the surface of the particulate support may be a method using a rotary drum coating device that includes a substantially cylindrical rotary drum, for example. Note that in a case in which the catalyst is mounted after providing a foundation layer on the surface of the particulate support, a solution containing a component that can form the foundation layer is sprayed onto the surface of the particulate support and is dried to provide a foundation layer on the support surface prior to performing spraying and drying of a catalyst solution. This method enables comparatively simple formation of a catalyst layer or foundation layer without unevenness.

In the CNT synthesis step, a "formation step" of reducing the catalyst that is supported on the catalyst-bearing support can be implemented before the "growth step" that is implemented such as to satisfy the conditions (a) to (c), and a "cooling step" of cooling the catalyst-bearing support on which CNTs have been grown can be implemented after the growth step is completed. In the "formation step", an atmosphere containing the catalyst-bearing support may be set as a reducing gas atmosphere, and at least one of the reducing gas atmosphere and the catalyst-bearing support may be heated so as to reduce and micronize the catalyst that is supported on the catalyst-bearing support, for example. The temperature of the catalyst-bearing support or the reducing gas atmosphere in the formation step is preferably not lower than 400°C and not higher than 1100°C. Moreover, the implementation time of the formation step can be not less than 3 minutes and not more than 120 minutes. Note that hydrogen gas, ammonia gas, water vapor, or a mixed gas of any thereof, for example, can be used as the reducing gas. Furthermore, the reducing gas may be a mixed gas obtained by mixing any of these gases with an inert gas such as helium gas, argon gas, or nitrogen gas. On the other hand, in the "cooling step", the catalyst-bearing support on which CNTs have been grown is cooled in an inert gas environment. The inert gas can be any of the same inert gases as for the inert gas that can be used in the growth step. Moreover, in the cooling step, the temperature of the catalyst-bearing support on which CNTs have been grown is preferably lowered to 400°C or lower, and more preferably to 200°C or lower.

<Dry pulverization treatment>

When obtaining the presently disclosed CNT dispersion liquid, the CNT assembly prior to dispersion can be subjected to dry pulverization treatment as necessary. The term "dry pulverization treatment" as used in the present specification means pulverization treatment in a state in which the subject of pulverization does not substantially contain a solvent (for example, a state in which the solid content concentration is 95% or more).

No specific limitations are placed on a pulverization device that can be used in the dry pulverization treatment so long as it is a device that can apply a physical load by stirring or the like with respect to an assembly formed of fine structures. A mixer including a rotating blade can be used as such a device.

No specific limitations are placed on the pulverization conditions. For example, in a case in which a mixer including a rotating blade is used as a pulverization device, the rotation speed is preferably not less than 500 rpm and not more than 5,000 rpm, and the pulverization time is preferably not less than 10 seconds and not more than 20 minutes.

<Solvent>

Examples of the solvent of the CNT dispersion liquid (hereinafter, also referred to simply as the "solvent") include, but are not specifically limited to, water, alcohols such as methanol, ethanol, n-propanol, isopropanol, n-butanol, isobutanol, t-butanol, pentanol, hexanol, heptanol, octanol, nonanol, decanol, and amyl alcohol, ketones such as acetone, methyl ethyl ketone, and cyclohexanone, esters such as ethyl acetate and butyl acetate, ethers such as diethyl ether, dioxane, and tetrahydrofuran, amide polar organic solvents such as N,N-dimethylformamide and N-methylpyrrolidone (NMP), and aromatic hydrocarbons such as toluene, xylene, chlorobenzene, orthodichlorobenzene, and paradichlorobenzene. Just one of these solvents may be used individually, or two or more of these solvents may be used as a mixture. In particular, NMP is more preferably used as the solvent of the CNT dispersion liquid in the case of forms A, B 1, and B2. In the case of form C, water, an alcohol, or a mixture thereof is preferable, and water is more preferable as the solvent of the CNT dispersion liquid. In a case in which water is used as this solvent, this enables good affinity between a carbon film and electrolyte solution and improvement of battery performance when a carbon film that is formed from the carbon nanotube dispersion liquid in which water is used is adopted in a battery. Moreover, in a case in which an alcohol is used as this solvent, this enables simple production of a carbon film using the carbon nanotube dispersion liquid. Although the solvent of the CNT dispersion liquid may be the same as or different from the solvent of a slurry composition, it is preferable that these solvents are the same from a viewpoint of maintaining a constant solvent composition throughout the production process of the slurry composition.

<Proportional content of carbon nanotubes>

The proportional content of the carbon nanotubes in the carbon nanotube dispersion liquid is not specifically limited, but is preferably 0.05 mass% or more, more preferably 0.1 mass% or more, and even more preferably 0.2 mass% or more from a viewpoint of dispersibility. Moreover, the proportional content of the carbon nanotubes in the carbon nanotube dispersion liquid is preferably 2.0 mass% or less, more preferably 1.5 mass% or less, and even more preferably 1.0 mass% or less from a viewpoint of dispersibility.

<Total content of carbon nanotubes and solvent>

From a viewpoint that one anticipated application of the presently disclosed carbon nanotube dispersion liquid is the production of a slurry composition for a secondary battery electrode through mixing with secondary battery electrode components such as an active material and a binder, and optionally with a dispersant, and that consistency of the dispersion state of the carbon nanotube dispersion liquid may be impaired by the mixing in of other components, or from a viewpoint of reducing residual impurity content in a formed carbon film as much as possible in a situation in which the presently disclosed carbon nanotube dispersion liquid is used to form a carbon film through solvent removal, it is preferable that the total content of components other than the carbon nanotubes and the solvent (i.e., a dispersant, an active material, a binder, etc.) is as low as possible, and, in particular, it is more preferable that the presently disclosed carbon nanotube dispersion liquid does not contain a dispersant. Conversely, the carbon nanotubes and the solvent preferably constitute the vast majority of the presently disclosed carbon nanotube dispersion liquid. Specifically, the total content of the carbon nanotubes and the solvent in the presently disclosed carbon nanotube dispersion liquid is preferably 90 mass% or more, and more preferably 95 mass% or more, and it is even more preferable that the presently disclosed carbon nanotube dispersion liquid does not contain components other than the carbon nanotubes and the solvent.

<Dispersing treatment>

The carbon nanotube dispersion liquid can be obtained by performing dispersing treatment of a mixture containing the carbon nanotubes and the solvent. In forms A, B 1, and B2, the dispersing treatment can be performed using a commonly known mixing device. The mixing device may be a mixing device that brings about a cavitation effect such as an ultrasonic disperser or a jet mill or a dispersing device that brings about a crushing effect such as a bead mill, a ball mill, a roll mill, a sand mill, a pigment disperser, a grinding machine, a homogenizer, a planetary mixer, or a FILMIX. Note that it is preferable to use a mixing device that brings about a cavitation effect in the dispersing treatment because this enables more uniform dispersion of the CNTs. One of these mixing devices may be used individually, or two or more of these mixing devices may be used in combination.

In dispersing treatment using a mixing device that brings about a cavitation effect, dispersing is performed using shock waves caused by the rupture of vacuum bubbles formed in water when high energy is applied to the liquid. The use of this dispersing method enables even better dispersion of the CNTs.

Note that in a case in which an ultrasonic disperser is used to disperse the CNTs, this may be performed by adding the CNTs to the solvent and subsequently irradiating the resultant crude dispersion with ultrasound using the ultrasonic disperser. The irradiation time should be set as appropriate in consideration of the amount of CNTs and so forth. For example, the irradiation time is preferably 3 minutes or more, and more preferably 30 minutes or more, and is preferably 5 hours or less, and more preferably 2 hours or less. Moreover, the power is preferably not less than 20 W and not more than 500 W, and more preferably not less than 100 W and not more than 500 W, for example, and the temperature is preferably not lower than 15°C and not higher than 50°C, for example.

In a situation in which a jet mill is used, the number of treatment repetitions should be set as appropriate in consideration of the amount of CNTs and so forth. For example, the number of treatment repetitions is preferably 3 or more, and more preferably 6 or more, and is preferably 30 or less, and more preferably 25 or less. Moreover, the pressure is preferably not less than 20 MPa and not more than 250 MPa, for example, and the temperature is preferably not lower than 15°C and not higher than 50°C, for example.

The dispersing treatment that brings about a cavitation effect is more preferably performed at a temperature of 50°C or lower.

No specific limitations are placed on other methods of dispersing treatment that may be used, and the CNT dispersion liquid can be obtained by dispersing the CNT assembly in a dispersion medium by a known method such as a dispersing method using a stirring blade, a dispersing method using ultrasound, or a dispersing method using shear force.

Preferable conditions in each dispersing method for obtaining the presently disclosed CNT dispersion liquid are as described below.

In a situation in which a dispersing method using a stirring blade is adopted, dispersing of the CNTs in the dispersion medium is preferably performed with a stirring blade rotation speed of not less than 1,500 rpm and not more than 12,500 rpm, and more preferably not less than 2,000 rpm and not more than 10,000 rpm, and is preferably performed for not less than 1 minute and not more than 120 minutes, and more preferably not less than 5 minutes and not more than 100 minutes. The dispersing using a stirring blade can be performed using a commonly known dispersing device that includes a stirring blade.

In a situation in which a dispersing method using ultrasound is adopted, dispersing of the CNTs in the dispersion medium is preferably performed with a frequency of not less than 50 kHz and not more than 500 kHz for not less than 1 minute and not more than 120 minutes, and is more preferably performed for not less than 2 minutes and not more than 100 minutes. The dispersing using ultrasound can be performed using a commonly known ultrasonic disperser.

In form C, the method by which the CNTs are dispersed in the solvent is not specifically limited, and a typical dispersing method using a commonly known convention dispersing device can be adopted. From a viewpoint of making it easy to obtain a CNT dispersion liquid having an area fraction in a desired range (for example, 70% or less, preferably not less than 20% and not more than 70%, and more preferably not less than 55% and not more than 70%) through the dispersing treatment, it is preferable that the dispersion liquid is produced through dispersing treatment that brings about a cavitation effect or dispersing treatment that brings about a crushing effect, which are described in detail below. Moreover, preliminary dispersing of the CNTs in the solvent using a stirrer or the like may be performed in advance of the dispersing treatment.

-Dispersing treatment bringing about cavitation effect-

The dispersing treatment that brings about a cavitation effect is a dispersing method that utilizes shock waves caused by the rupture of vacuum bubbles formed in water when high energy is applied to the liquid. This dispersing method enables good dispersion of the CNTs. Note that the dispersing treatment that brings about a cavitation effect is more preferably performed at a temperature of 50°C or lower. The reason for this is in order to suppress change in concentration that occurs due to volatilization of the solvent.

Specific examples of the dispersing treatment that brings about a cavitation effect include dispersing treatment using ultrasound, dispersing treatment using a jet mill, and dispersing treatment using high-shear stirring. Just one of these dispersing treatments may be carried out, or a plurality of these dispersing treatments may be carried out in combination. The dispersing treatment that brings about a cavitation effect may suitably be performed using an ultrasonic homogenizer, a jet mill, or a high-shear stirring device, for example. Commonly known conventional devices may be used as these devices.

In a situation in which an ultrasonic homogenizer is used, a preliminary dispersion liquid or a mixture that has not undergone dispersing may be irradiated with ultrasound using the ultrasonic homogenizer. The irradiation time should be set as appropriate in consideration of the CNT concentration, the degree of dispersing, and so forth.

In a situation in which a jet mill is used, various conditions should be set as appropriate in consideration of the CNT concentration, the degree of dispersing, and so forth. For example, the number of treatment repetitions is preferably 1 to 100. Moreover, the pressure is preferably 20 MPa to 250 MPa, and the temperature is preferably 15°C to 50°C. A high-pressure wet jet mill may suitably be used as the jet mill dispersing device. Specific examples include a Nanomaker® (Nanomaker is a registered trademark in Japan, other countries, or both; produced by Advanced Nano Technology Co., Ltd.), a Nanomizer (produced by Nanomizer Inc.), a NanoVater (produced by Yoshida Kikai Co., Ltd.), and a Nano Jet Pul®

(Nano Jet Pul is a registered trademark in Japan, other countries, or both; produced by Jokoh Co., Ltd.).

In a situation in which high-shear stirring is used, a high-shear stirring device may be used to cause stirring and shearing of a preliminary dispersion liquid or a mixture that has not undergone dispersing. The rotational speed is preferably as fast as possible. For example, the operating time (time for which rotating operation of a machine is performed) is preferably 3 minutes to 4 hours, the circumferential speed is preferably 20 m/s to 50 m/s, and the temperature is preferably 15°C to 50°C. The high-shear stirring device may, for example, be a stirring device typified by an Ebara Milder (produced by Ebara Corporation), a CAVITRON (produced by Eurotec), or a DRS2000 (produced by IKA); a stirring device typified by a CLEARMIX® CLM-0.8S (CLEARMIX is a registered trademark in Japan, other countries, or both; produced by M Technique Co., Ltd.), a turbine-type stirring device typified by a TK Homo Mixer (produced by Tokushu Kika Kogyo Co., Ltd.); or a stirring device typified by a TK FILMIX (produced by Tokushu Kika Kogyo Co., Ltd.).

-Dispersing treatment bringing about crushing effect-

In the dispersing treatment that brings about a crushing effect, shear force is applied to a preliminary dispersion liquid or a mixture that has not undergone dispersing so as to cause crushing and dispersing of CNTs, back pressure is further applied, and cooling is performed as necessary to thereby enable uniform dispersing of the CNTs in the solvent while also suppressing the formation of air bubbles. Dispersing treatment that brings about a crushing effect is advantageous because, in addition to enabling uniform dispersion of the CNTs, dispersing treatment that brings about a crushing effect can suppress damage of the CNTs caused by shock waves when air bubbles burst as compared to the dispersing treatment that brings about a cavitation effect described above. Dispersing treatment that brings about a crushing effect is also advantageous in terms that attachment of air bubbles to the CNTs and energy loss due to air bubble formation can be suppressed, and that the CNTs can be uniformly and efficiently dispersed.

Application of back pressure can be implemented by applying a load to flow of the preliminary dispersion liquid or mixture that has not undergone dispersing. For example, the desired back pressure can be applied to the preliminary dispersion liquid or mixture that has not undergone dispersing by providing a multistage depressurizing device at a downstream side of the disperser. When applying back pressure to the preliminary dispersion liquid or mixture that has not undergone dispersing, the applied back pressure may be lowered at once to atmospheric pressure, but is preferably lowered through multistage depressurization. By performing multistage depressurization through a multistage depressurizing device, it is possible to suppress the formation of air bubbles in the dispersion liquid when the CNTs are finally exposed to atmospheric pressure.

The various types of dispersing treatment described above may be performed individually or may be freely performed in combination.

In particular, in dispersing treatment for producing a dispersion liquid that contains CNTs, it is preferable to adopt dispersing treatment that uses a dispersing treatment device including a thin-tube channel, and in which a preliminary dispersion liquid is pressure fed into the thin-tube channel and shear force is imparted to the preliminary dispersion liquid to disperse fibrous carbon nanostructures. By pressure feeding the preliminary dispersion liquid into the thin-tube channel and applying shear force to the preliminary dispersion liquid so as to disperse fibrous carbon nanostructures, the fibrous carbon nanostructures can be dispersed well while also suppressing damage to the fibrous carbon nanostructures.

One example of a dispersing system having a configuration such as described above is a BERYU SYSTEM PRO (product name) produced by Beryu Corp. The dispersing treatment that brings about a crushing effect can be implemented using a dispersing system such as described above under dispersing conditions that are controlled as appropriate.

<Ultra-small-angle X-ray scattering measurement>

Measurement by ultra-small-angle X-ray scattering in step (ii) can be performed as described below. The carbon nanotube dispersion liquid is dripped onto slide glass, and a droplet of the dripped carbon nanotube dispersion liquid is subjected to ultra-small-angle X-ray scattering measurement to obtain a scattering image. In the present disclosure, ultra-small-angle X-ray scattering measurement is performed under conditions of a wavenumber q of 0.0004 (1/angstrom) to 0.3 (1/angstrom), Cu K-$\alpha$ as an X-ray source, an X-ray tube voltage of 45 kV, a tube current of 200 mA, a slit width of 10 mm, a scan step of 0.0006 deg, a scan range of 0 deg to 0.5 deg, a scan speed of 0.034 deg/min, and a two-dimensional semiconductor detector as an X-ray detector. A scattering profile is obtained with wavenumber q on a horizontal axis and scattering intensity I(q) on a vertical axis.

<Fitting of scattering profile>

Analysis of measurement data in ultra-small-angle X-ray scattering and suitability evaluation of the carbon nanotube dispersion liquid in step (iii) can be performed as described below. Fitting of the scattering profile described above is performed using the Beaucage equation. Fitting of a scattering profile using the Beaucage equation is a commonly known conventional technique and can be performed according to a method described in G. Beaucage, J. Appl. Cryst., 28, 717 (1995), for example. The fitting can be performed using analysis software such as Igor Pro 8 (produced by WaveMetrics), for example.

Specifically, fitting of the obtained scattering profile is performed using the Beaucage equation expressed by the following general equation (I) with the wavenumber range set as 0.0004 (1/angstrom) to 0.3 (1/angstrom).

[Math. 1]

$$I(q) = Bkgd + \sum_{i=1}^{N} G_i \exp\left(-q^2 R_{g,i}^2 / 3\right) + \frac{B\left[erf(qR_{g,i} / \sqrt{6})\right]^{3P_i}}{q^{P_i}} \qquad (\mathrm{I})$$

In general equation (I), q represents the wavenumber (1/angstrom), I(q) represents the scattering intensity at wavenumber q, Bkgd represents the background, $G_i$ and $B_i$ represent proportionality constants, $P_i$ represents the fractal dimension at hierarchy i, $R_{g,i}$ represents the structure length at hierarchy i, and N represents the number of hierarchies.

By performing fitting of the scattering profile using general equation (I) in this manner, it is possible to determine the fractal dimension $P_i$ at each hierarchy i.

In the present disclosure, it is judged that "a fractal dimension is not less than 3 and not more than 4 in a wavenumber range of not less than 0.001 (1/angstrom) and not more than 0.3 (1/angstrom)" when a fractal dimension $P_3$ for a case in which i = 3 is not less than 3 and not more than 4.

In an ultra-small-angle X-ray scattering profile for the carbon nanotube dispersion liquid according to the present disclosure, (1) scattering ($R_{g,1}$) attributed to the diameter of one CNT, (2) scattering ($R_{g,2}$) attributed to the persistence length of one CNT, and (3) scattering ($R_{g,3}$) attributed to the bundle diameter of CNTs can be observed. Since three types of scattering are observed in this manner, it is preferable to perform fitting with the number of hierarchies set as 3. For example, (1) scattering ($R_{g,1}$) attributed to the diameter of one CNT is observed in a wavenumber range of not less than 0.1 (1/angstrom) and not more than 0.3 (1/angstrom), (2) scattering ($R_{g,2}$) attributed to the persistence length of one CNT is observed in a wavenumber range of not less than 0.01 (1/angstrom) and not more than 0.1 (1/angstrom), and (3) scattering ($R_{g,3}$) attributed to CNT bundles is observed in a wavenumber range of not less than 0.0001 (1/angstrom) and not more than 0.01 (1/angstrom). Moreover, the surface roughness ($P_3$) of CNT bundles can be analyzed from the slope between the scattering ($R_{g,2}$) and the scattering ($R_{g,3}$) in the scattering profile.

Although it is not certain why excellent performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed can be displayed by a carbon nanotube dispersion liquid that has a fractal dimension of not less than 3 and not more than 4 in a wavenumber range of not less than 0.001 (1/angstrom) and not more than 0.3 (1/angstrom) when a scattering profile obtained through ultra-small-angle X-ray scattering measurement of at least one surface of a carbon film is fitted to the Beaucage equation, the reason for this is presumed to be as follows. It is presumed that in the case of a carbon nanotube dispersion liquid having a fractal dimension of not less than 3 and not more than 4 in a wavenumber range of not less than 0.001 (1/angstrom) and not more than 0.3 (1/angstrom), bundles of CNTs contained in this carbon nanotube dispersion liquid are unbundled, and a CNT network can be formed. Therefore, the CNTs form a network when the carbon nanotube dispersion liquid is used to form a carbon nanotube-containing film, and this is presumed to enable the presently disclosed carbon nanotube dispersion liquid to display excellent performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed.

When the fractal dimension is more than 4 in a wavenumber range of not less than 0.001 (1/angstrom) and not more than 0.3 (1/angstrom), it is presumed that bundles of CNTs remain in the CNT dispersion liquid and that good formation of a CNT network is not possible when the CNT dispersion liquid is used to form a carbon nanotube-containing film, thus resulting in deterioration of performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed. Moreover, when the fractal dimension is less than 3 in a wavenumber range of not less than 0.001 (1/angstrom) and not more than 0.3 (1/angstrom), it is presumed that there is shortening of CNTs in the CNT dispersion liquid, that a CNT network is not formed when the CNT dispersion liquid is used to form a carbon nanotube-containing film, and that there is deterioration of performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed.

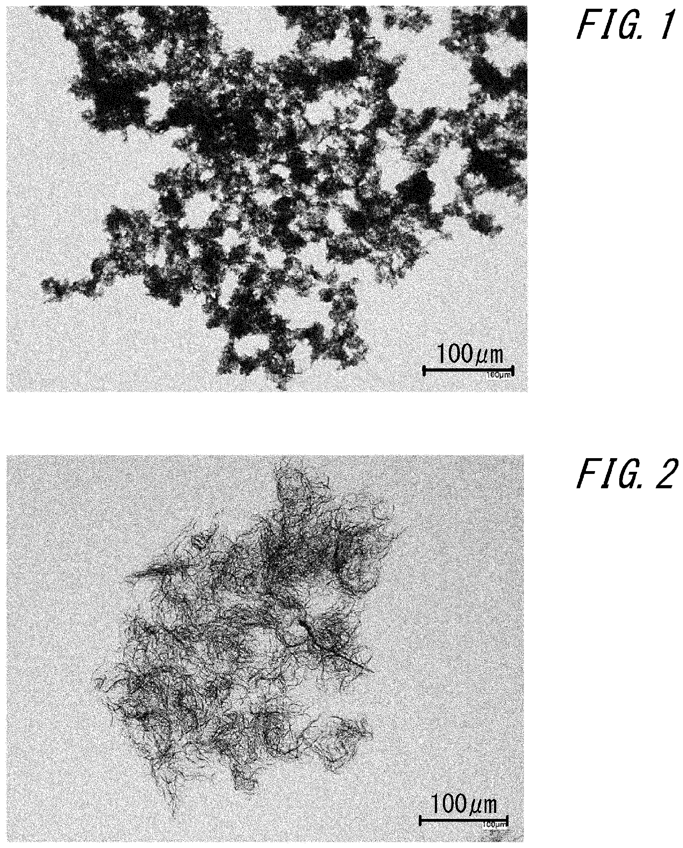

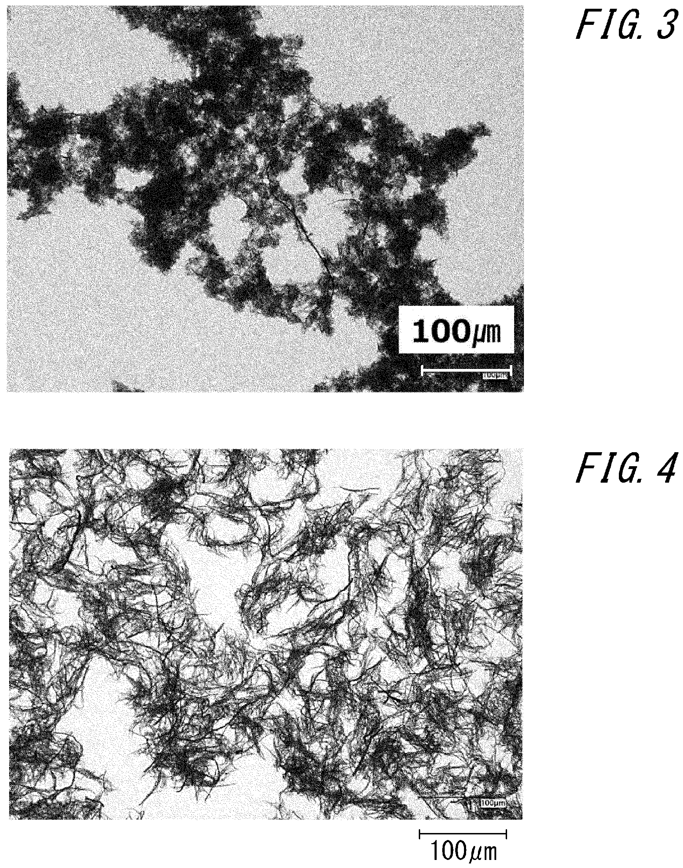

The following describes the dispersion state of the presently disclosed carbon nanotube dispersion liquid with reference to FIGS. 1 to 4. FIG. 1 presents an optical microscope image of a CNT dispersion liquid of Example 1. FIG. 2 presents an optical microscope image of a CNT dispersion liquid of Example 2. FIG. 3 presents an optical microscope image of a CNT dispersion liquid of Example 3. FIG. 4 presents an optical microscope image of a CNT dispersion liquid of Comparative Example 1. It can be seen from FIGS. 1 to 3 that in the CNT dispersion liquids of Examples 1 to 3, which each have a fractal dimension of not less than 3 and not more than 4 in a specific wavenumber range, bundles of CNTs are unbundled, and the CNTs are spread out to form a network structure. In contrast, the CNT dispersion liquid of Comparative Example 1, which has a fractal dimension of less than 3 in a specific wavenumber range, includes a large number of bundles and does not have a network structure like that in Examples 1 to 3. Consequently, it is presumed that a good CNT network is not formed when the CNT dispersion liquid of Comparative Example 1 is used to form a carbon nanotube-containing film, and, as a result, the CNT dispersion liquid of Comparative Example 1 has poor performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed.

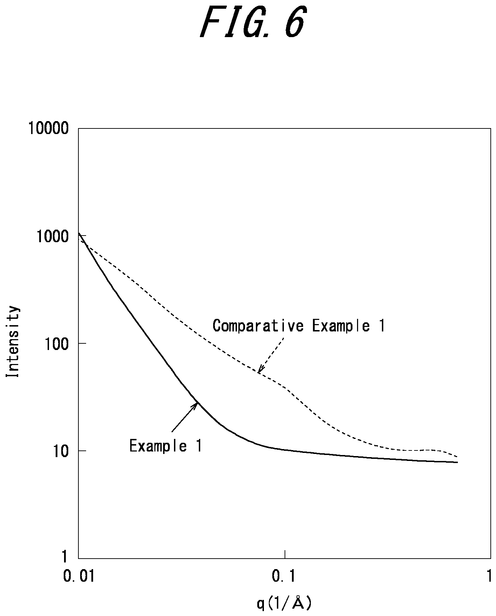

Note that the fractal dimension $P_i$ in general equation (I) corresponds to the absolute value of the slope of a linear section of a graph obtained through fitting of the scattering profile to the Beaucage equation. FIG. 6 presents a graph obtained when ultra-small-angle X-ray scattering profiles of CNT dispersion liquids of Example 1 and Comparative Example 1 were fitted to the Beaucage equation. In FIG. 6, the slope of a linear section in a wavenumber range of not less than 0.001 (1/angstrom) and not more than 0.3 (1/angstrom) for Example 1 is smaller than the slope of a linear section in the wavenumber range of not less than 0.001 (1/angstrom) and not more than 0.3 (1/angstrom) for Comparative Example 1. In other words, the graph for Comparative Example 1 in FIG. 6 has a gentle slope for the linear section in the wavenumber range of not less than 0.001 (1/angstrom) and not more than 0.3 (1/angstrom), and it can be seen that the fractal dimension is close to 4.

From a viewpoint of even further improving performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed, the above-described fractal dimension of the presently disclosed CNT dispersion liquid in the wavenumber range of not less than 0.001 (1/angstrom) and not more than 0.3 (1/angstrom) is 3 or more, preferably 3.1 or more, and more preferably 3.2 or more, and is 4 or less, preferably 3.9 or less, and more preferably 3.8 or less.

In the presently disclosed CNT dispersion liquid, the fractal dimension described above can be controlled by, for example, adjusting the dispersing conditions of the CNTs (dispersing strength, dispersing time, presence or absence of a dispersant, etc.) in production of the CNT dispersion liquid described above or by controlling the CNT bundle length as described below. For example, in a situation in which the CNTs are dispersed using a stirring blade, the CNT bundle length can be altered by altering the rotation speed (rpm) of the stirring blade and/or the dispersing time and/or the shape of the stirring blade.

Moreover, from a viewpoint of even further improving performance in terms of strong peel strength when a laminate of a metal film and a carbon nanotube-containing film is formed, weak peel strength when a laminate of a releasable substrate and a carbon nanotube-containing film is formed, and discharge rate characteristics when a secondary battery is formed, the CNT persistence length of the presently disclosed CNT dispersion liquid in a wavenumber range of not less than 0.05 (1/angstrom) and not more than 0.01 (1/angstrom) when a scattering profile obtained through ultra-small-angle X-ray scattering measurement of the CNT dispersion liquid is fitted to the Beaucage equation is preferably 100 nm or more, more preferably 105 nm or more, and even more preferably 110 nm or more. Although no specific limitations are placed on the upper limit for the CNT persistence length in the wavenumber range of not less than 0.05 (1/angstrom) and not more than 0.01 (1/angstrom), the CNT persistence length is normally 1,000 or less.

The CNT persistence length can be determined in the same manner as the fractal dimension described above. Specifically, the carbon nanotube dispersion liquid is dripped onto slide glass, and a droplet of the dripped carbon nanotube dispersion liquid is subjected to ultra-small-angle X-ray scattering measurement to obtain a scattering profile as previously described. The obtained scattering profile is then fitted to the Beaucage equation expressed by general equation (I) as previously described. In analysis with the number of hierarchies set as 3, $R_{g,2}$ at hierarchy 2 can be determined as the CNT persistence length.

The CNT persistence length $R_{g,2}$ represents the CNT persistence length at hierarchy 2. The CNT persistence length expresses the length for which a CNT tends to maintain linearity. In other words, the CNT persistence length indicates the length between adjacent bending portions (length between kinks) in one CNT. In the CNT persistence length range according to the present disclosure, it is presumed that electrical conduction paths are formed, and high electrical conductivity can be displayed.

Note that in the present disclosure, it is judged that "CNT persistence length is 100 nm or more in a wavenumber range of not less than 0.05 (1/angstrom) and not more than 0.01 (1/angstrom)" when CNT persistence lengths $R_{g,1}$ and $R_{g,2}$ for cases in which i = 1 and i = 2 in general equation (I) are 250 angstroms or less.

In the presently disclosed CNT dispersion liquid, the CNT persistence length described above can be controlled by, for example, adjusting the dispersing conditions of the CNTs (dispersing strength, dispersing time, presence or absence of a dispersant, etc.) in production of the CNT dispersion liquid described above or by controlling the CNT bundle length as described below. For example, in a situation in which the CNTs are dispersed using a stirring blade, the CNT bundle length can be altered by altering the rotation speed (rpm) of the stirring blade and/or the dispersing time and/or the shape of the stirring blade.

(Application of carbon nanotube dispersion liquid)

The presently disclosed carbon nanotube dispersion liquid can be used in any application. In particular, it is preferable that the presently disclosed carbon nanotube dispersion liquid is used in formation of an electrode mixed material layer of an electrode for a secondary battery. In a situation in which the presently disclosed carbon nanotube dispersion liquid is used in such an application, the presently disclosed carbon nanotube dispersion liquid can be used to produce a slurry composition for a secondary battery electrode through mixing with other components (electrode active material, binder, etc.), for example.

The slurry composition for a secondary battery electrode that is obtained in this manner can be used to form a carbon nanotube-containing film (electrode mixed material layer) on a metal film and thereby produce a laminate (secondary battery electrode) that includes a metal film and a carbon nanotube-containing film. Moreover, the slurry composition for a secondary battery electrode that is obtained in this manner can be used to form a carbon nanotube-containing film (electrode mixed material layer) on a substrate such as a resin and thereby produce a laminate (electrode mixed material layer for transfer) that includes a releasable substrate and a carbon nanotube-containing film.

An electrode that is obtained from the slurry composition for a secondary battery electrode described above can be used to produce a secondary battery.

The secondary battery is preferably a non-aqueous secondary battery, and more preferably a lithium ion secondary battery. The electrode may be a positive electrode or a negative electrode, but is preferably a positive electrode. The secondary battery electrode is most preferably a positive electrode of a lithium ion secondary battery.

By using the presently disclosed carbon nanotube dispersion liquid, it is possible to obtain excellent performance in terms of strong peel strength (i.e., mechanical strength of an electrode) when a laminate of a metal film and a carbon nanotube-containing film is formed, weak peel strength (i.e., easy releasability of an electrode in an electrode mixed material layer for transfer) when a laminate of a releasable substrate and a carbon nanotube-containing film is formed, and discharge rate characteristics when a secondary battery is formed. Moreover, by placing the carbon nanotubes in the form of a dispersion liquid in advance, it is possible to increase consistency and reproducibility of the dispersion state of the carbon nanotubes in a slurry composition and a carbon nanotube-containing film (electrode mixed material layer). This is also suitable for producing products (electrodes, electrode mixed material layers for transfer, secondary batteries, etc.) having the excellent performance described above by repetitive mass production on an industrial scale with high yield.

<Slurry composition for secondary battery electrode>

A slurry composition for a secondary battery electrode can be produced by mixing the presently disclosed carbon nanotube dispersion liquid and other components. Examples of other components include an electrode active material, a binder, a slurry composition solvent, and a dispersant. The mixing can be performed through stirring (stiff kneading) by a planetary mixer, for example. The slurry composition that is obtained in this manner can be used to produce a laminate (used as a secondary battery electrode) of a metal film and a carbon nanotube-containing film.

«Electrode active material»

The electrode active material is a material that gives and receives electrons in an electrode (positive electrode or negative electrode) of a secondary battery. The electrode active material may be a positive electrode active material or a negative electrode active material. Any known electrode active material that is used in secondary batteries can be used as the electrode active material without any specific limitations.

Specifically, an electrode active material formed of any of the following materials that can occlude and release lithium may be used, without any specific limitations, as an electrode active material that can be used to produce a composite used in an electrode of a lithium ion secondary battery, for example, which is one example of a secondary battery.

-Positive electrode active material-

A positive electrode active material for a lithium ion secondary battery may be a transition metal oxide, a transition metal sulfide, a lithium-containing complex metal oxide of lithium and a transition metal, or the like, for example. The transition metal may be Ti, V, Cr, Mn, Fe, Co, Ni, Cu, Mo, or the like, for example.

Moreover, the positive electrode active material may be a conductive polymer compound such as polyacetylene or poly-p-phenylene.

The transition metal oxide may be $MnO$, $MnO_2$, $V_2O_5$, $V_6O_{13}$, $TiO_2$, $Cu_2V_2O_3$, amorphous $V_2O$-$P_2O_5$, $MoO_3$, or the like, for example.

Moreover, the transition metal sulfide may be $TiS_2$, $TiS_3$, amorphous $MoS_2$, $FeS$, or the like, for example.

Furthermore, the lithium-containing complex metal oxide may be a lithium-containing complex metal oxide having a layered structure, a lithium-containing complex metal oxide having a spinel structure, a lithium-containing complex metal oxide having an olivine structure, or the like, for example.

The lithium-containing complex metal oxide having a layered structure may be lithium-containing cobalt oxide ($LiCoO_2$), lithium-containing nickel oxide ($LiNiO_2$), a lithium complex oxide of Co-Ni-Mn, a lithium complex oxide of Ni-Mn-Al, a lithium complex oxide of Ni-Co-Al, or the like, for example.

The lithium-containing complex metal oxide having a spinel structure may be lithium manganate ($LiMn_2O_4$) or $Li[Mn_{1.5}M_{0.5}]O_4$ (M is Cr, Fe, Co, Ni, Cu, or the like) in which some Mn has been replaced by another transition metal.

The lithium-containing complex metal oxide having an olivine structure may be an olivine-type lithium phosphate compound represented by $Li_xMPO_4$ (in the formula, M represents one or more selected from the group consisting of Mn, Fe, Co, Ni, Cu, Mg, Zn, V, Ca, Sr, Ba, Ti, Al, Si, B, and Mo, and X represents a number satisfying $0 \leq X \leq 2$), for example.

Note that one of the positive electrode active materials described above may be used individually, or two or more of the positive electrode active materials described above may be used in combination in a freely selected ratio.

-Negative electrode active material-

A negative electrode active material for a lithium ion secondary battery may be a negative electrode active material that is formed of carbon. The negative electrode active material formed of carbon may be natural graphite, artificial graphite, carbon black, or the like, for example. Of these negative electrode active materials, graphite such as artificial graphite or natural graphite is preferable, and natural graphite is particularly preferable.

Another example of the negative electrode active material is a negative electrode active material that includes a metal. In particular, a negative electrode active material that includes one or more selected from the group consisting of tin, silicon, germanium, and lead is preferable. A negative electrode active material that includes any of these elements can reduce irreversible capacity.

Of negative electrode active materials that include a metal, negative electrode active materials that include silicon are particularly preferable. By using a negative electrode active material that includes silicon, it is possible to increase the electric capacity of a lithium ion secondary battery.

The negative electrode active material that includes silicon may, for example, be a compound that includes silicon or silicon metal. The compound that includes silicon is a compound of silicon and another element and may be $SiO$, $SiO_2$, $SiO_x$ ($0.01 \leq x < 2$), SiC, SiOC, or the like, for example. Of these compounds, $SiO_x$, SiOC, and SiC are preferable. $SiO_x$ is a compound that can be formed from silicon metal and at least one of SiO and $SiO_2$. This $SiO_x$ can be produced by, for example, heating a mixture of $SiO_2$ and silicon metal to produce silicon monoxide gas, and subsequently cooling this silicon monoxide gas to cause deposition.

Note that one of the negative electrode active materials described above may be used individually, or two or more of the negative electrode active materials described above may be used in combination in a freely selected ratio.

-Properties of electrode active material-

The median particle diameter (D50) of the electrode active material described above is preferably not less than 0.001 $\mu$m and not more than 100 $\mu$m, more preferably not less than 0.01 $\mu$m and not more than 50 $\mu$m, and even more preferably not less than 0.1 $\mu$m and not more than 30 $\mu$m. When the median particle diameter of the electrode active material is 0.001 $\mu$m or more, a slurry composition can be formed using the electrode active material together with the presently disclosed carbon nanotube dispersion liquid, an electrode mixed material layer can be formed well using this slurry composition, and it is possible to cause the display of strong peel strength between the electrode mixed material layer and a current collector formed of a metal or the like in a situation in which the electrode mixed material layer is used for an electrode for a secondary battery, to cause the display of weak peel strength between the electrode mixed material layer and a releasable substrate formed of a resin or the like in a situation in which the electrode mixed material layer is used for a releasable substrate-attached electrode mixed material layer, and to cause the display of excellent rate characteristics when the electrode mixed material layer is used for a secondary battery. Moreover, when the median particle diameter of the electrode active material is 100 $\mu$m or less, surface area of the electrode active material can be sufficiently ensured, and rate characteristics of a secondary battery obtained using such a slurry composition can be further improved.

<Binder>

A polymer compound such as an acrylic polymer, a fluoropolymer, a diene polymer, or a nitrile polymer, for example, can be used as the binder without any specific limitations. One of these polymer compounds can be used individually, or a plurality of these polymer compounds can be used together.

Note that in the slurry composition, the binder may be dissolved in the solvent or may be dispersed in the solvent in a particulate form or the like, for example, without dissolving in the solvent.

The fluoropolymer, diene polymer, and nitrile polymer can be a fluoropolymer, a diene polymer, and a nitrile polymer that are described in JP2012-243476A, for example.

Moreover, the acrylic polymer can be an acrylate polymer that is described in WO2016/152262A1, for example.

The aforementioned acrylic polymer is preferable as the binder. The acrylic polymer is a polymer that includes a repeating unit (polymerization unit) obtained through polymerization of an acrylate or methacrylate (hereinafter, also abbreviated as "(meth)acrylate") or a derivative thereof and may, more specifically, be a homopolymer of a (meth)acrylate, a copolymer of (meth)acrylates, or a copolymer of a (meth)acrylate and another monomer that is copolymerizable with the (meth)acrylate.

The (meth)acrylate may be an acrylic acid alkyl ester such as methyl acrylate, ethyl acrylate, n-propyl acrylate, isopropyl acrylate, n-butyl acrylate, t-butyl acrylate, or 2-ethylhexyl acrylate; an acrylic acid alkoxyalkyl ester such as 2-methoxyethyl acrylate or 2-ethoxyethyl acrylate; a 2-(perfluoroalkyl)ethyl acrylate such as 2-(perfluorobutyl)ethyl acrylate or 2-(perfluoropentyl)ethyl acrylate; a methacrylic acid alkyl ester such as methyl methacrylate, ethyl methacrylate, n-propyl methacrylate, isopropyl methacrylate, n-butyl methacrylate, t-butyl methacrylate, 2-ethylhexyl methacrylate, lauryl methacrylate, tridecyl methacrylate, or stearyl methacrylate; or a 2-(perfluoroalkyl)ethyl methacrylate such as 2-(perfluorobutyl)ethyl methacrylate or 2-(perfluoropentyl)ethyl methacrylate. In a case other than forms B1 and B2, acrylic acid alkyl esters such as methyl acrylate, ethyl acrylate, n-propyl acrylate, isopropyl acrylate, n-butyl acrylate, t-butyl acrylate, and 2-ethylhexyl acrylate; and acrylic acid alkoxyalkyl esters such as 2-methoxyethyl acrylate and 2-ethoxyethyl acrylate are preferable from among these (meth)acrylates due to having high close adherence with an inorganic solid electrolyte.

The proportional content of (meth)acrylate-derived polymerization units in the acrylic polymer is normally 40 mass% or more, preferably 50 mass% or more, and more preferably 60 mass% or more. Note that the upper limit for the proportional content of (meth)acrylate-derived polymerization units in the acrylic polymer is normally 100 mass% or less, and preferably 95 mass% or less.

Moreover, examples of monomers that are copolymerizable with the (meth)acrylate described above include unsaturated carboxylic acids such as acrylic acid, methacrylic acid, itaconic acid, and fumaric acid; carboxylic acid esters including two or more carbon-carbon double bonds such as ethylene glycol dimethacrylate, diethylene glycol dimethacrylate, and trimethylolpropane triacrylate; styrenic monomers such as styrene, vinyltoluene, t-butylstyrene, vinylbenzoic acid, methyl vinylbenzoate, vinylnaphthalene, hydroxymethylstyrene, α-methylstyrene, and divinylbenzene; amide monomers such as acrylamide, methacrylamide, N-methylolacrylamide, and acrylamido-2-methylpropane sulfonic acid; α,β-unsaturated nitrile compounds such as acrylonitrile and methacrylonitrile; olefins such as ethylene and propylene; diene monomers such as butadiene and isoprene; vinyl esters such as vinyl acetate, vinyl propionate, vinyl butyrate, and vinyl benzoate; vinyl ethers such as methyl vinyl ether, ethyl vinyl ether, and butyl vinyl ether; vinyl ketones such as methyl vinyl ketone, ethyl vinyl ketone, butyl vinyl ketone, hexyl vinyl ketone, and isopropenyl vinyl ketone; and heterocycle-containing vinyl compounds such as N-vinylpyrrolidone, vinylpyridine, and vinylimidazole. Of these monomers, styrenic monomers, amide monomers, and α,β-unsaturated nitrile compounds are preferable. The proportional content of copolymerizable monomer-derived polymerization units in the acrylic polymer is normally 40 mass% or less, preferably 30 mass% or less, and more preferably 20 mass% or less.

The amount of the binder that is contained in the slurry composition for a secondary battery electrode is not specifically limited but is preferably 0.05 parts by mass or more, more preferably 0.1 parts by mass or more, and even more preferably 0.2 parts by mass or more per 100 parts by mass, and is preferably 5 parts by mass or less, more preferably 3 parts by mass or less, and even more preferably 2 parts by mass or less per 100 parts by mass. When the amount of the binder is in any of the ranges set forth above, it is possible to cause the display of strong peel strength between an electrode mixed material layer and a current collector formed of a metal or the like when an electrode for a secondary battery is formed, to cause the display of weak peel strength between an electrode mixed material layer and a releasable substrate formed of a resin or the like when a releasable substrate-attached electrode mixed material layer is formed, and to cause the display of excellent rate characteristics when a secondary battery is formed.

«Slurry composition solvent»

The solvent of the slurry composition is not specifically limited and may be any of those given as examples of the solvent of the CNT dispersion liquid. In particular, NMP is more preferably used as the solvent of the slurry composition. Although the solvent of the slurry composition and the solvent of the CNT dispersion liquid may be the same or different, it is preferable that these solvents are the same from a viewpoint of maintaining a constant solvent composition throughout the production process of the slurry composition.

<<Dispersant>>

The dispersant is an additive for improving dispersibility of components (CNTs, electrode active material, binder, etc.) of the slurry composition. A known surfactant such as sodium dodecylsulfonate, sodium deoxycholate, sodium cholate, or sodium dodecylbenzenesulfonate or a synthetic polymer or natural polymer that can function as a dispersant, for example, can be used as the dispersant without any specific limitations.

<Closely adhered laminate (secondary battery electrode)>

In one form of the present disclosure, a laminate of a metal film having a surface tension of not less than 400 [mN/m] and not more than 2,000 [mN/m] and a carbon nanotube-containing film formed using the presently disclosed carbon nanotube dispersion liquid is provided. In a laminate such as set forth above, the large surface tension of the metal film results in strong peel strength being imparted between the carbon nanotube-containing film and the metal film, improved close adherence between the carbon nanotube-containing film and the metal film, and the formation of a closely adhered laminate. The closely adhered laminate is a member in which the carbon nanotube-containing film and the metal film are unified and can be used as an electrode of a secondary battery, for example, and preferably as a positive electrode of a lithium ion secondary battery. In this case, the carbon nanotube-containing film corresponds to an electrode mixed material layer and the metal film corresponds to a current collector.

«Metal film»

No specific limitations are placed on the metal film so long as it is a film that is formed from a metal material that can be used as a current collector and that has a surface tension in a specific range. A material having electrical conductivity and electrochemical durability may be used as the metal film. Specifically, the metal film may be iron, copper, aluminum, nickel, stainless steel, titanium, tantalum, gold, platinum, or the like, for example. Of these materials, copper foil is particularly preferable as a metal film that is used as a current collector for a negative electrode. On the other hand, aluminum foil is particularly preferable as a metal film that is used as a current collector for a positive electrode. One of these materials may be used individually, or two or more of these materials may be used in combination in a freely selected ratio. The thickness of the metal film is preferably approximately 0.001 mm to 0.5 mm.
The surface tension of the metal film is 400 [mN/m] or more, preferably 430 [mN/m] or more, and more preferably 450 [mN/m] or more. Moreover, the surface tension of the metal film is 2,000 [mN/m] or less, preferably 1,950 [mN/m] or less, and more preferably 1,900 [mN/m] or less. When a carbon nanotube-containing film that is formed from the presently disclosed carbon nanotube dispersion liquid is used as the carbon nanotube-containing film and when the surface tension of the metal film is in this range, a good carbon nanotube network is formed in the carbon nanotube-containing film, thereby enabling strong adhesive strength with the carbon nanotube-containing film and the formation of a closely adhered laminate. The surface tension can be measured by a method described in the EXAMPLES section, for example.

<<Production method of closely adhered laminate>>

The presently disclosed closely adhered laminate (for example, a secondary battery electrode) is produced, for example, through a step of applying the slurry composition for a secondary battery electrode set forth above onto the metal film (application step) and a step of drying the slurry composition for a secondary battery electrode that has been applied onto the metal film to form a carbon nanotube-containing film (electrode mixed material layer) on the metal film (drying step).

[Application step]

The slurry composition for a secondary battery electrode set forth above can be applied onto the metal film by any commonly known method without any specific limitations. Specific examples of application methods that can be used include doctor blading, dip coating, reverse roll coating, direct roll coating, gravure coating, extrusion coating, and brush coating. During application, the slurry composition for a secondary battery electrode may be applied onto just one side of the metal film or may be applied onto both sides of the metal film. The thickness of the slurry coating on the metal film after application but before drying can be set as appropriate in accordance with the thickness of the carbon nanotube-containing film that is to be obtained after drying.

[Drying step]

The slurry composition for a secondary battery electrode on the metal film can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition for a positive electrode on the current collector in this manner, it is possible to form a carbon nanotube-containing film on the metal film and thereby obtain a laminate (closely adhered laminate) of the metal film and the carbon nanotube-containing film. Such a laminate can be used as a secondary battery electrode that includes a current collector and an electrode mixed material layer.

The carbon nanotube-containing film may be subjected to a pressing process by mold pressing, roll pressing, or the like after the drying step. This pressing process can improve close adherence of the carbon nanotube-containing film and the metal film.

<Peelable laminate (electrode mixed material layer for transfer)>

In another form of the present disclosure, a laminate of a substrate having a surface tension of not less than 20 [mN/m] and not more than 50 [mN/m] and a carbon nanotube-containing film formed using the presently disclosed carbon nanotube dispersion liquid is provided. In a laminate such as set forth above, as a result of a carbon nanotube-containing film that is formed from the presently disclosed carbon nanotube dispersion liquid being used as the carbon nanotube-containing film, the carbon nanotube-containing film maintaining a good CNT network, and the substrate having a small surface tension, there is weak peel strength between the carbon nanotube-containing film and the substrate, and a peelable laminate in which easy releasability is imparted between the carbon nanotube-containing film and the substrate is formed. The peelable laminate can be used as a member constituent in which the carbon nanotube-containing film and the substrate can be peeled apart, such as an electrode mixed material layer for transfer, for example, and preferably a lithium ion secondary battery positive electrode mixed material layer for transfer. In a case in which the peelable laminate is an electrode mixed material layer for transfer, the carbon nanotube-containing film corresponds to an electrode mixed material layer and the substrate corresponds to a releasable substrate. The electrode mixed material layer for transfer can be used to produce a secondary battery electrode that includes an electrode mixed material layer and a substrate or current collector by peeling the substrate from the electrode mixed material layer for transfer and transferring the obtained electrode mixed material layer onto a current collector or by transferring a surface at the electrode mixed material layer-side of the electrode mixed material layer for transfer onto a current collector and then peeling off the substrate.

<<Substrate>>

Although no specific limitations are placed on the substrate so long as it is a substrate having a surface tension that is in a specific range, it is preferable that the substrate is formed from a material that can be used as a releasable substrate. A resin can be used as such a substrate material. Specific examples of the resin include plastics (polyethylene, polypropylene, polystyrene, ABS resin, methacrylic resin, polyvinyl chloride, polyamide, polyacetal, polycarbonate, polybutylene terephthalate, polyethylene terephthalate, polyphenylene oxide, polyamide imide, polyether ether ketone, polyphenylene sulfide, polytetrafluoroethylene, phenolic resin, urea resin, melamine resin, unsaturated polyester resin, epoxy resin, etc.), synthetic rubber (isoprene rubber, butadiene rubber, styrene-butadiene rubber, chloroprene rubber, nitrile rubber, polyisobutylene rubber, ethylene propylene rubber, chlorosulfonated polyethylene, acrylic rubber, fluororubber, epichlorohydrin rubber, urethane rubber, silicone rubber, etc.), and natural rubber. One of these resins may be used individually, or two or more of these resins may be used as a mixture.

The surface tension of the substrate is 20 [mN/m] or more, preferably 21 [mN/m] or more, and more preferably 22 [mN/m] or more. Moreover, the surface tension of the substrate is 50 [mN/m] or less, preferably 49 [mN/m] or less, and more preferably 48 [mN/m] or less. When the surface tension of the substrate is in this range, this results in weak adhesive strength with the carbon nanotube-containing film and enables the formation of a peelable laminate. The surface tension can be measured by a method described in the EXAMPLES section, for example.

<<Production method of peelable laminate>>

The presently disclosed peelable laminate (for example, an electrode mixed material layer for transfer) is produced, for example, through a step of applying the slurry composition for a secondary battery electrode set forth above onto the substrate (application step) and a step of drying the slurry composition for a secondary battery electrode that has been applied onto the substrate to form a carbon nanotube-containing film (electrode mixed material layer) on the substrate (drying step). These steps can be performed in the same manner as in the production method of the closely adhered laminate.

<Secondary battery>

A secondary battery such as a lithium ion secondary battery includes a positive electrode, a negative electrode, an electrolyte solution, and a separator. A secondary battery electrode produced using the presently disclosed carbon nanotube dispersion liquid can be used as the positive electrode, the negative electrode, or both thereof, and can preferably be used as the positive electrode. Such a secondary battery has excellent rate characteristics. The following provides an illustrative description of each member and a production method of the secondary battery using, as an example, a lithium ion secondary battery for a case in which a positive electrode of the lithium ion secondary battery is produced using the presently disclosed carbon nanotube dispersion liquid.

<Negative electrode>

A known negative electrode can be used as the negative electrode. Specifically, the negative electrode may, for example, be a negative electrode formed of a thin sheet of lithium metal or a negative electrode obtained by forming a negative electrode mixed material layer on a current collector.

The current collector may be made of a metal material such as iron, copper, aluminum, nickel, stainless steel, titanium, tantalum, gold, or platinum. The negative electrode mixed material layer may be a layer that contains a negative electrode active material and a binder. Note that any known material can be used as the binder without any specific limitations.

<Electrolyte solution>

The electrolyte solution is normally an organic electrolyte solution obtained by dissolving a supporting electrolyte in an organic solvent. In the case of a lithium ion secondary battery, a lithium salt may, for example, be used as the supporting electrolyte. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as n-propyl propionate (PP), γ-butyrolactone, and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution can be adjusted as appropriate. Furthermore, known additives may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

<Production method of secondary battery>

The secondary battery such as a lithium ion secondary battery can be produced by, for example, stacking the positive electrode and the negative electrode with the separator in-between, rolling or folding the resultant laminate as necessary in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

(Method of producing carbon nanotube dispersion liquid)

The present disclosure provides a method of producing a carbon nanotube dispersion liquid. In form A, the presently disclosed method of producing a carbon nanotube dispersion liquid includes the following steps:

(A-i) a step of performing dispersing treatment of a mixture of carbon nanotubes and a solvent to obtain a carbon nanotube dispersion liquid;

(A-ii) a step of measuring the obtained carbon nanotube dispersion liquid by ultra-small-angle X-ray scattering; and

(A-iii) a step of evaluating the carbon nanotube dispersion liquid as suitable in a case in which the carbon nanotube dispersion liquid satisfies a condition 1 that the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 1.

According to this production method, the condition that the fractal dimension measured as described above is not less than 3 and not more than 4 makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Moreover, in the presently disclosed method of producing a carbon nanotube dispersion liquid, the suitability evaluation condition in step (A-iii) may further include a condition that CNT persistence length is 100 nm or more in a wavenumber range of 0.05 (1/angstrom) to 0.01 (1/angstrom). In other words, step (A-iii) is preferably performed by evaluating the carbon nanotube dispersion liquid as suitable in a case in which the carbon nanotube dispersion liquid satisfies a condition 2 that the carbon nanotube dispersion liquid has a fractal dimension of not less than 3 and not more than 4 in a wavenumber range of 0.001 (1/angstrom) to 0.3 (1/angstrom) and has a CNT persistence length of 100 nm or more in a wavenumber range of 0.05 (1/angstrom) to 0.01 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 2.

According to this production method, the further addition of a condition that the CNT persistence length measured as described above is 100 nm or more makes it possible to obtain a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree.

The presently disclosed method of producing a carbon nanotube dispersion liquid may further include the following steps:

(A-iv) performing further dispersing treatment of the carbon nanotube dispersion liquid in a case in which the carbon nanotube dispersion liquid is evaluated as unsuitable;

(A-v) reperforming steps (A-ii) and (A-iii) to evaluate whether or not the carbon nanotube dispersion liquid is suitable; and

(A-vi) optionally repeating steps (A-iv) and (A-v).

Note that the carbon nanotubes and the solvent that are used in the presently disclosed method of producing a carbon nanotube dispersion liquid and proportional contents in the mixture that is subjected to the dispersing treatment (same as proportional contents in the obtained carbon nanotube dispersion liquid) can be those that were previously described. Moreover, details of the dispersing treatment in steps (A-i) and (A-iv) are as previously described. Furthermore, details of the ultra-small-angle X-ray scattering measurement in step (A-iii) are as previously described.

A carbon nanotube dispersion liquid that is evaluated as suitable in step (A-iii) or (A-v) may be used in that form or may be used after further dispersing treatment to the extent that the carbon nanotube dispersion liquid satisfies the conditions relating to fractal dimension and/or CNT persistence length stipulated in step (A-iii).

In form B1, the presently disclosed method of producing a carbon nanotube dispersion liquid includes the following steps:

(B1-i) a step of performing dispersing treatment of a mixture of single-walled carbon nanotubes having a G/D ratio of 5 or less and a solvent to obtain a carbon nanotube dispersion liquid;

(B1-ii) a step of acquiring an image of the obtained carbon nanotube dispersion liquid through imaging of the carbon nanotube dispersion liquid at a concentration of 0.1 wt%; and

(B1-iii) a step of evaluating the carbon nanotube dispersion liquid as suitable in a case in which the carbon nanotube dispersion liquid satisfies a condition 3 that an area fraction occupied by carbon nanotubes in the acquired image is 55% or less, and evaluating the carbon nanotube dispersion liquid as unsuitable in a case in which the carbon nanotube dispersion liquid does not satisfy the condition 3.

According to this production method, the condition that the area fraction of carbon nanotubes measured as described above is 55% or less in a case in which a carbon nanotube dispersion liquid is produced using single-walled carbon nanotubes having a G/D ratio of 5 or less as carbon nanotubes makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Moreover, in a case in which a carbon nanotube dispersion liquid is produced using single-walled carbon nanotubes having a G/D ratio of 5 or less as carbon nanotubes, the suitability evaluation condition in step (B1-iii) of the presently disclosed method of producing a carbon nanotube dispersion liquid may further include a condition that not fewer than 5 and not more than 100 carbon nanotubes having an aspect ratio of 10 or more are included per area equivalent to 26,000 $\mu m^2$ in the image. In other words, step (B1-iii) is preferably performed by evaluating the carbon nanotube dispersion liquid as suitable in a case in which the carbon nanotube dispersion liquid satisfies a condition 4 that an area fraction occupied by carbon nanotubes in the acquired image is 55% or less and that not fewer than 5 and not more than 100 carbon nanotubes having an aspect ratio of 10 or more are included per area equivalent to 26,000 $\mu m^2$ in the image, and evaluating the carbon nanotube dispersion liquid as unsuitable in a case in which the carbon nanotube dispersion liquid does not satisfy the condition 4.

According to this production method, the further addition of a condition that not fewer than 5 and not more than 100 carbon nanotubes having an aspect ratio of 10 or more are included per area equivalent to 26,000 $\mu m^2$ in the image makes it possible to obtain a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree.

In form B2, the presently disclosed method of producing a carbon nanotube dispersion liquid includes the following steps:

(B2-i) a step of performing dispersing treatment of a mixture of single-walled carbon nanotubes having a G/D ratio of 10 or more and a solvent to obtain a carbon nanotube dispersion liquid;

(B2-ii) a step of acquiring an image of the obtained carbon nanotube dispersion liquid through imaging of the carbon nanotube dispersion liquid at a concentration of 0.1 wt%; and

(B2-iii) a step of evaluating the carbon nanotube dispersion liquid as suitable in a case in which the carbon nanotube dispersion liquid satisfies a condition 5 that an area fraction occupied by carbon nanotubes in the acquired image is 75% or more, and evaluating the carbon nanotube dispersion liquid as unsuitable in a case in which the carbon nanotube dispersion liquid does not satisfy the condition 5.

According to this production method, the condition that an area fraction of carbon nanotubes measured as described above is 75% or more in a case in which a carbon nanotube dispersion liquid is produced using single-walled carbon nanotubes having a G/D ratio of 10 or more as carbon nanotubes makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

In forms B1 and B2, the presently disclosed method of producing a carbon nanotube dispersion liquid may further include the following steps:

(B-iv) performing further dispersing treatment of the carbon nanotube dispersion liquid in a case in which the carbon nanotube dispersion liquid is evaluated as unsuitable;

(B-v) reperforming steps (B1-ii) and (B1-iii) in the case of form B1 or steps (B2-ii) and (B2-iii) in the case of form B2 to evaluate whether or not the carbon nanotube dispersion liquid is suitable; and
(B-vi) optionally repeating steps (B-iv) and (B-v).

Note that the carbon nanotubes and the solvent that are used in the presently disclosed method of producing a carbon nanotube dispersion liquid and proportional contents in the mixture that is subjected to the dispersing treatment (same as proportional contents in the obtained carbon nanotube dispersion liquid) can be those that were previously described. Moreover, details of the dispersing treatment in steps (B1-i), (B2-i), and (B-iv) are as previously described. Furthermore, details of acquisition of an image from a carbon nanotube dispersion liquid and analysis of the image are as previously described.

A carbon nanotube dispersion liquid that is evaluated as suitable in step (B 1-iii), (B2-iii), or (B-v) may be used in that form or may be used after further dispersing treatment to the extent that the carbon nanotube dispersion liquid satisfies the condition relating to area fraction and/or number of carbon nanotubes having an aspect ratio in a specific range that is stipulated in step (B 1-iii) or (B2-iii).

In form C, the presently disclosed method of producing a carbon nanotube dispersion liquid includes the following steps:

(i) a step of performing dispersing treatment of a mixture of carbon nanotubes and a solvent to obtain a carbon nanotube dispersion liquid;
(ii) a step of acquiring an image through imaging of the obtained carbon nanotube dispersion liquid; and
(iii) a step of evaluating the carbon nanotube dispersion liquid as suitable in a case in which an area fraction occupied by carbon nanotubes in the acquired image satisfies a condition A, and evaluating the carbon nanotube dispersion liquid as unsuitable in a case in which the area fraction occupied by carbon nanotubes in the acquired image does not satisfy the condition A.

The condition A includes the area fraction of carbon nanotubes being 70% or less. As a result of the condition that the area fraction of carbon nanotubes measured as described above is 70% or less, it is possible to achieve good film formation properties during carbon film formation by using a CNT dispersion liquid that is obtained by this production method. Moreover, the fact that good film formation properties can be achieved using a carbon nanotube dispersion liquid produced by this production method can be judged at an earlier stage than when film formation is actually performed.

Furthermore, by setting the condition A as a condition that the area fraction occupied by carbon nanotubes in the acquired image is in a specific range, the method of producing a carbon nanotube dispersion liquid set forth above can be used for producing a carbon film having a porosity in a desired range. For example, by setting the condition A as a condition that the area fraction occupied by carbon nanotubes in the acquired image is not less than 20% and not more than 70%, and preferably not less than 55% and not more than 70%, it is possible to obtain a CNT dispersion liquid that makes it possible to obtain a carbon film having a high porosity of not less than 60% and not more than 99%, for example, which is useful in battery applications. Moreover, the fact that a high porosity of not less than 60% and not more than 99%, for example, can be achieved by using a carbon nanotube dispersion liquid produced by this production method can be judged at an earlier stage than when film formation is actually performed. Correlation between the area fraction of a CNT dispersion liquid and the porosity of an obtained carbon film is as previously described.

The presently disclosed method of producing a carbon nanotube dispersion liquid may further include the following steps:

(iv) performing further dispersing treatment of the carbon nanotube dispersion liquid in a case in which the carbon nanotube dispersion liquid is evaluated as unsuitable;
(v) reperforming steps (ii) and (iii) to evaluate whether or not the carbon nanotube dispersion liquid is suitable; and
(vi) repeating steps (iv) and (v).

Note that the carbon nanotubes and the solvent that are used in the presently disclosed method of producing a carbon nanotube dispersion liquid and proportional contents in the mixture that is subjected to the dispersing treatment (same as proportional contents in the obtained carbon nanotube dispersion liquid) can be those that were previously described. Moreover, details of the dispersing treatment in steps (i) and (iv) are as previously described. Furthermore, details of area fraction measurement in step (iii) are as previously described.

A carbon nanotube dispersion liquid that is evaluated as suitable in step (iii) or (v) may be used in that form or may be used after further dispersing treatment to the extent that the carbon nanotube dispersion liquid satisfies the condition relating to area fraction stipulated in step (iii).

The methods of producing a carbon nanotube dispersion liquid of forms B1, B2, and C further include:

a step of measuring the obtained carbon nanotube dispersion liquid by ultra-small-angle X-ray scattering; and

a step of evaluating the carbon nanotube dispersion liquid as suitable in a case in which the carbon nanotube dispersion liquid satisfies a condition 1 that the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 1.

According to this production method, the condition that the fractal dimension measured as described above is not less than 3 and not more than 4 makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics, or that enables the achievement of good film formation properties during carbon film formation.

The methods of producing a carbon nanotube dispersion liquid of forms B1, B2, and C preferably further include:

a step of measuring the obtained carbon nanotube dispersion liquid by ultra-small-angle X-ray scattering; and
a step of evaluating the carbon nanotube dispersion liquid as suitable in a case in which the carbon nanotube dispersion liquid satisfies a condition 2 that the carbon nanotube dispersion liquid has a fractal dimension of not less than 3 and not more than 4 in a wavenumber range of not less than 0.001 (1/angstrom) and not more than 0.3 (1/angstrom) and has a CNT persistence length of 100 nm or more in a wavenumber range of not less than 0.05 (1/angstrom) and not more than 0.01 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 2.

According to this production method, the further addition of a condition that the CNT persistence length measured as described above is 100 nm or more makes it possible to obtain a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree, or that enables the achievement of good film formation properties during carbon film formation.

In forms B1, B2, and C, the presently disclosed method of producing a carbon nanotube dispersion liquid may further include the following steps:

($\alpha$) a step of measuring the obtained carbon nanotube dispersion liquid by ultra-small-angle X-ray scattering; and
($\beta$) a step of evaluating the carbon nanotube dispersion liquid as suitable in a case in which the carbon nanotube dispersion liquid satisfies a condition 1 that the carbon nanotube dispersion liquid has a fractal dimension of not less than 3 and not more than 4 in a wavenumber range of 0.001 (1/angstrom) to 0.3 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 1.

According to this production method, the condition that the fractal dimension measured as described above is not less than 3 and not more than 4 makes it possible to obtain a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics, or that enables the achievement of good film formation properties during carbon film formation.

Moreover, in the presently disclosed method of producing a carbon nanotube dispersion liquid, the suitability evaluation condition in step ($\beta$) may further include a condition that CNT persistence length in a wavenumber range of 0.05 (1/angstrom) to 0.01 (1/angstrom) is 100 nm or more. In other words, step ($\beta$) is preferably performed by evaluating the carbon nanotube dispersion liquid as suitable in a case in which the carbon nanotube dispersion liquid satisfies a condition 2 that the carbon nanotube dispersion liquid has a fractal dimension of not less than 3 and not more than 4 in a wavenumber range of 0.001 (1/angstrom) to 0.3 (1/angstrom) and has a CNT persistence length of 100 nm or more in a wavenumber range of 0.05 (1/angstrom) to 0.01 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 2.

According to this production method, the further addition of a condition that the CNT persistence length measured as described above is 100 nm or more makes it possible to obtain a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree, or that enables the achievement of good film formation properties during carbon film formation.

(Method of evaluating carbon nanotube dispersion liquid)

The present specification discloses a method of evaluating a carbon nanotube dispersion liquid. In form A, the method of evaluating a carbon nanotube dispersion liquid includes the following steps:

(a) a step of measuring an obtained carbon nanotube dispersion liquid by ultra-small-angle X-ray scattering; and
(b) a step of evaluating the carbon nanotube dispersion liquid as suitable in a case in which the carbon nanotube dispersion liquid satisfies a condition 1 that the carbon nanotube dispersion liquid has a fractal dimension of not less than 3 and not more than 4 in a wavenumber range of 0.001 (1/angstrom) to 0.3 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 1.

According to this evaluation method, the condition that the fractal dimension measured as described above is not less than 3 and not more than 4 makes it possible to select a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Moreover, in the method of evaluating a carbon nanotube dispersion liquid, the suitability evaluation condition in step (b) may further include a condition that CNT persistence length in a wavenumber range of 0.05 (1/angstrom) to 0.01 (1/angstrom) is 100 nm or more. In other words, step (b) may be performed by evaluating the carbon nanotube dispersion liquid as suitable in a case in which the carbon nanotube dispersion liquid satisfies a condition 2 that the carbon nanotube dispersion liquid has a fractal dimension of not less than 3 and not more than 4 in a wavenumber range of 0.001 (1/angstrom) to 0.3 (1/angstrom) and has a CNT persistence length of 100 nm or more in a wavenumber range of 0.05 (1/angstrom) to 0.01 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 2.

According to this evaluation method, the further addition of a condition that the CNT persistence length measured as described above is 100 nm or more makes it possible to select a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree.

Details of the ultra-small-angle X-ray scattering measurement in step (b) are as previously described.

In form B1, the method of evaluating a carbon nanotube dispersion liquid is used to evaluate a carbon nanotube dispersion liquid that contains single-walled carbon nanotubes having a G/D ratio of 5 or less and a solvent and includes the following steps:

(a) a step of acquiring an image of an obtained carbon nanotube dispersion liquid through imaging of the carbon nanotube dispersion liquid at a concentration of 0.1 wt%; and
(b) a step of evaluating the carbon nanotube dispersion liquid as suitable in a case in which the carbon nanotube dispersion liquid satisfies a condition 1 that an area fraction occupied by carbon nanotubes in the acquired image is 55% or less, and evaluating the carbon nanotube dispersion liquid as unsuitable in a case in which the carbon nanotube dispersion liquid does not satisfy the condition 1.

According to this evaluation method, the condition that the area fraction of carbon nanotubes measured as described above is 55% or less in a case in which a carbon nanotube dispersion liquid containing single-walled carbon nanotubes having a G/D ratio of 5 or less and a solvent is used makes it possible to select a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

In the method of evaluating a carbon nanotube dispersion liquid, the suitability evaluation condition in step (b) may further include a condition that not fewer than 5 and not more than 100 carbon nanotubes having an aspect ratio of 10 or more are included per area equivalent to 26,000 $\mu$m$^2$ in the image. In other words, step (b) may be performed by evaluating the carbon nanotube dispersion liquid as suitable in a case in which the carbon nanotube dispersion liquid satisfies a condition 2 that an area fraction occupied by carbon nanotubes in the acquired image is 55% or less and that not fewer than 5 and not more than 100 carbon nanotubes having an aspect ratio of 10 or more are included per area equivalent to 26,000 $\mu$m$^2$ in the image, and evaluating the carbon nanotube dispersion liquid as unsuitable in a case in which the carbon nanotube dispersion liquid does not satisfy the condition 2.

According to this production method, the further addition of a condition that not fewer than 5 and not more than 100 carbon nanotubes having an aspect ratio of 10 or more are included per area equivalent to 26,000 $\mu$m$^2$ in the image makes it possible to select a carbon nanotube dispersion liquid that can cause an electrode for a secondary battery to display strong peel strength between an electrode mixed material layer and a current collector formed of a metal or the like to an even greater degree, that can cause a releasable substrate-attached electrode mixed material layer to display weak peel strength between an electrode mixed material layer and a releasable substrate formed of a resin or the like to an even greater degree, and that can cause a secondary battery to display excellent rate characteristics to an even greater degree.

In form B2, the method of evaluating a carbon nanotube dispersion liquid is used to evaluate a carbon nanotube dispersion liquid that contains single-walled carbon nanotubes having a G/D ratio of 10 or more and a solvent and includes the following steps:

> (a) a step of acquiring an image of an obtained carbon nanotube dispersion liquid through imaging of the carbon nanotube dispersion liquid at a concentration of 0.1 wt%; and
> (b) a step of evaluating the carbon nanotube dispersion liquid as suitable in a case in which the carbon nanotube dispersion liquid satisfies a condition 3 that an area fraction occupied by carbon nanotubes in the acquired image is 75% or more, and evaluating the carbon nanotube dispersion liquid as unsuitable in a case in which the carbon nanotube dispersion liquid does not satisfy the condition 3.

According to this evaluation method, the condition that the area fraction of carbon nanotubes measured as described above is 75% or more in a case in which a carbon nanotube dispersion liquid containing single-walled carbon nanotubes having a G/D ratio of 10 or more and a solvent is used makes it possible to select a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Details of acquisition of an image from a carbon nanotube dispersion liquid and analysis of the image are as previously described.

In form C, the method of evaluating a carbon nanotube dispersion liquid includes the following steps:

> (a) a step of acquiring an image through imaging of an obtained carbon nanotube dispersion liquid; and
> (b) a step of evaluating the carbon nanotube dispersion liquid as suitable in a case in which an area fraction occupied by carbon nanotubes in the acquired image satisfies a condition A, and evaluating the carbon nanotube dispersion liquid as unsuitable in a case in which the area fraction occupied by carbon nanotubes in the acquired image does not satisfy the condition A.

The condition A includes the area fraction of carbon nanotubes being 70% or less. A carbon nanotube dispersion liquid that is evaluated as suitable by this evaluation method can be used for forming a carbon film. According to this evaluation method, the condition that the area fraction of carbon nanotubes measured as described above is 70% or less makes it possible to achieve good film formation properties during carbon film formation by using a CNT dispersion liquid that has been selected by this evaluation method. Moreover, the fact that good film formation properties can be achieved using a carbon nanotube dispersion liquid selected by this evaluation method can be judged at an earlier stage than when film formation is actually performed. Details of area fraction measurement in step (b) are as previously described.

Furthermore, by setting the condition A as a condition that the area fraction occupied by carbon nanotubes in the acquired image is in a specific range, the method of evaluating a carbon nanotube dispersion liquid set forth above can be used for selecting a carbon film having a porosity in a desired range. For example, by setting the condition A as a condition that the area fraction occupied by carbon nanotubes in the acquired image is not less than 20% and not more than 70%, and preferably not less than 55% and not more than 70%, it is possible to obtain a carbon film having a high porosity of not less than 60% and not more than 99%, for example, by using a CNT dispersion liquid that has been selected by this evaluation method. Moreover, the fact that a high porosity of not less than 60% and not more than 99%, for example, can be achieved by using a carbon nanotube dispersion liquid selected by this evaluation method can be judged at an earlier stage than when film formation is actually performed. Correlation between the area fraction of a CNT dispersion liquid and the porosity of an obtained carbon film is as previously described.

The method of evaluating a carbon nanotube dispersion liquid of form A may be combined with the method of evaluating a carbon nanotube dispersion liquid of any one of forms B1, B2, and C.

(Method of producing carbon film)

The present disclosure also provides a method of producing a carbon film. In one form, the presently disclosed method of producing a carbon film includes a step of removing solvent from a CNT dispersion liquid for which the above-described area fraction of CNTs is 70% or less to form a carbon film. According to this production method, it is possible to produce a carbon film with good film formation properties by using a CNT dispersion liquid for which the area fraction of CNTs is 70% or less.

Moreover, by using, as the CNT dispersion liquid in the method of producing a carbon film described above, a CNT dispersion liquid for which the area fraction occupied by CNTs in an image acquired through imaging of the CNT dispersion liquid is in a specific range, it is possible to obtain a carbon film having a porosity in a desired range. For example, by using a CNT dispersion liquid for which the area fraction measured as described above is in a range of not less than 20% and not more than 70%, and preferably in a range of not less than 55% and not more than 70%, it is possible to obtain a carbon film having a high porosity of not less than 60% and not more than 99%, for example. Correlation between the area fraction of a CNT dispersion liquid and the porosity of an obtained carbon film is as previously described.

In another form, the presently disclosed method of producing a carbon film comprises removing solvent from a CNT dispersion liquid obtained by the method of producing a CNT dispersion liquid set forth above that has been selected using a condition that the area fraction of CNTs is 70% or less to form a carbon film. According to this production method, it is possible to produce a carbon film with good film formation properties by using a CNT dispersion liquid that has been selected using a condition that the area fraction of CNTs of 70% or less.

Moreover, by using, as the CNT dispersion liquid in the method of producing a carbon film described above, a CNT dispersion liquid that has been selected using a condition that the area fraction occupied by CNTs in an image acquired through imaging of the CNT dispersion liquid is in a specific range, it is possible to obtain a carbon film having a porosity in a desired range. For example, by using a CNT dispersion liquid that has been selected using a condition that the area fraction measured as described above is in a range of not less than 20% and not more than 70%, and preferably in a range of not less than 55% and not more than 70%, it is possible to obtain a carbon film having a high porosity of not less than 60% and not more than 99%, for example. Correlation between the area fraction of a CNT dispersion liquid and the porosity of an obtained carbon film is as previously described.

<Formation of carbon film through solvent removal>

The step of removing solvent from the CNT dispersion liquid to form a carbon film can be performed using either of the following methods (A) or (B), for example.

(A) A method in which the CNT dispersion liquid is applied onto a film formation substrate and the applied CNT dispersion liquid is subsequently dried
(B) A method in which the CNT dispersion liquid is filtered using a porous film formation substrate and the resultant filtration residue is dried

Note that the carbon film obtained in methods (A) and (B) corresponds to a product obtained by peeling the previously described dried product from the previously described growth substrate.

The use of a CNT dispersion liquid having an area fraction of CNTs of 70% or less for film formation in the presently disclosed method of producing a carbon film is presumed to make it possible to obtain a porous structure having a highly developed network, thereby resulting in a self-supporting carbon film being obtained.

[Film formation substrate]

The film formation substrate that is used is not specifically limited and a known substrate may be used in accordance with the intended use of the produced carbon film.

Specific examples of the film formation substrate onto which the CNT dispersion liquid is applied in method (A) include a resin substrate, a glass substrate, and a metal substrate. Examples of resin substrates that can be used include substrates made from polyethylene terephthalate (PET), polyethylene naphthalate (PEN), polytetrafluoroethylene (PTFE), polyimides, polyphenylene sulfide, aramids, polypropylene, polyethylene, polylactic acid, polyvinyl chloride, polycarbonates, polymethyl methacrylate, alicyclic acrylic resins, cycloolefin resins, and triacetyl cellulose. Examples of glass substrates that can be used include a substrate made from normal soda glass. Examples of metal substrates that can be used include substrates formed of aluminum, copper, and the like.

Examples of the film formation substrate used to filter the CNT dispersion liquid in method (B) include filter paper and porous sheets formed of cellulose, nitrocellulose, alumina, resins, and the like. Moreover, a membrane filter, for example, can be used as the film formation substrate.

[Application]

In method (A), the CNT dispersion liquid can be applied onto the film formation substrate by any commonly known application method. Specific examples of application methods that can be used include dipping, roll coating, gravure coating, knife coating, air knife coating, roll knife coating, die coating, screen printing, spray coating, and gravure offset.

[Filtration]

In method (B), the CNT dispersion liquid can be filtered by the film formation substrate by any commonly known filtration method. Specific examples of filtration methods that can be used include natural filtration, vacuum filtration, pressure filtration, and centrifugal filtration.

[Drying]

Drying of the CNT dispersion liquid applied onto the film formation substrate in method (A) or of the filtration residue obtained in method (B) may be performed by a commonly known drying method. Examples of drying methods that can be used include hot-air drying, vacuum drying, hot-roll drying, and infrared irradiation. Although no specific limitations are placed on the drying temperature and time, the drying temperature is normally from room temperature to 200°C and the drying time is normally from 0.1 minutes to 150 minutes.

<After-treatment of carbon film>

In the presently disclosed method of producing a carbon film, the carbon film that has been formed in the film formation step may optionally be washed.

Washing of the carbon film can be performed by using a solvent to wash out impurities remaining in the carbon film. No specific limitations are placed on the solvent used in washing. For example, any of the previously described solvents that can be used as the solvent of the CNT dispersion liquid may be used, with use of the same solvent as the solvent of the CNT dispersion liquid being preferable. Contacting of the carbon film and the solvent may be performed by immersing the carbon film in the solvent or by applying the solvent onto the carbon film. Moreover, the carbon film may be dried by a known method after the washing.

Furthermore, the presently disclosed method of producing a carbon film may optionally include subjecting the carbon film formed in the film formation step to pressing in order to further increase the density of the carbon film. From a viewpoint of reducing deterioration of properties due to damage or destruction of the fibrous carbon nanostructures, it is preferable that pressing is performed with a pressing pressure of less than 3 MPa, and more preferable that pressing is not performed.

(Carbon film)

A carbon film that is obtained by the presently disclosed method of producing a carbon film contains the CNTs contained in the above-described CNT dispersion liquid for which the area fraction of CNTs is 70% or less. As a result of the carbon film containing the CNTs contained in the CNT dispersion liquid for which the area fraction of CNTs is 70% or less, the carbon film is formed in a good condition, and is a self-supporting carbon film having high electrical conductivity and porosity.

Moreover, the carbon film preferably contains CNTs contained in the above-described CNT dispersion liquid for which the area fraction of CNTs is in a specific range, and this makes it possible for the carbon film to have a porosity that is in a desired range. For example, in a case in which the carbon film contains CNTs contained in the above-described CNT dispersion liquid for which the area fraction of CNTs is in a range of not less than 20% and not more than 70%, and preferably in a range of not less than 55% and not more than 70%, the carbon film can have a high porosity of not less than 60% and not more than 99%, for example. Correlation between the area fraction of a CNT dispersion liquid and the porosity of an obtained carbon film is as previously described.

(Application of carbon film)

A carbon film that is obtained by the presently disclosed method of producing a carbon film can be used as an electrically conductive sheet (for example, a conductive film for a solar cell or a touch panel), a heat conductive sheet, an electromagnetic wave absorbing sheet, a sheet for a battery, or the like, for example, based on characteristics of the CNTs such as electrical conductivity, thermal conductivity, electromagnetic wave shielding performance, mechanical characteristics, and high porosity.

EXAMPLES

The following provides a more specific description of the present disclosure based on examples. However, the present disclosure is not limited to the following examples. In the following description, "%" and "parts" used in expressing quantities are by mass, unless otherwise specified.
Note that various measurements and evaluations in the examples and comparative examples were performed as follows.

<Fourier-transform infrared spectroscopy (FT-IR)>

With respect to 10 mg of a CNT assembly, 100 g of water containing sodium dodecylbenzenesulfonate as a surfactant in a concentration of 1 mass% was added, and an ultrasonic bath was used to perform 1 minute of stirring at 45 Hz to obtain 100 mL of a dispersion liquid of the CNT assembly.
The dispersion liquid prepared in this manner was diluted two-fold using a solvent having the same composition. The diluted dispersion liquid was dripped onto and dried on a silicon substrate, and then a Fourier-transform infrared spectrophotometer was used to measure the plasmon effective length through a plasmon far infrared (FIR) resonance peak.

<Preparation of pore distribution curve (CNT assembly)>

A BELSORP-mini II (produced by MicrotracBEL Corp.) was used to measure an adsorption isotherm with respect to at least 10 mg of a CNT assembly using liquid nitrogen at 77 K (adsorption equilibrium time taken to be 500 seconds). The CNT assembly was subjected to 12 hours of vacuum degassing at 100°C as pretreatment. A pore distribution curve for the sample was determined by the BJH method from the amount of absorption on the adsorption isotherm.
In preparation of the pore distribution curve for the CNT assembly, the measurement range for pore diameter was set as not less than 1 nm and less than 400 nm.

<Two-dimensional spatial frequency spectrum analysis of electron microscope image>

For a CNT assembly (CNT_A) that was used in Examples 1 and 3 and Comparative Example 1, 0.01 mg of the CNT assembly was placed on a carbon tape and was blown by a blower so as to remove excess CNTs and prepare a sample. The sample was observed by a field emission scanning electron microscope at ×10,000, and 10 photographs were taken in an arbitrarily extracted 1 cm-square viewing field. The 10 electron microscope images that had been taken were then each subjected to fast Fourier-transform processing to obtain a two-dimensional spatial frequency spectrum. Each of obtained two-dimensional spatial frequency spectra was subjected to binarization processing, the position of a peak appearing at an outermost side (high frequency side) was determined, and an average value of the peak position was obtained. Note that in the binarization processing, values obtained through fast Fourier-transform processing were taken to be 1 in the case of values of more than 0.75 and were taken to be zero in the case of other values. FIG. 5 is one of the 10 images that were acquired with respect to the CNT assembly described above.

<Ultra-small-angle X-ray scattering measurement>

A produced dispersion liquid was placed inside a measurement capillary to obtain a test sample. The obtained test sample was subjected to ultra-small-angle X-ray scattering measurement under the following conditions to obtain a scattering image.

[Measurement conditions]

X-ray source: Cu K-$\alpha$
Tube voltage: 45 kV
Tube current: 200 mA
Scan type: $2\theta$
Scan mode: 0D (continuous)
Scan range: -0.01 to 0.5
Scan step: 0.0006
Scan speed: 0.034°/min
Optical system: Primary beam: Standard,
Incident optical unit: Ge(220)
Light receiving optical unit 1: U-SAXS
CBO type: Type 2
Selection slit: PB
ISS: Seller slit open
q (wavenumber) range: 0.0004 (1/angstrom) to 0.3 (1/angstrom)
Detector: HyPix3000

<Calculation of fractal dimension and CNT persistence length through data processing of data obtained by ultra-small-angle X-ray scattering measurement>

A scattering profile was obtained for the scattering image obtained by ultra-small-angle X-ray scattering measurement as described above. The obtained scattering profile was fitted to the Beaucage equation expressed by general equation (I) in a wavenumber range of 0.0004 (1/angstrom) to 0.3 (1/angstrom) using Igor Pro 8 (produced by WaveMetrics) as analysis software, and then the fractal dimension $P_i$ and CNT persistence length $R_{g,i}$ (angstroms) at each hierarchy i were determined. Note that the number of hierarchies was set as N = 3. Here, the fitting indicates an error between the measured scattering profile and a calculated value.
The fitting was performed such that the value of

$$[\text{Math. 2}]$$

$$\sqrt{\chi^2/N}$$

was 5 or less. When this value is 5 or less, good fitting can be considered to have been performed. The values of the fractal dimension $P_3$ and the CNT persistence length $R_{g,2}$ are shown in Table 1.

<G/D ratio of CNTs>

A microscopic laser Raman spectrophotometer (Nicolet Almega XR produced by Thermo Fisher Scientific) was used to measure a Raman spectrum of CNTs. In the obtained Raman spectrum, the intensity of a G band peak observed near 1590 cm[-1] and the intensity of a D band peak observed near 1340 cm[-1] were determined, and then the G/D ratio was calculated.

<CNT area fraction (jet milled CNT dispersion liquid)>

A CNT dispersion liquid that had been produced using a jet mill was adjusted to a concentration of 0.1 wt% with a solvent (same solvent as used in the CNT dispersion liquid) and was then dripped onto slide glass at 5 spots in an amount of 1 $\mu$L at each spot. The dripped CNT dispersion liquid was observed using a digital microscope (produced by Keyence Corporation; product name: VHX-900) at $\times$500 magnification, and an image thereof was acquired. The acquired image was subjected to binarization processing using image processing software included in the same instrument, and then the area of aggregates of fibrous carbon nanostructures in an area equivalent to 26,000 $\mu$m$^2$ in the image was measured, and the total area (Sc) of aggregates of fibrous carbon nanostructures was determined. The determined value was divided by the observation field area (St) to determine an area fraction (S) of aggregates of fibrous carbon nanostructures.

$$S = (Sc/St) \times 100 (\%)$$

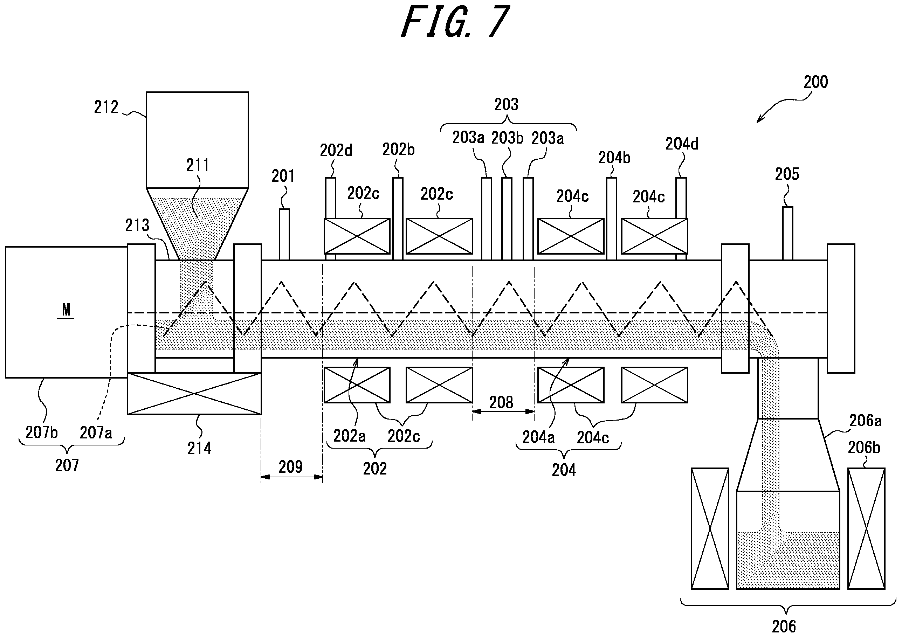

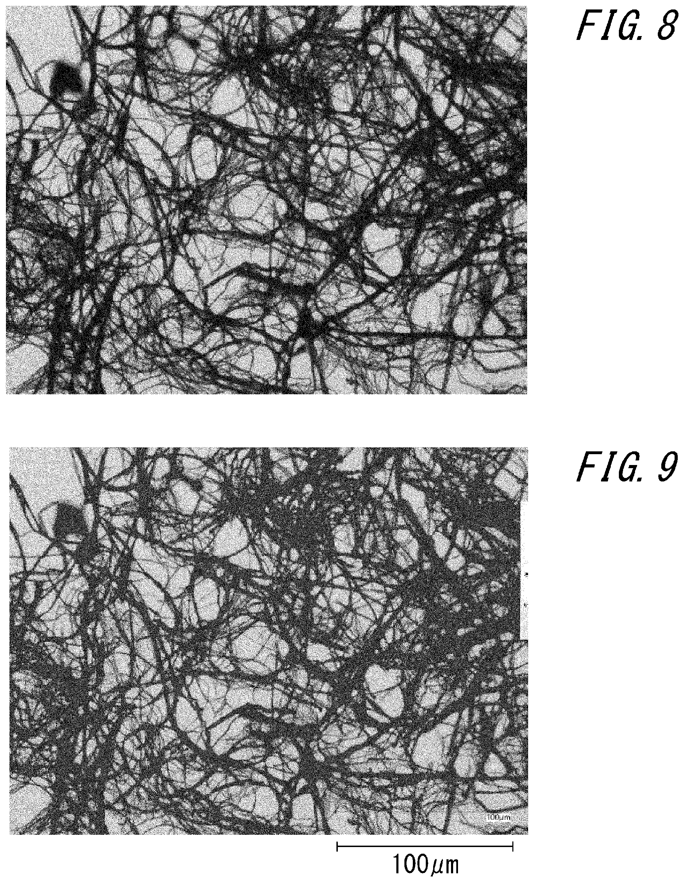

An average of the area fractions (S) determined at the respective spots was taken to be the finally determined area fraction of CNTs. FIG. 7 presents one example of an image obtained from a CNT dispersion liquid using a digital microscope. FIG. 8 presents an image after binarization processing.

<Number of CNTs having aspect ratio in specific range>

A binarized image obtained as described above was used to measure the diameter and length of every carbon nanotube in an area equivalent to 26,000 $\mu$m$^2$ in the binarized image, calculate the aspect ratio (ratio of diameter and length; i.e., length/diameter) for each of these carbon nanotubes, and determine the number of CNTs having an aspect ratio in a specific range.

<CNT area fraction (high-shear stirred CNT dispersion liquid)>

A CNT dispersion liquid that had been produced by high-shear stirring was adjusted to a concentration of 0.1 wt% with a solvent (same solvent as used in the CNT dispersion liquid), and then 10 $\mu$L of the concentration-adjusted CNT dispersion liquid was applied onto slide glass in a 20 mm $\times$ 50 mm region. A digital microscope (produced by Keyence Corporation; product name: VHX-7000) was used to observe 5 spots in the coated region at $\times$500 magnification and to acquire an image. CNT regions (black) were extracted using automatic area calculation (particle counting) software included in the same instrument.

The area fraction of CNTs in the CNT dispersion liquid was determined by:

$$(CNT \text{ regions } [\mu m^2]/\text{Total area of image region } [\mu m^2]) \times 100$$

An average of the area fractions determined at the respective spots was taken to be the finally determined area fraction of CNTs.

<Surface tension>

A water droplet was dripped onto a measurement substrate using a contact angle meter B100 (produced by Asumi Giken), and then the surface tension was calculated using image analysis software included in the same instrument. The measurement substrate was cut out as 10 cm-square to obtain a test specimen.

<Mechanical strength of positive electrode (peel strength of positive electrode mixed material layer with respect to current collector)>

A produced positive electrode was cut out as a rectangle of 100 mm in length and 10 mm in width to obtain a test specimen. The test specimen was placed with the surface of the positive electrode mixed material layer facing downward, and cellophane tape was affixed to the surface of the positive electrode mixed material layer. Tape prescribed by JIS Z1522 was used as the cellophane tape. Moreover, the cellophane tape was fixed to a test stage in advance. Thereafter, one end of the current collector was pulled vertically upward at a pulling speed of 50 mm/min to peel off the current collector, and the stress during this peeling was measured. Three measurements were made in this manner, an average value of the measurements was determined, and the average value was evaluated by the following standard as the peel strength of the positive electrode mixed material layer with respect to the current collector (metal film). A larger peel strength indicates larger binding strength of the positive electrode mixed material layer to the current collector, and thus indicates larger close adherence strength and better positive electrode mechanical strength.

OK (O): Peel strength of 0.5 N/m or more
Not good (×): Peel strength of less than 0.5 N/m

<Ease of transfer of positive electrode mixed material layer (peel strength of positive electrode mixed material layer with respect to resin substrate)>

A produced laminate for current collector transfer was cut out as a rectangle of 100 mm in length and 10 mm in width to obtain a test specimen. The test specimen was placed with the surface of the positive electrode mixed material layer facing downward, and cellophane tape was affixed to the surface of the positive electrode mixed material layer. Tape prescribed by JIS Z1522 was used as the cellophane tape. Moreover, the cellophane tape was fixed to a test stage in advance. Thereafter, one end of the resin substrate was pulled vertically upward at a pulling speed of 50 mm/min to peel off the resin substrate, and the stress during this peeling was measured. Three measurements were made in this manner, an average value of the measurements was determined, and the average value was evaluated by the following standard as the peel strength of the positive electrode mixed material layer with respect to the resin substrate. A smaller peel strength indicates smaller close adherence strength of the positive electrode mixed material layer to the resin substrate and better easy releasability (i.e., ease of transfer) of the positive electrode mixed material layer from the resin substrate in a situation in which a positive electrode is produced using the laminate for current collector transfer by peeling and transferring the positive electrode mixed material layer from the resin substrate (releasable substrate).

OK (O): Peel strength of 0.5 N/m or less
Not good (×): Peel strength of more than 0.5 N/m

<Discharge rate characteristics of lithium ion secondary battery>

A lithium ion secondary battery obtained in each example or comparative example was subjected to a charge/discharge test in which the lithium ion secondary battery was charged to an upper limit voltage and subsequently discharged to a lower limit voltage under conditions indicated below. This charge/discharge test was performed 7 times. A discharge rate characteristic was determined based on the following formula.

$$\text{Discharge rate characteristic [\%]} = (\text{Capacity at } 2.0C)/(\text{Capacity at } 0.2C) \times 100$$

The determined discharge rate characteristic was evaluated by the following standard.

(Test conditions)

Upper limit voltage: 4.2 V
Lower limit voltage: 3.0 V
Charging conditions: 0.2C constant-current constant-voltage method (CCCV), cut off 0.05C
Discharging conditions: Constant-current method (CC) at 0.2C for 1st time and CC at from 1.0C to 0.2C for 2nd to 7th times

1st time: 0.2C CC
2nd time: 1.0C CC → 0.2C CC
3rd time: 1.5C CC → 0.2C CC
4th time: 2.0C CC → 0.2C CC
5th time: 2.5C CC → 0.2C CC
6th time: 3.0C CC → 0.2C CC
7th time: 3.5C CC → 0.2C CC

Number of cycles: One cycle at each rate
Temperature: 25°C

(Evaluation standard)

OK (O): Discharge rate characteristic of 75% or more
Not good (×): Discharge rate characteristic of less than 75%

<Mass per unit area of positive electrode>

A positive electrode produced in each example or comparative example was cut out as 5 cm × 5 cm (area: 25 cm$^2$) to obtain a test specimen. The mass W (g) of the test specimen was divided by the area of the test specimen to calculate the mass per unit area (g/cm$^2$) of the positive electrode.

<Thickness of positive electrode>

A positive electrode produced in each example or comparative example was cut out as 5 cm × 5 cm to obtain a test specimen. The thickness of the test specimen was measured using a Digimatic Outside Micrometer produced by Mitutoyo Corporation.

<Density of positive electrode>

A positive electrode produced in each example or comparative example was cut out as 5 cm × 5 cm to obtain a test specimen. The thickness of the test specimen was measured by a micrometer, and the volume (cm$^3$) of the test specimen was calculated. The mass W (g) of the test specimen calculated in the same manner as described above in the "Mass per unit area of positive electrode" section was divided by the volume (cm$^3$) of the test specimen to calculate the density (g/cm$^3$) of the positive electrode.

<Electrical conductivity 1 of positive electrode mixed material layer>

Electrical conductivity 1 of a positive electrode mixed material layer on a positive electrode produced in each example or comparative example was calculated by using a resistivity meter for low resistance (Loresta® GX (Loresta is a registered trademark in Japan, other countries, or both) produced by Mitsubishi Chemical Analytech) to implement a four-point probe method in accordance with JIS K 7194:1994 with a probe arranged on one side of the sheet.

<Electrical conductivity 2 of positive electrode mixed material layer>

Electrical conductivity 2 of a positive electrode mixed material layer on a positive electrode produced in each example or comparative example was calculated by using a resistivity meter for low resistance (Loresta® GX produced by Mitsubishi Chemical Analytech) to implement a four-point probe method in accordance with JIS K 7194:1994 with a probe arranged on one side of the sheet.

<Shaft winding strength of positive electrode>

A positive electrode produced in each example or comparative example was cut out as 5 cm × 5 cm to obtain a test specimen and was then wound around an S stainless steel shaft (∅4 mm). Thereafter, the test specimen was unwound and the state of cracking, chipping, and peeling was visually checked in order to evaluate shaft winding strength of the positive electrode.

OK (O): No cracking, chipping, or peeling
Not good (×): Cracking, chipping, or peeling at even just one location

<Dusting resistance of positive electrode mixed material layer>

A positive electrode for a lithium ion secondary battery produced in each example or comparative example was cut out as rectangles of 600 mm in length and 500 mm in width to prepare 5 test specimens. Each of the test specimens was subjected to the following operations and measurements.
First, the initial electrode weight (P0) of the one test specimen was measured. Next, a utility knife was used to make 11 incisions of 1 mm in width in the test specimen, and dust formed during this cutting was gently cleared off the test specimen. The electrode weight (P1) after incision formation was measured. The amount of dusting of the electrode was calculated by the following formula.

$$\text{Amount of dusting of electrode (mass\%)} = \{(P0 - P1)/P0\} \times 100$$

These operations and measurements were repeated 5 times, and an average value of the amount of electrode dusting for the 5 test specimens was determined. Dusting resistance of the electrode mixed material layer was then evaluated by the following standard. A smaller amount of electrode dusting indicates that the electrode mixed material layer has better dusting resistance.

OK (O): Average value for amount of electrode dusting of less than 10%

Not good (×): Average value for amount of electrode dusting of 10% or more

<Electrolyte solution impregnation of positive electrode>

A positive electrode produced in each example or comparative example was cut out as 5 cm × 5 cm to obtain a test specimen, and the mass thereof was measured. Thereafter, the test specimen was immersed in acetone at 25°C for 1 hour, and then the test specimen was removed from the acetone, and the mass thereof was measured. Electrolyte solution impregnation of the positive electrode was evaluated based on the proportional change of mass of the test specimen between before and after immersion in electrolyte solution.

OK (O): No peeling of test specimen
Not good (×): Peeling of test specimen

<Film formation properties of carbon film>

Film formation properties of an obtained carbon film were evaluated as OK (O) in a case in which, after peeling of the carbon film from a membrane filter (produced by Advantec Toyo Kaisha, Ltd.; made of PTFE), the carbon film could maintain a state of a film of the same size as the membrane filter, and film formation properties of the carbon film were evaluated as not good (×) in a case in which shrinkage or tearing was observed.

<Porosity>

The porosity of a produced carbon film was measured by mercury intrusion porosimetry (AutoPore IV9510 produced by Shimadzu Corporation).

(Evaluation of CNT dispersion liquid produced using jet mill)

(Example 1)

<Synthesis of CNT_A>

CNTs used in Examples 1 and 3 and Comparative Example 1 (hereinafter, referred to as "CNT_A") were produced by a method in which a source gas was supplied while continuously conveying a particulate catalyst-bearing support by screw rotation in a CNT synthesis step.

FIG. 7 illustrates schematic configuration of a CNT assembly production apparatus 200 that was used. The CNT assembly production apparatus 200 illustrated in FIG. 7 includes a formation unit 202, a growth unit 204, a conveyance unit 207 that conveys a substrate from the formation unit 202 until it has passed through the growth unit 204, a connector 208 that spatially connects the formation unit 202 and the growth unit 204 to each other, and a gas intrusion prevention device 203 that prevents mixing of gases between the formation unit 202 and the growth unit 204. In addition, the CNT assembly production apparatus 200 includes components such as an inlet purge device 201 disposed at a stage preceding the formation unit 202, an outlet purge device 205 disposed at a stage following the growth unit 204, and a cooling unit 206 disposed at a stage following the outlet purge device 205. The formation unit 202 includes a formation furnace 202a for holding a reducing gas, a reducing gas injection device 202b for injecting the reducing gas, a heater 202c for heating at least one of a catalyst and the reducing gas, and an exhauster 202d for discharging gas inside of the furnace to outside of the system. The gas intrusion prevention device 203 includes an exhauster 203a and a purge gas injection device 203b for injecting a purge gas (sealing gas). The growth unit 204 includes a growth furnace 204a for holding a source gas environment, a source gas injection device 204b for injecting the source gas, a heater 204c for heating at least one of the catalyst and the source gas, and an exhauster 204d for discharging gas inside of the furnace to outside of the system. The inlet purge device 201 is connected to a connector 209 that connects the formation furnace 202a with an antechamber 213, which is a constituent where a substrate 211 is introduced into the system via a hopper 212. The cooling unit 206 includes a cooling vessel 206a for holding an inert gas and a water-cooling chiller 206b that is disposed such as to surround an internal space of the cooling vessel 206a. The conveyance unit 207 is a unit that continuously conveys the substrate 211 through screw rotation. The conveyance unit 207 is implemented through a screw blade 207a and a driver 207b that is capable of rotating the screw blade so as to display substrate conveying ability. The heater 214 is configured such as to be capable of heating the inside of the system at a lower temperature than a heating temperature in the formation unit and heats the vicinity of the driver 207b.

<<Catalyst layer formation step>>

Zirconia (zirconium dioxide) beads ($ZrO_2$; volume-average particle diameter D50: 650 $\mu$m) serving as a substrate were loaded into a rotary drum-type coating device. The zirconia beads were stirred (20 rpm) while spraying (spraying rate: 3 g/min; spraying time: 940 s; spraying air pressure: 10 MPa) an aluminum-containing solution by a spray gun, and drying was performed while supplying compressed air (300 L/min) into the rotary drum to form an aluminum-containing coating film on the zirconia beads. Next, calcination treatment was performed at 480°C for 45 minutes to produce primary catalyst particles on which an aluminum oxide layer had been formed. Moreover, these primary catalyst particles were loaded into a separate rotary drum-type coating device, were stirred (20 rpm) while spraying (spraying rate: 2 g/min; spraying time: 480 s; spraying air pressure: 5 MPa) an iron catalyst solution by a spray gun, and were dried while supplying compressed air (300 L/min) into the rotary drum so as to form an iron-containing coating film on the primary catalyst particles. Next, calcination treatment was performed at 220°C for 20 minutes to produce a substrate having an iron oxide layer further formed thereon.

«CNT synthesis step»

The substrate having a catalyst at the surface that was produced in this manner was loaded into a feeder hopper of the production apparatus and was subjected to a formation step, a growth step, and a cooling step in this order while being conveyed by a screw conveyer so as to produce a CNT assembly.

<<Formation step to cooling step>>

CNTs were continuously produced with various conditions of the inlet purge device, formation unit, gas intrusion prevention device, growth unit, outlet purge device, and cooling unit in the CNT assembly production apparatus set as indicated below.

Feeder hopper

- Feed rate: 1.25 kg/h
- Exhaust rate: 10 sLm (natural exhaust from gaps) Inlet purge device
- Purge gas: Nitrogen 40 sLm

Formation unit

- Furnace internal temperature: 800°C
- Reducing gas: Nitrogen 6 sLm, hydrogen 54 sLm
- Exhaust rate: 60 sLm
- Processing time: 20 minutes

Gas intrusion prevention device

- Purge gas: 20 sLm
- Exhaust rate of exhauster: 62 sLm

Growth unit

- Furnace internal temperature: 830°C
- Source gas: Nitrogen 15 sLm, ethylene 5 sLm, carbon dioxide 1 sLm, hydrogen 3 sLm
- Exhaust rate: 47 sLm
- Processing time: 10 minutes

Outlet purge device

- Purge gas: Nitrogen 45 sLm

Cooling unit

- Cooling temperature: Room temperature
- Exhaust rate: 10 sLm (natural exhaust from gaps)

<<Separation and recovery step>>

The CNT assembly synthesized on the substrate was separated and recovered using a forced vortex classifier (rotation speed: 2,300 rpm; air flow rate: 3.5 $Nm^3$/min). The recovery rate of the CNT assembly was 96%.

Characteristics of the produced CNT assembly in terms of representative values were a G/D ratio of 1.3, a tapped bulk density of 0.02 $g/cm^3$, a CNT average length of 150 $\mu$m, a BET specific surface area of 900 $m^2$/g, an average external diameter of 4.0 nm, and a carbon purity of 99%.

<<Characteristics of CNTs>>

An electron microscope image (SEM image) of the obtained CNT assembly (CNT_A) was as illustrated in FIG. 5.

<Production of CNT dispersion liquid and measurement of various physical property values>

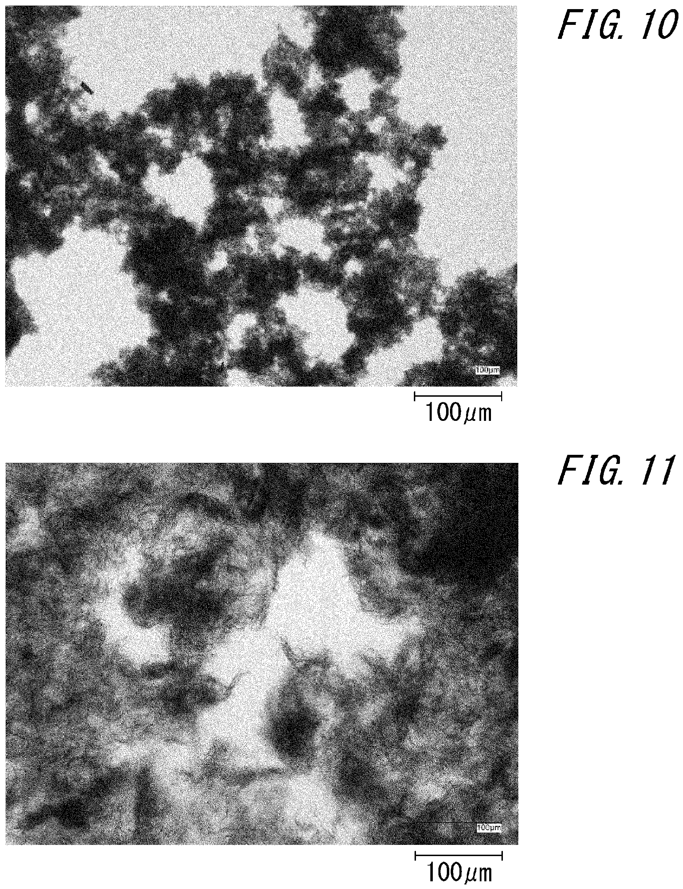

A mixture obtained by adding 300 g of N-methylpyrrolidone (NMP) as a solvent to 0.3 g of CNT_A synthesized as described above as CNTs was subjected to 12 passes of dispersing treatment under conditions of 15 minutes at 100 MPa using a jet mill (NanoVater produced by Yoshida Kikai Co., Ltd.) to obtain a CNT dispersion liquid. An optical microscope image of the CNT dispersion liquid is presented in FIG. 1. The fractal dimension and CNT persistence length were measured for the obtained CNT dispersion liquid. The results are shown in Table 1. The optical microscope image for the obtained CNT dispersion liquid was subjected to binarization processing to acquire an image (FIG. 10), and then the area fraction occupied by CNTs in the acquired image and the number of carbon nanotubes having an aspect ratio of 10 or more in an area equivalent to 26,000 $\mu m^2$ in the acquired image were measured. The results are shown in Table 1.

<Production of slurry composition for positive electrode>

A slurry composition for a positive electrode was produced by using a planetary mixer to stir 100.0 parts of $LiNi_{0.5}Co_{0.3}Mn_{0.2}O_2$ (NCM532) as a positive electrode active material, 0.1 parts of the CNT dispersion liquid as a conductive material dispersion liquid, 0.2 parts of polyvinylpyrrolidone as a binder, 1.0 parts of hydrogenated NBR as a dispersant, and 50 parts of NMP as a slurry composition solvent.

<Production of positive electrode>

The slurry composition for a positive electrode obtained as described above was applied onto the surface of a current collector formed of aluminum foil having a thickness of 20 $\mu$m and a surface tension of 900 mN/m using a comma coater, was dried at 60°C for 20 minutes, and was subsequently heat treated at 150°C for 1 hour to obtain a positive electrode web. The obtained positive electrode web was rolled by roll pressing to produce a positive electrode (laminate) controlled to a thickness of 50 $\mu$m that included the current collector (metal film) and a positive electrode mixed material layer (carbon nanotube-containing film) formed on the current collector.

<Production of laminate for current collector transfer>

The slurry composition for a positive electrode obtained as described above was also applied onto the surface of a releasable substrate for transfer formed of a resin substrate made of polypropylene that had a thickness of 20 $\mu$m and a surface tension of 30 mN/m using a comma coater, was dried at 60°C for 20 minutes, and was subsequently heat treated at 150°C for 1 hour to obtain a laminate web for current collector transfer. The obtained laminate web for current collector transfer was rolled by roll pressing to produce a laminate for current collector transfer controlled to a thickness of 50 $\mu$m that included the releasable substrate (resin substrate) and a positive electrode mixed material layer (carbon nanotube-containing film) formed on the releasable substrate.

<Production of lithium ion secondary battery>

Next, the positive electrode for a lithium ion secondary battery obtained as described above was cut out with a disc shape of 16 mm in diameter. A separator (porous membrane made of polypropylene; disc shape of 18 mm in diameter and 25 $\mu$m in thickness), a negative electrode (lithium metal; disc shape of 18 mm in diameter and 0.5 mm in thickness), and an expanded metal were stacked in this order at the positive electrode mixed material layer side of the obtained disc-shaped positive electrode to obtain a laminate. The obtained laminate was housed inside of a coin-type outer container made of stainless steel (diameter: 20 mm; height: 1.8 mm; stainless steel thickness: 0.25 mm) in which packing made of polypropylene was set. Electrolyte solution was injected into the container such that no air remained, a stainless steel cap of 0.2 mm in thickness was placed and fixed onto the outer container via the polypropylene packing, and the battery can was sealed to produce a coin-type lithium ion secondary battery of 20 mm in diameter and approximately 2 mm in thickness. Note that a solution obtained by dissolving $LiPF_6$ with a concentration of 1 mol/L in a mixed solvent of ethylene carbonate (EC) and diethyl carbonate (DEC) mixed in a ratio of EC:DEC = 1:2 (volume ratio at 20°C) was used as the electrolyte solution. Rate characteristics of the obtained coin-type lithium ion secondary battery were evaluated. The result is shown in Table 1.

(Example 2)

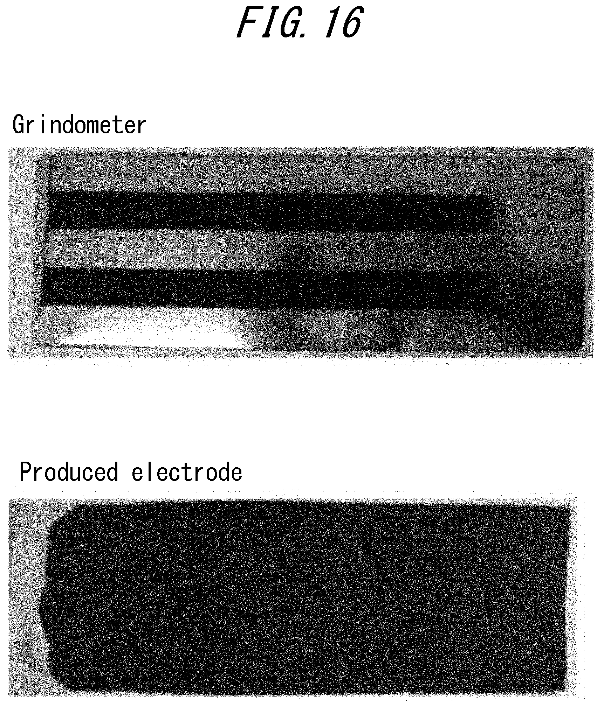

Production and physical property value measurement of a CNT dispersion liquid and production and performance evaluation of a carbon film were performed in the same way as in Example 1 with the exception that single-walled carbon nanotubes "Tuball®" (Tuball is a registered trademark in Japan, other countries, or both; produced by OCSiAl; CNT diameter of 1.6 $\pm$ 0.4 nm, specific surface area of $\geq$ 300 m/g, G/D ratio of > 90, and length of 5 $\mu$m) were used as CNTs in production of the CNT dispersion liquid. Note that the G/D ratio of the CNTs was 90. The results are shown in Tables 1 and 2. An optical microscope image and a binarized image of the CNT dispersion liquid are respectively presented in FIG. 2 and FIG. 11. A photograph of grindometer analysis of the slurry composition and a photograph of the positive electrode are presented in FIG. 16. Since the 40 $\mu$m line was surpassed in grindometer analysis, the dispersion liquid was confirmed to have good fineness of grind without the presence of aggregates or lumps.

(Example 3)

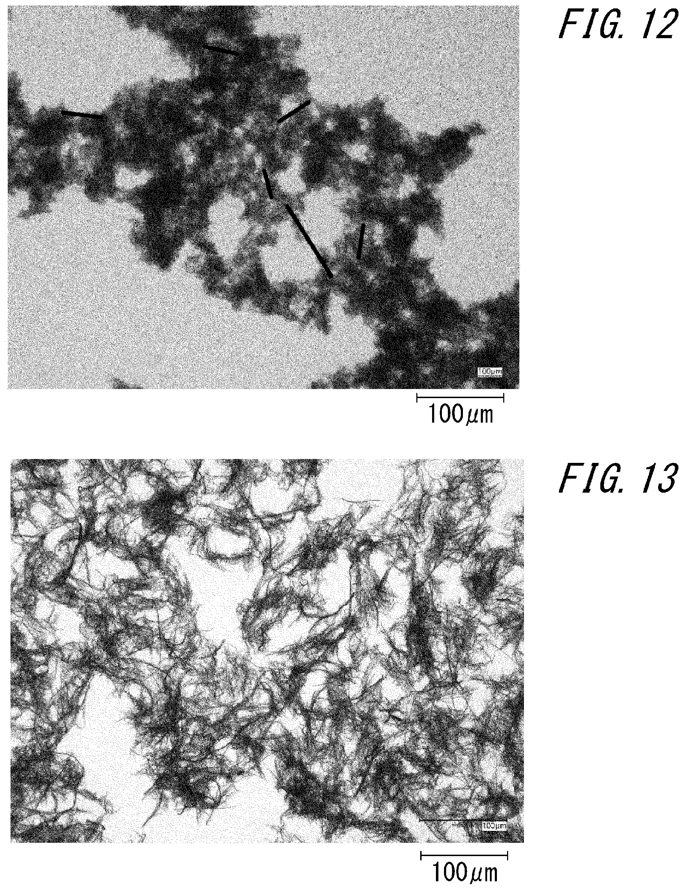

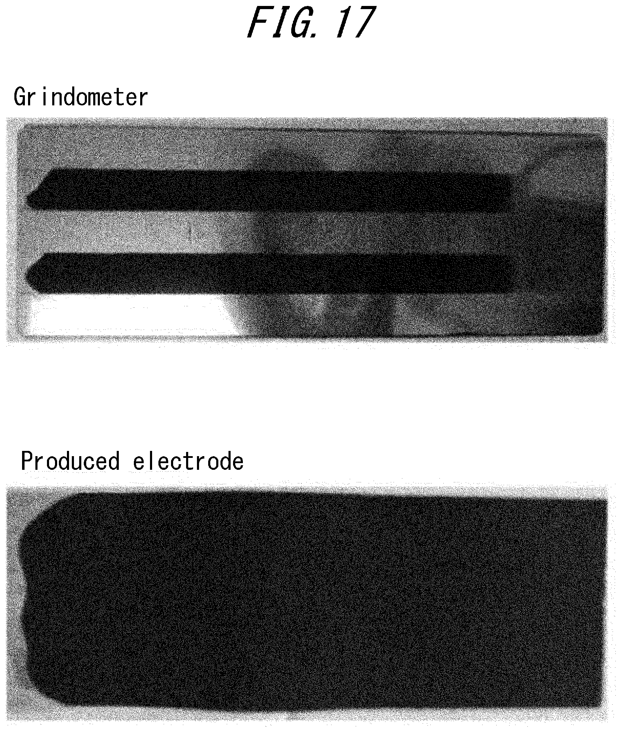

Production and physical property value measurement of a CNT dispersion liquid and production and performance evaluation of a carbon film were performed in the same way as in Example 1 with the exception that a mixture having a mixing ratio (total amount equivalent to that of CNTs in Example 1) of 9 parts of CNT_A and 1 part of CNTs obtained by the super growth method (product name: ZEONANO SG101; produced by Zeon Corporation) was used as CNTs in production of the CNT dispersion liquid. Note that the G/D ratio of the CNT mixture was 1.2. The results are shown in Tables 1 and 2. An optical microscope image and a binarized image of the CNT dispersion liquid are respectively presented in FIG. 3 and FIG. 12 (solid lines indicate carbon nanotubes having an aspect ratio of 10 or more). A photograph of grindometer analysis of the slurry composition and a photograph of the positive electrode are presented in FIG. 17. Since the 40 $\mu$m line was surpassed in grindometer analysis, the dispersion liquid was confirmed to have good fineness of grind without the presence of aggregates or lumps.

(Comparative Example 1)

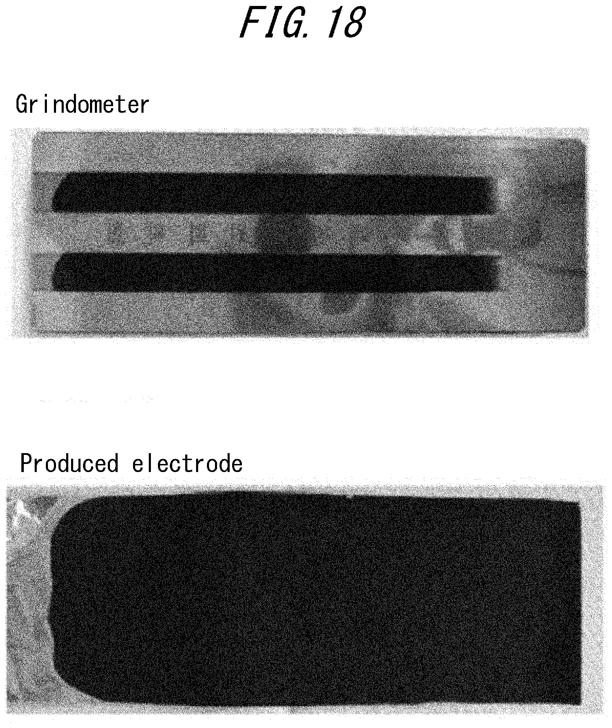

Production and physical property value measurement of a CNT dispersion liquid and production and performance evaluation of a carbon film were performed in the same way as in Example 1 with the exception that 9 passes of dispersing treatment were performed using the jet mill in production of the CNT dispersion liquid. The results are shown in Tables 1 and 2. An optical microscope image and a binarized image of the CNT dispersion liquid are respectively presented in FIG. 4 and FIG. 13. A photograph of grindometer analysis of the slurry composition and a photograph of the positive electrode are presented in FIG. 18.

(Comparative Example 2)

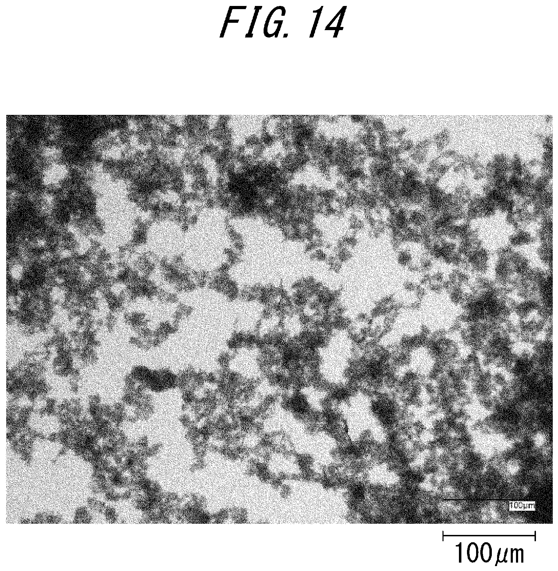

Production and physical property value measurement of a CNT dispersion liquid and production and performance evaluation of a carbon film were performed in the same way as in Example 1 with the exception that K-nanos 100T (product name; produced by KNANO GRAPHENE COMPANY; CNT diameter: 7 nm to 23 nm; CNT length: 26 nm; carbon purity: up to 95%) was used as CNTs in production of the CNT dispersion liquid. Note that the G/D ratio of the CNTs was 0.9. The results are shown in Table 1. An image obtained through binarization processing of an optical microscope image of the CNT dispersion liquid is presented in FIG. 14.

[Table 1]

| | | Example 1 | Example 2 | Example 3 | Comparative Example 1 | Comparative Example 2 |
|---|---|---|---|---|---|---|
| CNT ratio [parts] | CNT_A | 10 | - | 9 | 10 | - |
| | Tuball | - | 10 | - | - | - |
| | Knano | - | - | - | - | 10 |
| | SG101 | - | - | 1 | - | - |
| G/D ratio of CNTs | | 1.3 | 90 | 1.2 | 1.3 | 0.9 |
| Dispersion liquid production method | Jet mill | 12 passes | 12 passes | 12 passes | 9 passes | 12 passes |
| Fractal dimension 0.001-0.3 (1/angstrom) | | 3.7 | 3.3 | 3.7 | 5.1 | 2.2 |
| CNT persistence length [angstroms] 0.05-0.01 (1/angstrom) | | 112 | 110 | 128 | 33 | 93 |
| CNT-occupied fraction [%] | | 75 | 57 | 55 | 61 | 64 |
| Aspect ratio of 10 or more [no. of CNTs] | | 0 | 0 | 5 | >100 | 0 |
| Close adherence with metal film (peeling resistance) | | O | O | O | × | × |
| Easy releasability from resin substrate (transfer characteristics) | | O | O | O | × | × |
| Discharge rate characteristics | | O | O | O | × | × |

[Table 2]

| | Example 1 | Example 2 | Example 3 | Comparative Example 1 |
|---|---|---|---|---|
| Active material mixing ratio | NCM532 | NCM532 | NCM532 | NCM532 |
| | 100.0 parts | 100.0 parts | 100.0 parts | 100.0 parts |
| Conductive material | Sample A | Tuball | Sample C | Sample B |
| | 0.1 parts | 0.1 parts | 0.1 parts | 0.1 parts |

(continued)

| | Example 1 | Example 2 | Example 3 | Comparative Example 1 |
|---|---|---|---|---|
| Binder | Binder | Binder | Binder | Binder |
| | 0.2 parts | 0.2 parts | 0.2 parts | 0.2 parts |
| | Dispersant | Dispersant | Dispersant | Dispersant |
| | 1.0 parts | 1.0 parts | 1.0 parts | 1.0 parts |
| Current collection foil | Al foil (15 $\mu$m) | Al foil (15 $\mu$m) | Al foil (15 $\mu$m) | Al foil (15 $\mu$m) |
| Mass per unit area | 19.9 mg/cm$^2$ | 19.8 mg/cm$^2$ | 20.2 mg/cm$^2$ | 19.8 mg/cm$^2$ |
| Electrode thickness | 62 $\mu$m | 62 $\mu$m | 63 $\mu$m | 62 $\mu$m |
| Electrode density | 3.21 g/cm$^3$ | 3.20 g/cm$^3$ | 3.20 g/cm$^3$ | 3.19 g/cm$^3$ |
| Electrical conductivity 1 | $1.9 \times 10^{-3}$ S/cm | $1.1 \times 10^{-3}$ S/cm | $1.2 \times 10^{-3}$ S/cm | $3.8 \times 10^{-3}$ S/cm |
| Electrical conductivity 2 | $3.7 \times 10^{-2}$ S/cm | $6.1 \times 10^{-2}$ S/cm | $2.8 \times 10^{-2}$ S/cm | $2.4 \times 10^{-2}$ S/cm |
| Strength testing | Shaft winding (Ø4 mm): O | Shaft winding (Ø4 mm): O | Shaft winding (Ø4 mm): O | Shaft winding (Ø4 mm): O |
| | Dusting: O | Dusting: O | Dusting: O | Dusting: O |
| | Solvent impregnation: O | Solvent impregnation: O | Solvent impregnation: O | Solvent impregnation: O |

In the tables, "O" indicates a good evaluation result (OK) and "×" indicates a poor evaluation result (not good).

It can be seen from Table 1 that when using the CNT dispersion liquids of Examples 1 to 3, which are within the scope of the present disclosure, excellent performance was displayed in terms of each of close adherence of an electrode mixed material layer to a metal film, easy releasability of an electrode mixed material layer from a substrate, and rate characteristics of a secondary battery.

(Evaluation of CNT dispersion liquid produced by high-shear stirring)

(Example 4)

<Production of CNT dispersion liquid>

A mixture of 2 g of CNTs obtained by the super growth method (product name: ZEONANO SG101; produced by Zeon Corporation) as CNTs and 1,998 g of water as a solvent was subjected to dispersing treatment under conditions A indicated in Table 3 using a high-shear stirrer CAVITRON CD1000 (produced by Eurotec) as a disperser to obtain a CNT dispersion liquid. Image acquisition through imaging of this CNT dispersion liquid and analysis of an acquired image were performed so as to calculate the area fraction occupied by CNTs in the image. The result is shown in Table 4.

<Film formation>

Filtration was performed under a condition of 0.09 MPa using a vacuum filtration device including a membrane filter. Thereafter, air was passed for 4 hours, and then a carbon film was peeled from the resultant carbon film/membrane filter to obtain a carbon film. Film formation properties were evaluated and porosity was measured for the obtained carbon film. The results are shown in Table 4.

(Example 5)

Production of a CNT dispersion liquid and a carbon film and measurement or evaluation of physical properties were performed in the same way as in Example 4 with the exception that dispersing treatment was performed under conditions B indicated in Table 3 in production of the CNT dispersion liquid. The results are shown in Table 4.

(Example 6)

<Synthesis of CNT_A>

CNTs used in Examples 6 and 7 (hereinafter, referred to as "CNT_A") were taken to be CNTs produced by the same method as in Example 1.

<Production of CNT dispersion liquid and carbon film>

Production of a CNT dispersion liquid and a carbon film and measurement or evaluation of physical properties were performed in the same way as in Example 4 with the exception that the CNT_A produced as described above was used as CNTs in production of the CNT dispersion liquid. The results are shown in Table 4.

(Example 7)

Production of a CNT dispersion liquid and a carbon film and measurement or evaluation of physical properties were performed in the same way as in Example 6 with the exception that dispersing treatment was performed under conditions B indicated in Table 3 in production of the CNT dispersion liquid. The results are shown in Table 4.

(Comparative Example 3)

Production of a CNT dispersion liquid and a carbon film and measurement or evaluation of physical properties were performed in the same way as in Example 4 with the exception that K-nanos 100T (product name; produced by KNANO GRAPHENE COMPANY) was used as CNTs in production of the CNT dispersion liquid. The results are shown in Table 4.

(Comparative Example 4)

Production of a CNT dispersion liquid and a carbon film and measurement or evaluation of physical properties were performed in the same way as in Comparative Example 3 with the exception that dispersing treatment was performed under conditions B indicated in Table 3 in production of the CNT dispersion liquid. The results are shown in Table 4.

[Table 3]

| Dispersing conditions | | Dispersing conditions A (strong) | Dispersing conditions B (weak) |
|---|---|---|---|
| Disperser | | CAVITRON CD1000 | CAVITRON CD1000 |
| Disperser operating conditions | Slit | 1 mm | 1 mm |
| | Rotation speed (Hz) | 124 | 60 |
| | Rotation speed (rpm) | 7440 | 3600 |
| | Diameter | 42 | 42 |
| | Clearance | 0.25 | 0.25 |
| | Circumferential speed | 16.35 | 16.35 |
| | Shear rate | 106000 | 106000 |
| | Time (min) | 15 | 15 |
| | Pot agitator rotation speed (rpm) | 800 | 800 |
| CNT concentration (%) | | 0.1 | 0.1 |
| Solvent | | Water | Water |

(continued)

| Dispersing conditions | | Dispersing conditions A (strong) | Dispersing conditions B (weak) |
|---|---|---|---|
| Composition | CNTs (g) | 2 | 2 |
| | Solvent (g) | 1998 | 1998 |
| | Total amount (g) | 2000 | 2000 |
| | Amount of solid content (g) | 2 | 2 |

[Table 4]

| | Example 4 | Example 5 | Example 6 | Example 7 | Comparative Example 3 | Comparative Example 4 |
|---|---|---|---|---|---|---|
| CNTs | SG101 | SG101 | CNT_A | CNT_A | Knano | Knano |
| Dispersing conditions | Conditions A | Conditions B | Conditions A | Conditions B | Conditions A | Conditions B |
| Area fraction | 25% | 46% | 56% | 68% | 72% | 78% |
| Film formation properties | O | O | O | O | × | × |
| Porosity of CNT sheet [%] | 80 | 90 | 85 | 95 | × | × |

In the tables, "O" indicates a good evaluation result (OK) and "×" indicates a poor evaluation result (not good).

It can be seen from Table 4 that a carbon film could be produced with good film formation properties in the case of Examples 4 to 7, which are within the scope of the present disclosure. It can also be seen from the results for Examples 4 to 7 that by adjusting the area fraction of CNTs in a CNT dispersion liquid, this can serve as a rough guide for obtaining a carbon film having a porosity in a desired range.

INDUSTRIAL APPLICABILITY

According to the present disclosure, it is possible to provide a carbon nanotube dispersion liquid that can cause an electrode for a secondary battery to display strong peel strength between an electrode mixed material layer and a current collector formed of a metal or the like, that can cause a releasable substrate-attached electrode mixed material layer to display weak peel strength between an electrode mixed material layer and a releasable substrate formed of a resin or the like, and that can cause a secondary battery to display excellent rate characteristics.

Moreover, according to the present disclosure, it is possible to provide a laminate that can be used as an electrode for a secondary battery having strong peel strength between an electrode mixed material layer and a current collector formed of a metal or the like.

Furthermore, according to the present disclosure, it is possible to provide a laminate that can be used as a releasable substrate-attached electrode mixed material layer having weak peel strength between an electrode mixed material layer and a releasable substrate formed of a resin or the like.

Also, according to the present disclosure, it is possible to provide a CNT dispersion liquid that makes it possible to achieve good film formation properties during carbon film formation using the CNT dispersion liquid and a method of producing this CNT dispersion liquid.

Moreover, according to the present disclosure, it is possible to provide a method of producing a carbon film with good film formation properties using a CNT dispersion liquid and a carbon film having good film formation condition.

REFERENCE SIGNS LIST

200      CNT assembly production apparatus
201      inlet purge device
202      formation unit

| 202a | formation furnace |
| 202b | reducing gas injection device |
| 202c | heater |
| 202d | exhauster |
| 203 | gas intrusion prevention device |
| 203a | exhauster |
| 203b | purge gas injection device |
| 204 | growth unit |
| 204a | growth furnace |
| 204b | source gas injection device |
| 204c | heater |
| 204d | exhauster |
| 205 | outlet purge device |
| 206 | cooling unit |
| 206a | cooling vessel |
| 206b | water-cooling chiller |
| 207 | conveyance unit |
| 207a | screw blade |
| 207b | driver |
| 208-210 | connector |
| 211 | substrate |
| 212 | hopper |
| 214 | heater |

**Claims**

1. A carbon nanotube dispersion liquid comprising carbon nanotubes and a solvent, wherein the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model.

2. A carbon nanotube dispersion liquid comprising single-walled carbon nanotubes having a G/D ratio of 5 or less and a solvent, wherein an area fraction occupied by carbon nanotubes in an image acquired through imaging of the carbon nanotube dispersion liquid at a concentration of 0.1 wt% is 55% or less.

3. The carbon nanotube dispersion liquid according to claim 2, wherein not fewer than 5 and not more than 100 carbon nanotubes having an aspect ratio of 10 or more are included per area equivalent to 26,000 $\mu m^2$ in the image.

4. A carbon nanotube dispersion liquid comprising single-walled carbon nanotubes having a G/D ratio of 10 or more and a solvent, wherein an area fraction occupied by carbon nanotubes in an image acquired through imaging of the carbon nanotube dispersion liquid at a concentration of 0.1 wt% is 75% or more.

5. A carbon nanotube dispersion liquid comprising carbon nanotubes and a solvent, wherein an area fraction occupied by carbon nanotubes in an image acquired through imaging of the carbon nanotube dispersion liquid at a concentration of 0.1 wt% is 70% or less.

6. The carbon nanotube dispersion liquid according to claim 5, wherein the area fraction is not less than 55% and not more than 70%.

7. The carbon nanotube dispersion liquid according to any one of claims 2 to 6, wherein the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model.

8. The carbon nanotube dispersion liquid according to any one of claims 1 to 7, having a CNT persistence length of 100 nm or more in a wavenumber range of not less than 0.05 (1/angstrom) and not more than 0.01 (1/angstrom) when a scattering curve obtained through measurement by ultra-small-angle X-ray scattering is analyzed by the Beaucage model.

9. The carbon nanotube dispersion liquid according to any one of claims 1 to 8, wherein the solvent is water, an alcohol, or a mixture of water and an alcohol.

10. The carbon nanotube dispersion liquid according to any one of claims 1 to 9, wherein the carbon nanotubes satisfy at least one of conditions (1) to (3) set forth below:

(1) in a spectrum obtained by Fourier-transform infrared spectroscopy with respect to carbon nanotube dispersions obtained by dispersing a carbon nanotube assembly such as to have a bundle length of 10 $\mu$m or more, at least one peak based on plasmon resonance of the carbon nanotube dispersions is present in a wavenumber range of more than 300 cm$^{-1}$ and not more than 2,000 cm$^{-1}$;

(2) on a pore distribution curve for a carbon nanotube assembly indicating a relationship between pore diameter and Log differential pore volume that is obtained based on the Barrett-Joyner-Halenda method from an adsorption isotherm of liquid nitrogen at 77 K, a largest peak is in a pore diameter range of more than 100 nm and less than 400 nm;

(3) in a two-dimensional spatial frequency spectrum of an electron microscope image of a carbon nanotube assembly, at least one peak is present in a range of not less than 1 $\mu$m$^{-1}$ and not more than 100 $\mu$m$^{-1}$.

11. A laminate comprising a metal film having a surface tension of not less than 400 [mN/m] and not more than 2,000 [mN/m] and a carbon nanotube-containing film formed using the carbon nanotube dispersion liquid according to any one of claims 1 to 10.

12. A laminate comprising a substrate having a surface tension of not less than 20 [mN/m] and not more than 50 [mN/m] and a carbon nanotube-containing film formed using the carbon nanotube dispersion liquid according to any one of claims 1 to 10.

13. A method of producing a carbon nanotube dispersion liquid comprising:

performing dispersing treatment of a mixture of carbon nanotubes and a solvent to obtain a carbon nanotube dispersion liquid;

measuring the obtained carbon nanotube dispersion liquid by ultra-small-angle X-ray scattering; and

evaluating the carbon nanotube dispersion liquid as suitable in a case in which the carbon nanotube dispersion liquid satisfies a condition 1 that the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 1.

14. A method of producing a carbon nanotube dispersion liquid comprising:

performing dispersing treatment of a mixture of carbon nanotubes and a solvent to obtain a carbon nanotube dispersion liquid;

measuring the obtained carbon nanotube dispersion liquid by ultra-small-angle X-ray scattering; and

evaluating the carbon nanotube dispersion liquid as suitable in a case in which the carbon nanotube dispersion liquid satisfies a condition 2 that the carbon nanotube dispersion liquid has a fractal dimension of not less than 3 and not more than 4 in a wavenumber range of not less than 0.001 (1/angstrom) and not more than 0.3 (1/angstrom) and has a CNT persistence length of 100 nm or more in a wavenumber range of not less than 0.05 (1/angstrom) and not more than 0.01 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 2.

15. A method of producing a carbon nanotube dispersion liquid comprising:

performing dispersing treatment of a mixture of single-walled carbon nanotubes having a G/D ratio of 5 or less and a solvent to obtain a carbon nanotube dispersion liquid;

acquiring an image of the obtained carbon nanotube dispersion liquid through imaging of the carbon nanotube dispersion liquid at a concentration of 0.1 wt%; and

evaluating the carbon nanotube dispersion liquid as suitable in a case in which the carbon nanotube dispersion liquid satisfies a condition 3 that an area fraction occupied by carbon nanotubes in the acquired image is 55% or less, and evaluating the carbon nanotube dispersion liquid as unsuitable in a case in which the carbon nanotube dispersion liquid does not satisfy the condition 3.

16. A method of producing a carbon nanotube dispersion liquid comprising:

performing dispersing treatment of a mixture of single-walled carbon nanotubes having a G/D ratio of 5 or less and a solvent to obtain a carbon nanotube dispersion liquid;
acquiring an image of the obtained carbon nanotube dispersion liquid through imaging of the carbon nanotube dispersion liquid at a concentration of 0.1 wt%; and
evaluating the carbon nanotube dispersion liquid as suitable in a case in which the carbon nanotube dispersion liquid satisfies a condition 4 that an area fraction occupied by carbon nanotubes in the acquired image is 55% or less and that not fewer than 5 and not more than 100 carbon nanotubes having an aspect ratio of 10 or more are included per area equivalent to 26,000 $\mu m^2$ in the image, and evaluating the carbon nanotube dispersion liquid as unsuitable in a case in which the carbon nanotube dispersion liquid does not satisfy the condition 4.

17. A method of producing a carbon nanotube dispersion liquid comprising:

performing dispersing treatment of a mixture of single-walled carbon nanotubes having a G/D ratio of 10 or more and a solvent to obtain a carbon nanotube dispersion liquid;
acquiring an image of the obtained carbon nanotube dispersion liquid through imaging of the carbon nanotube dispersion liquid at a concentration of 0.1 wt%; and
evaluating the carbon nanotube dispersion liquid as suitable in a case in which the carbon nanotube dispersion liquid satisfies a condition 5 that an area fraction occupied by carbon nanotubes in the acquired image is 75% or more, and evaluating the carbon nanotube dispersion liquid as unsuitable in a case in which the carbon nanotube dispersion liquid does not satisfy the condition 5.

18. A method of producing a carbon nanotube dispersion liquid comprising:

performing dispersing treatment of a mixture of carbon nanotubes and a solvent to obtain a carbon nanotube dispersion liquid;
acquiring an image through imaging of the obtained carbon nanotube dispersion liquid; and
evaluating the carbon nanotube dispersion liquid as suitable in a case in which an area fraction occupied by carbon nanotubes in the acquired image satisfies a condition A, and evaluating the carbon nanotube dispersion liquid as unsuitable in a case in which the area fraction occupied by carbon nanotubes in the acquired image does not satisfy the condition A, wherein
the condition A includes an area fraction occupied by carbon nanotubes in an image acquired through imaging of the carbon nanotube dispersion liquid at a concentration of 0.1 wt% being 70% or less.

19. The method of producing a carbon nanotube dispersion liquid according to claim 18, wherein the condition A further includes the area fraction being 55% or more.

20. The method of producing a carbon nanotube dispersion liquid according to any one of claims 15 to 19, further comprising:

measuring the obtained carbon nanotube dispersion liquid by ultra-small-angle X-ray scattering; and
evaluating the carbon nanotube dispersion liquid as suitable in a case in which the carbon nanotube dispersion liquid satisfies a condition 1 that the carbon nanotube dispersion liquid has a fractal dimension of not less than 3 and not more than 4 in a wavenumber range of not less than 0.001 (1/angstrom) and not more than 0.3 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 1.

21. The method of producing a carbon nanotube dispersion liquid according to any one of claims 15 to 19, further comprising:

measuring the obtained carbon nanotube dispersion liquid by ultra-small-angle X-ray scattering; and
evaluating the carbon nanotube dispersion liquid as suitable in a case in which the carbon nanotube dispersion liquid satisfies a condition 2 that the carbon nanotube dispersion liquid has a fractal dimension of not less than 3 and not more than 4 in a wavenumber range of not less than 0.001 (1/angstrom) and not more than 0.3 (1/angstrom) and has a CNT persistence length of 100 nm or more in a wavenumber range of not less than 0.05 (1/angstrom) and not more than 0.01 (1/angstrom) when a scattering curve obtained through measurement by ultra-small-angle X-ray scattering is analyzed by the Beaucage model, and evaluating the carbon nanotube dispersion liquid as unsuitable in a case in which the carbon nanotube dispersion liquid does not satisfy the condition 2.

22. A method of producing a carbon film comprising removing solvent from the carbon nanotube dispersion liquid according to any one of claims 1 to 10 to form a carbon film.

23. A method of producing a carbon film comprising removing solvent from a carbon nanotube dispersion liquid obtained by the method of producing a carbon nanotube dispersion liquid according to any one of claims 13 to 20 to form a carbon film.

*FIG. 1*

100 μm

*FIG. 2*

100 μm

*FIG. 3*

*FIG. 4*

$100\,\mu m$

# FIG. 5

SEM image

# FIG. 6

FIG. 7

EP 4 488 228 A1

FIG. 8

FIG. 9

100μm

FIG. 10

100 μm

FIG. 11

100 μm

*FIG. 12*

100μm

*FIG. 13*

100μm

# FIG. 14

100 μm

# FIG. 15

Grindometer

Produced electrode

# FIG. 16

Grindometer

Produced electrode

# FIG. 17

Grindometer

Produced electrode

# FIG. 18

Grindometer

Produced electrode

## INTERNATIONAL SEARCH REPORT

International application No.

**PCT/JP2023/006082**

### A. CLASSIFICATION OF SUBJECT MATTER

*C01B 32/174*(2017.01)i; *B01J 23/74*(2006.01)i; *C01B 32/16*(2017.01)i; *C01B 32/164*(2017.01)i; *C01B 32/168*(2017.01)i; *H01M 4/62*(2006.01)i

FI:   C01B32/174; B01J23/74 M; C01B32/16; C01B32/164; C01B32/168; H01M4/62 Z

According to International Patent Classification (IPC) or to both national classification and IPC

### B. FIELDS SEARCHED

Minimum documentation searched (classification system followed by classification symbols)

C01B32/174; B01J23/74; C01B32/16; C01B32/164; C01B32/168; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2021/193667 A1 (ZEON CORPORATION) 30 September 2021 (2021-09-30) claims 1-9, paragraphs [0063]-[0064] | 1-23 |
| A | JP 2016-054113 A (ZEON CORPORATION) 14 April 2016 (2016-04-14) entire text | 1-23 |
| A | US 2013/0264524 A1 (LIU, Kangyu et al.) 10 October 2013 (2013-10-10) entire text, all drawings | 1-23 |
| A | US 2010/0303874 A1 (AKCORA, Pinar et al.) 02 December 2010 (2010-12-02) entire text, all drawings | 1-23 |

☐ Further documents are listed in the continuation of Box C.          ☑ See patent family annex.

| | |
|---|---|
| \*     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **12 April 2023** | **25 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| INTERNATIONAL SEARCH REPORT | International application No. |
| Information on patent family members | PCT/JP2023/006082 |

| Patent document cited in search report | | | Publication date (day/month/year) | Patent family member(s) | | | Publication date (day/month/year) |
|---|---|---|---|---|---|---|---|
| WO | 2021/193667 | A1 | 30 September 2021 | CN | 115151752 | A | |
| | | | | KR | 10-2022-0153591 | A | |
| JP | 2016-054113 | A | 14 April 2016 | (Family: none) | | | |
| US | 2013/0264524 | A1 | 10 October 2013 | (Family: none) | | | |
| US | 2010/0303874 | A1 | 02 December 2010 | WO | 2009/078985 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020057474 A
- JP 6789529 B
- JP 2017119586 A
- WO 2019188978 A1
- WO 2006011655 A1
- JP 2012243476 A
- WO 2016152262 A1
- JP 2012204303 A

**Non-patent literature cited in the description**

- **T. MORIMOTO et al.** Length-Dependent Plasmon Resonance in Single-Walled Carbon Nanotubes. *ACS NANO*, 2014, vol. 8 (10), 9897-9904
- **G. BEAUCAGE**. *J. Appl. Cryst.*, 1995, vol. 28, 717